# EUROPEAN PATENT SPECIFICATION

(11) **EP 2 457 975 B1**
(45) Date of publication and mention of the grant of the patent: **25.06.2014**
(21) Application number: 11008705.3
(22) Date of filing: 31.10.2011
(51) Int. Cl.: C09K 19/42, C09K 19/34, C09K 19/20, C09K 19/30, C09K 19/04

(54) **Liquid-crystalline mixtures**
Flüssigkristallinmischungen
Mélanges à base de cristaux liquides

(30) Priority: 29.11.2010 EP 10015088
(43) Date of publication of application: 30.05.2012
(73) Proprietor: Merck Patent GmbH, 64293 Darmstadt (DE)
(72) Inventor: Ohgiri, Sayuri, Yokohama Kanagawa Pref. 241-0826 (JP); Okamura, Masahiko Okamura, Kanagwa-Pref. 243-0807 (JP); Sugiyama, Yasushi, Kanagawa-Pref. 252-0321 (JP); Ichinose, Hideo, Kanagawa-Pref. 250-0034 (JP)

(56) References cited:
- GB-A- 2 078 389
- US-A1- 2003 001 137
- US-A1- 2005 006 624
- US-A1- 2010 051 865
- US-B1- 6 231 785

## Description

The present invention relates to liquid-crystalline mixtures and their use for electro-optical purposes, and to displays containing this medium.

Liquid crystals are used principally as dielectrics in display devices, since the optical properties of such substances can be modified by an applied voltage. Electro-optical devices based on liquid crystals are extremely well known to the person skilled in the art and can be based on various effects. Examples of such devices are cells having dynamic scattering, DAP (deformation of aligned phases) cells, guest/host cells, TN cells having a twisted nematic structure, STN (supertwisted nematic) cells, SBE (super-birefringence effect) cells and OMI (optical mode interference) cells. The commonest display devices are based on the Schadt-Helfrich effect and have a twisted nematic structure.

The liquid-crystal materials must have good chemical and thermal stability and good stability to electric fields and electromagnetic radiation. Furthermore, the liquid-crystal materials should have low viscosity and produce short addressing times, low threshold voltages and high contrast in the cells.

They should furthermore have a suitable mesophase, for example a nematic or cholesteric mesophase for the above-mentioned cells, at the usual operating temperatures, i.e. in the broadest possible range above and below room temperature. Since liquid crystals are generally used as mixtures of a plurality of components, it is important that the components are readily miscible with one another. Further properties, such as the electrical conductivity, the dielectric anisotropy and the optical anisotropy, have to satisfy various requirements depending on the cell type and area of application. For example, materials for cells having a twisted nematic structure should have positive dielectric anisotropy and low electrical conductivity.

For example, for matrix liquid-crystal displays with integrated non-linear elements for switching individual pixels (MLC displays), media having large positive dielectric anisotropy, broad nematic phases, relatively low birefringence, very high specific resistance, good UV and temperature stability and low vapour pressure are desired.

Matrix liquid-crystal displays of this type are known. Non-linear elements which can be used for individual switching of the individual pixels are, for example, active elements (i.e. transistors). The term "active matrix" is then used, where a distinction can be made between two types:
1. MOS (metal oxide semiconductor) or other diodes on a silicon wafer as substrate.
2. Thin-film transistors (TFTs) on a glass plate as substrate.

The use of single-crystal silicon as substrate material restricts the display size, since even modular assembly of various part-displays results in problems at the joins.

In the case of the more promising type 2, which is preferred, the electro-optical effect used is usually the TN effect. A distinction is made between two technologies: TFTs comprising compound semiconductors, such as, for example, CdSe, or TFTs based on polycrystalline or amorphous silicon. Intensive work is being carried out world-wide on the latter technology.

The TFT matrix is applied to the inside of one glass plate of the display, while the other glass plate carries the transparent counterelectrode on its inside. Compared with the size of the pixel electrode, the TFT is very small and has virtually no adverse effect on the image. This technology can also be extended to fully colour-capable displays, in which a mosaic of red, green and blue filters is arranged in such a way that a filter element is opposite each switchable pixel.

The TFT displays usually operate as TN cells with crossed polarisers in transmission and are illuminated from the back.

The term MLC displays here covers any matrix display with integrated non-linear elements, i.e., besides the active matrix, also displays with passive elements, such as varistors or diodes (MIM = metal-insulator-metal).

MLC displays of this type are particularly suitable for TV applications (for example pocket television sets) or for high-information displays for computer applications (laptops) and in automobile or aircraft construction. Besides problems regarding the angle dependence of the contrast and the response times, difficulties also arise in MLC displays due to insufficiently high specific resistance of the liquid-crystal mixtures [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Addressing of Television Liquid Crystal Displays, p. 145 ff, Paris]. With decreasing resistance, the contrast of an MLC display deteriorates, and the problem of after-image elimination may occur. Since the specific resistance of the liquid-crystal mixture generally drops over the life of an MLC display owing to interaction with the interior surfaces of the display, a high (initial) resistance is very important in order to obtain acceptable service lives. In particular in the case of low-volt mixtures, it was hitherto impossible to achieve very high specific resistance values. It is furthermore important that the specific resistance exhibits the smallest possible increase with increasing temperature and after heating and/or UV exposure. The low-temperature properties of the mixtures from the prior art are also particularly disadvantageous. It is demanded that no crystallisation and/or smectic phases occur, even at low temperatures, and the temperature dependence of the viscosity is as low as possible. The MLC displays from the prior art thus do not meet today's requirements.

There thus continues to be a great demand for MLC displays having very high specific resistance at the same time as a large working-temperature range, short response times even at low temperatures and low threshold voltage which do not have these disadvantages, or only do so to a reduced extent.

In TN (Schadt-Helfrich) cells, media are desired which facilitate the following advantages in the cells:
- extended nematic phase range (in particular down to low temperatures)
- the ability to switch at extremely low temperatures (outdoor use, automobile, avionics)
- increased resistance to UV radiation (longer service life).

The media available from the prior art for example US 2005/0006624 A1 and US 2010/0051865 A1 do not allow these advantages to be achieved while simultaneously retaining the other parameters.

In the case of supertwisted (STN) cells, media are desired which enable greater multiplexability and/or lower threshold voltages and/or broader nematic phase ranges (in particular at low temperatures). To this end, a further widening of the available parameter latitude (clearing point, smec-tic-nematic transition or melting point, viscosity, dielectric parameters, elastic parameters) is urgently desired.

The invention has the object of providing media, in particular for MLC, IPS, TN or STN displays of this type, which do not have the above-mentioned disadvantages or only do so to a reduced extent, and preferably simultaneously have very high specific resistance values and low threshold voltages. This object requires liquid-crystalline mixtures which have high clearing point and low rotational viscosities.

It has now been found that this object can be achieved if the liquid-crystalline mixtures according to the invention are used.

The invention thus relates to a liquid-crystalline medium containing at least one compound of the formula I 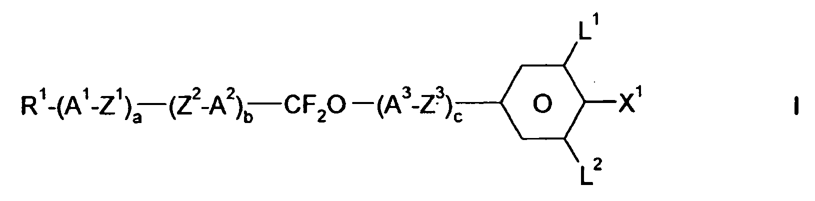 and at least one compound of the formula E 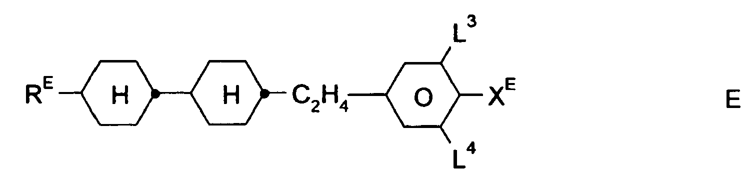 in which
- R¹ and R^{E}: are each, independently of one another, H, a halogenated or unsubstituted alkyl or alkoxy radical having from 1 to 15 carbon atoms, where, in addition, one or more CH₂ groups in these radicals may each, independently of one another, be replaced by -C≡C-, -CH=CH-, -O-, -CO-O- or -O-CO- in such a way that O atoms are not linked directly to one another,
- A¹, A² and A³: are each, independently of one another, 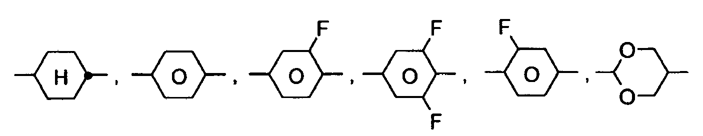 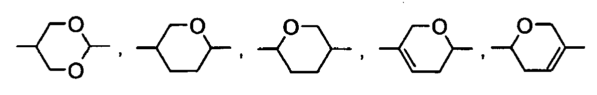 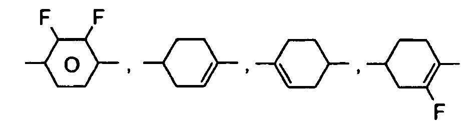
or 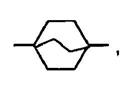
- X¹: F, Cl, CN, NCS, OCN, SF₅, fluorinated alkyl with 1 to 5 carbon atoms, fluorinated alkoxy with 1 to 5 carbon atoms, fluorinated alkenyl with 2 to 5 carbon atoms, fluorinated alkenyloxy with 1 to 5 carbon atoms,
- X^{E}: F, Cl, OCF₃, OCHF₂, OCH=CF₂, OCF=CF₂, OCHFCF₃, OCF₂CFHCF₃, CH₃, C₂H₅, n-C₃H₇,
- L¹, L², L³ and L⁴: are each, independently of one another H or F,
- Z¹, Z² and Z³: are each, independently of one another, -CO-O-, -O-CO-, -CF₂O-, -OCF₂-, -CH₂O-, -OCH₂-, -CH₂CH₂-, -(CH₂)₄-, -C₂F₄-, -CH₂CF₂-, -CF₂CH₂-, -CF=CF-, -CH=CH-, -C≡C- or a single bond, and
- a, b and c: are each, independently of one another, 0, 1, 2 or 3, where a+b+c is 1, 2, 3 or 4.

The invention furthermore relates to the use of the mixtures in displays.

In a preferred embodiment the liquid-crystalline medium according to invention is highly suitable for TN-TFT-, IPS-, FFS-, positive VA- (also called HT-VA-) applications and also for polymer stabilized (PS) applications like PS-IPS-, PS-FFS-, PS-TN-TFT- or positive PS-VA-applications.

The compounds of the formula I and of the formula E have a broad range of applications. Depending on the choice of substituents, these compounds can serve as base materials of which liquid-crystalline media are predominantly composed; however, it is also possible to add compounds of the formulae I and E to liquid-crystalline base materials from other classes of compound in order, for example, to modify the dielectric and/or optical anisotropy of a dielectric of this type and/or in order to optimise its threshold voltage and/or its viscosity.

In the pure state, the compounds of the formulae I and E are colourless and form liquid-crystalline mesophases in a temperature range which is favourably located for electro-optical use. In particular, the compounds according to the invention are distinguished by their broad nematic phase range. In liquid-crystalline mixtures, the substances according to the invention suppress the smectic phases and result in a significant improvement in the low-temperature storage stability. They are stable chemically, thermally and to light.

Particular preference is given to compounds of the formula I in which c = o. Z¹, Z² and/or Z³ are preferably a single bond, furthermore -CF₂O- -OCF₂-, -C₂F₄-, -CH₂O-, -OCH₂- or -COO-.
A¹, A² and A³ are preferably 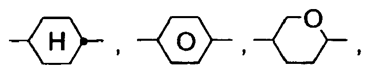 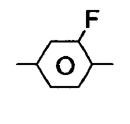 or

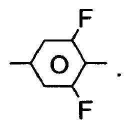

R¹ is preferably alkyl, alkoxy, alkenyl or alkenyloxy. X¹ is preferably F, Cl, OCH=CF₂, OCF=CF₂, OCF₃, OCHF₂, OCHFCF₃, OCF₂CHFCF₃, CN, SF₅, NCS or SCN, in particular F or OCF₃, and R¹ is preferably straight-chain alkyl or alkenyl. L¹ and L² are each, independently of one another, H or F. Particular preference is given to compounds in which X¹ = L¹ = L² = fluorine, furthermore X¹ = OCF₃ and L¹ = L² = F.

Particularly preferred compounds of the formula I are the compounds of the formulae I1 to I79, 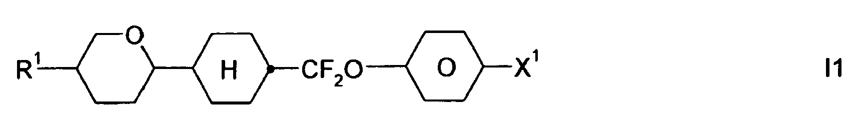 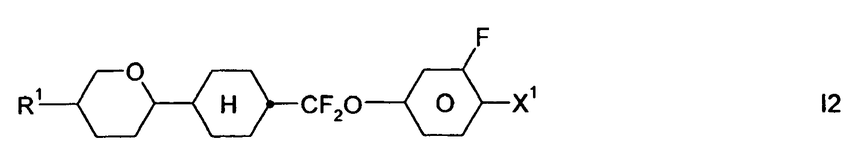 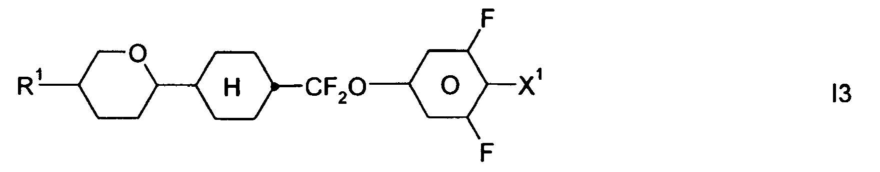 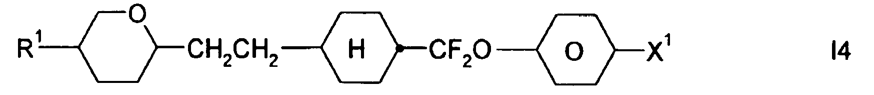 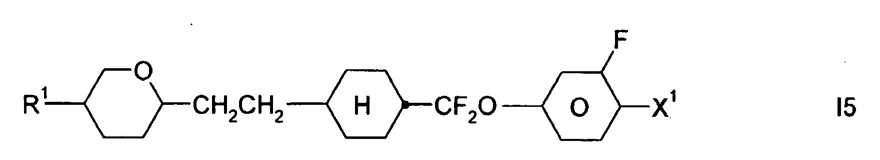 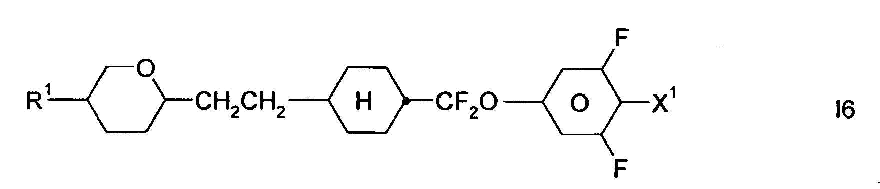 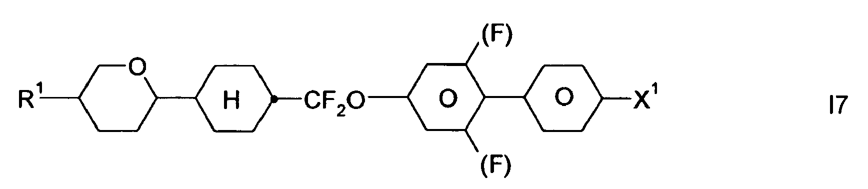 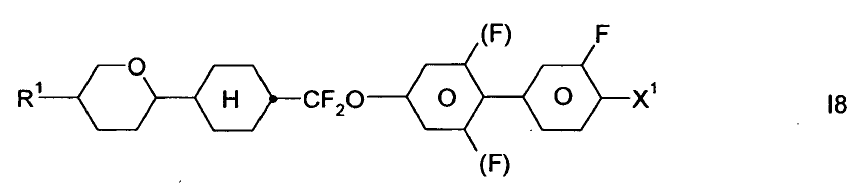 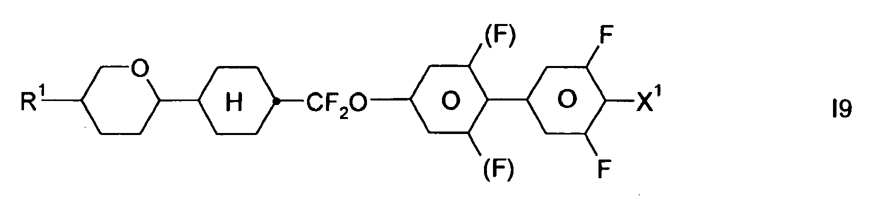 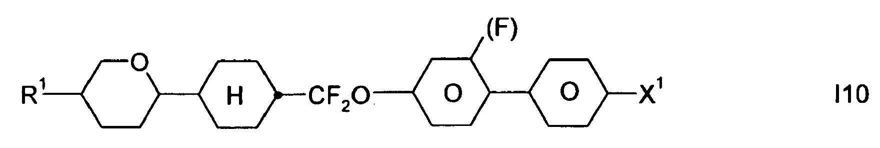 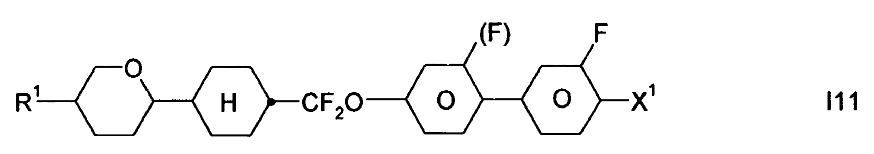 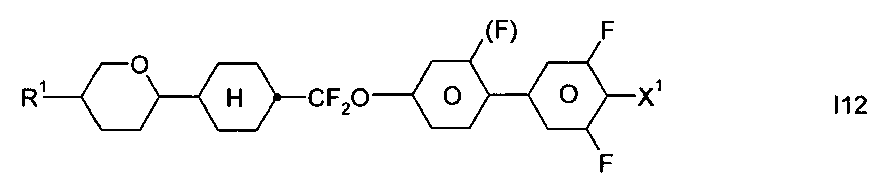 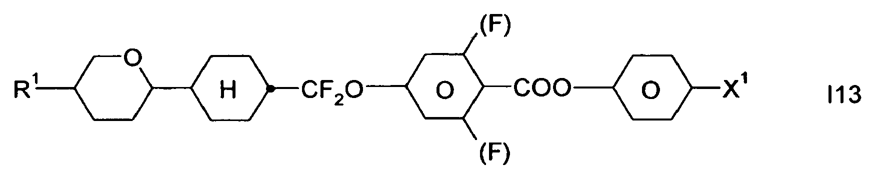 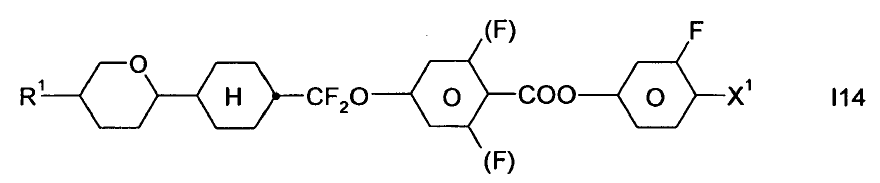 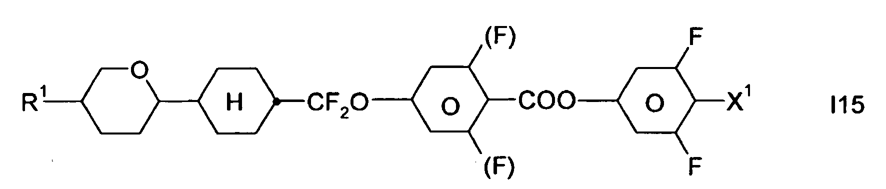 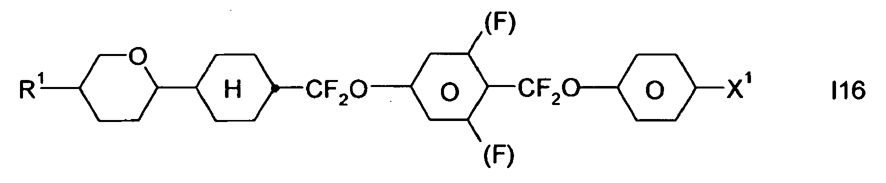 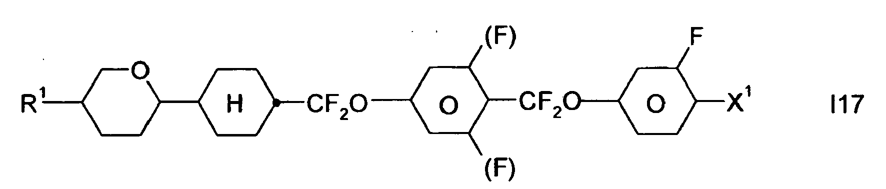 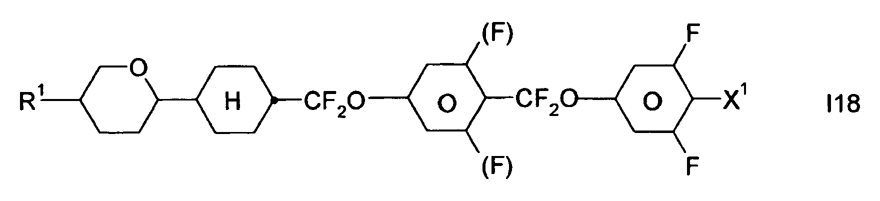 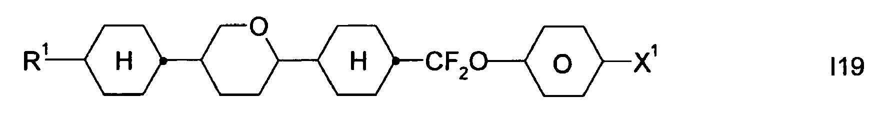 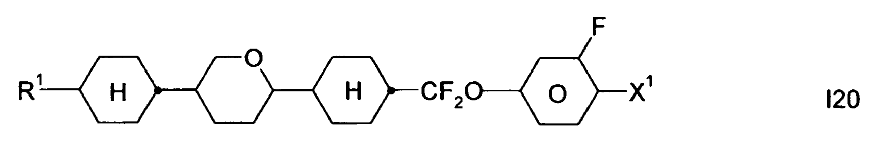 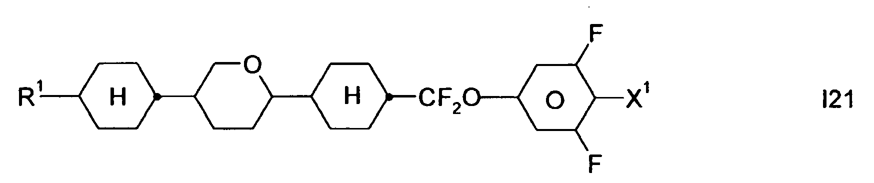 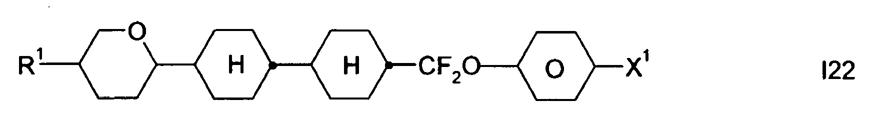 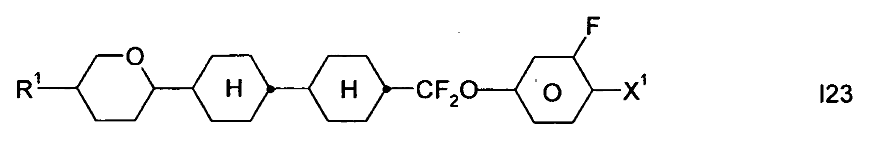 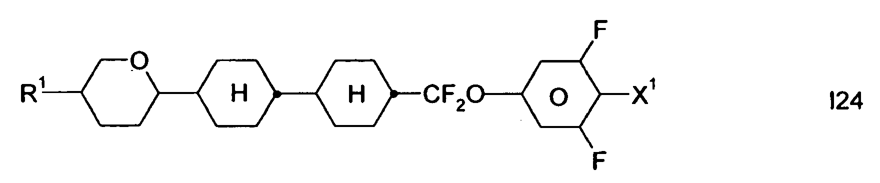 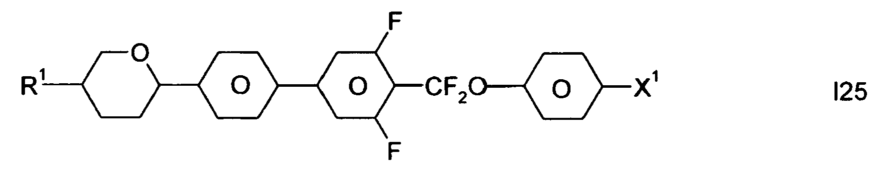 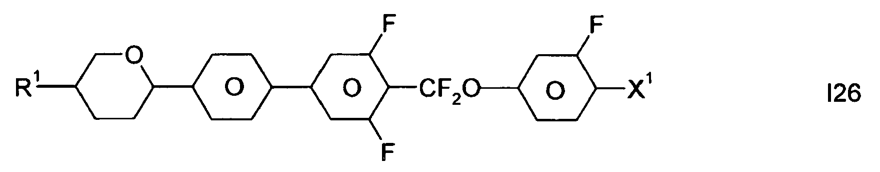 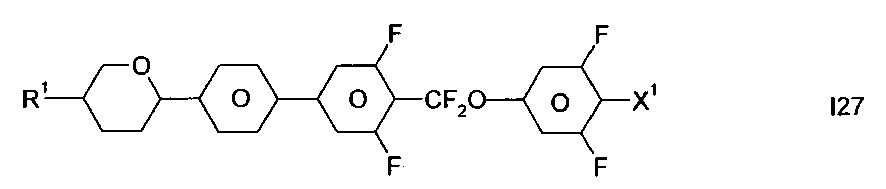 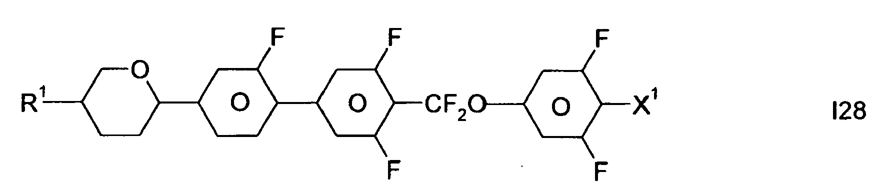 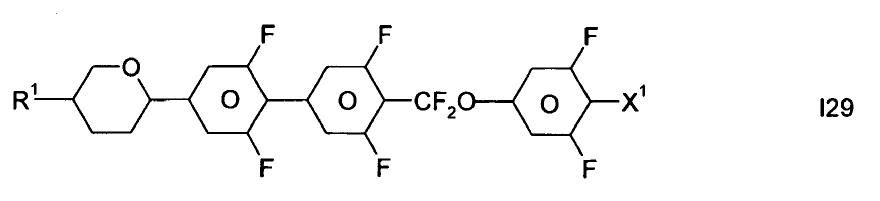 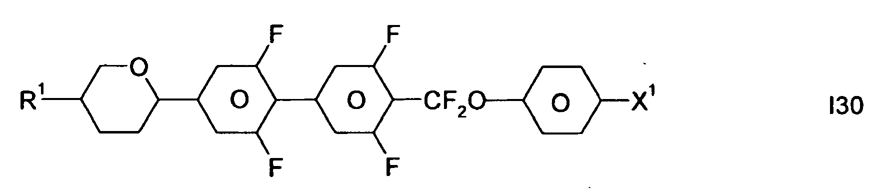 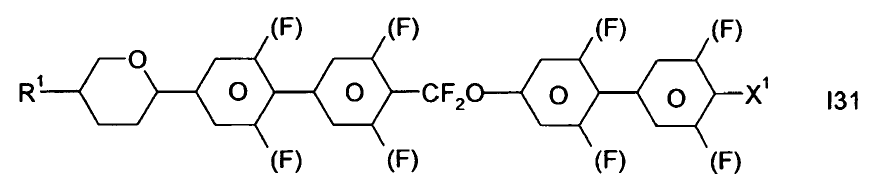 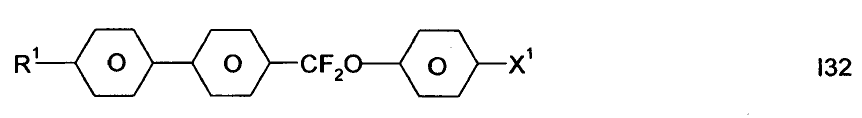 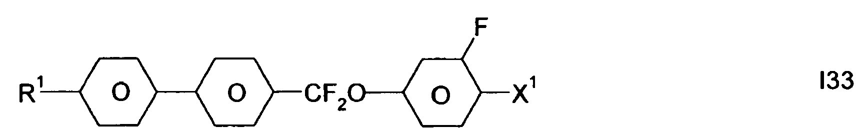 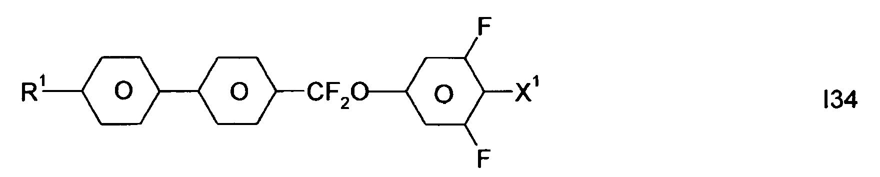 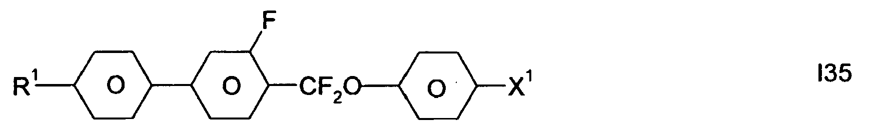 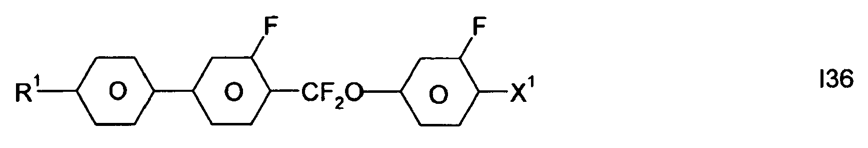 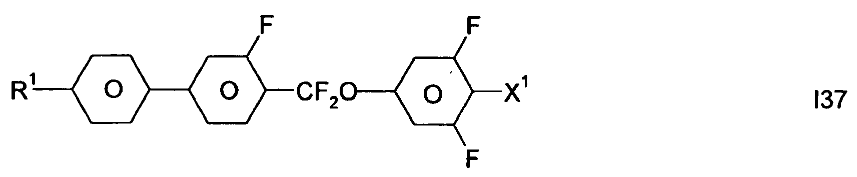 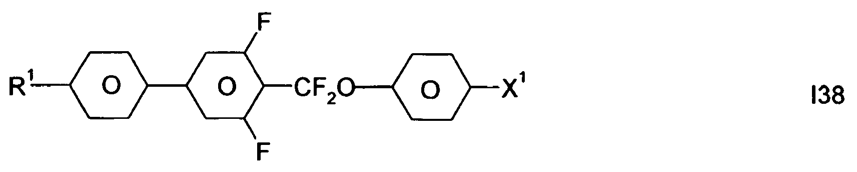 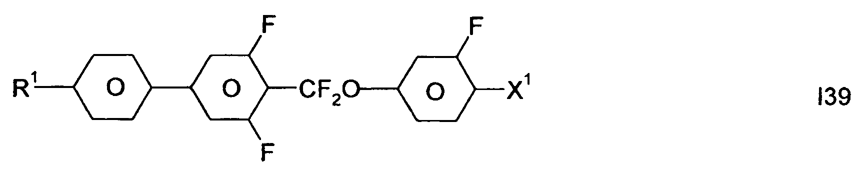 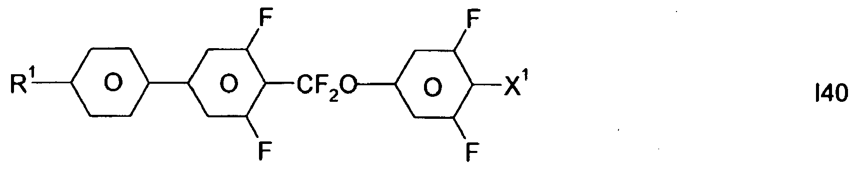 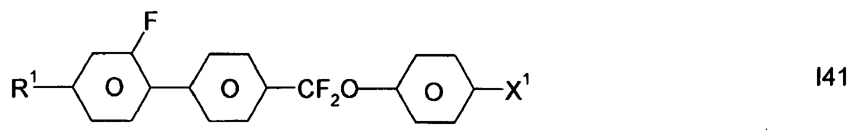 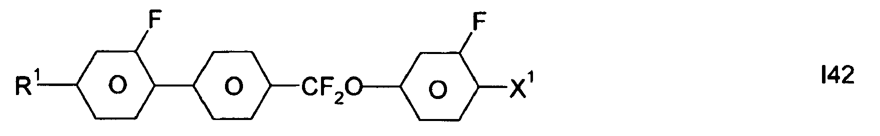 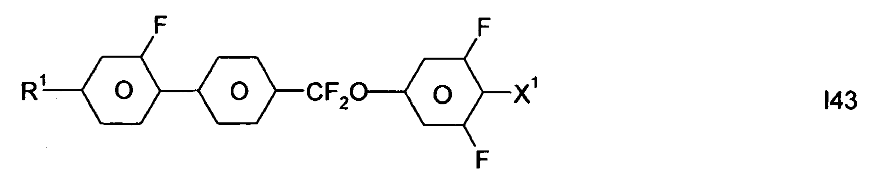 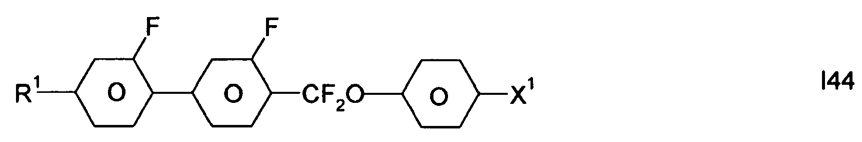 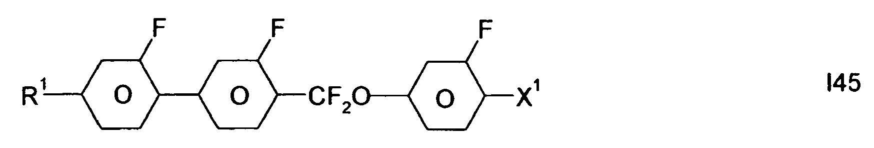 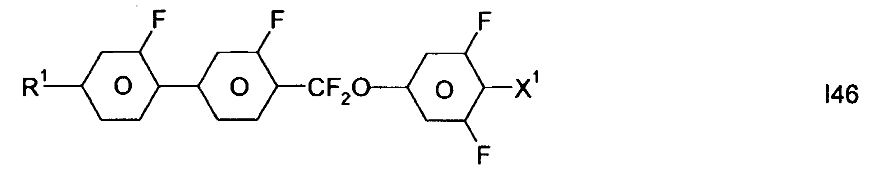 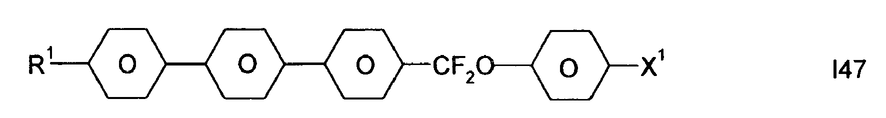 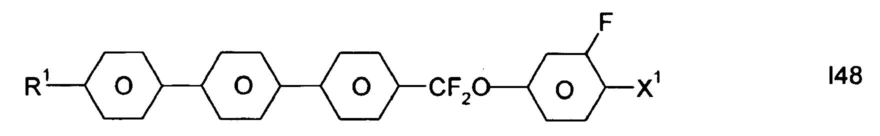 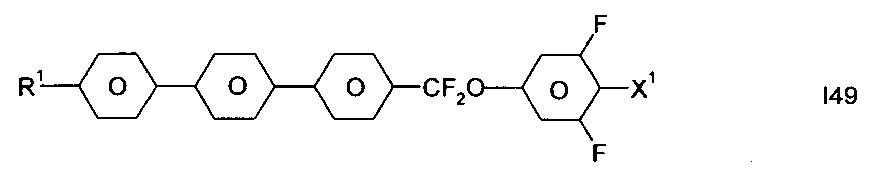 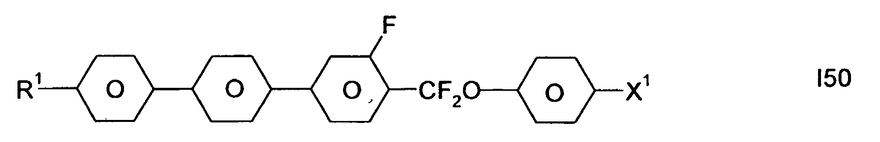 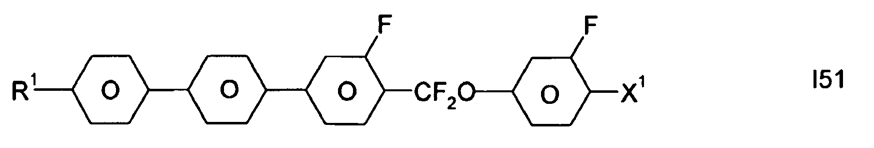 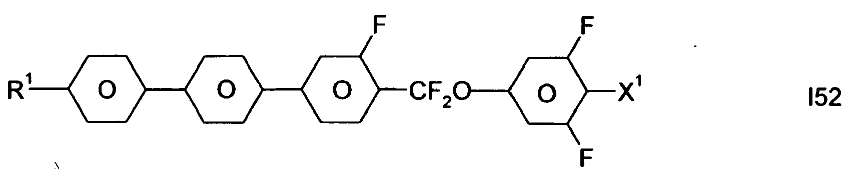 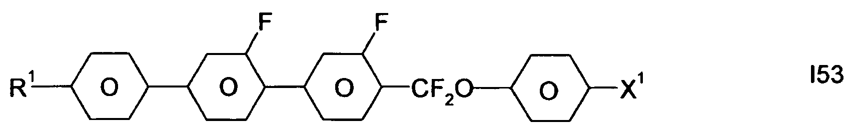 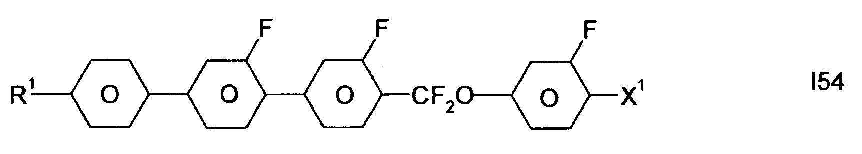 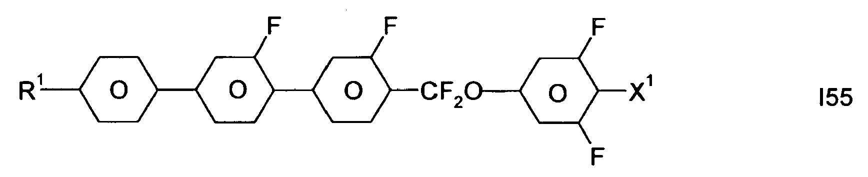 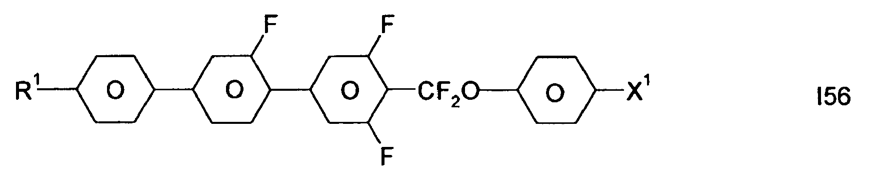 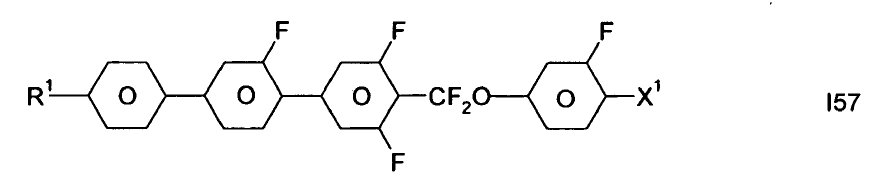 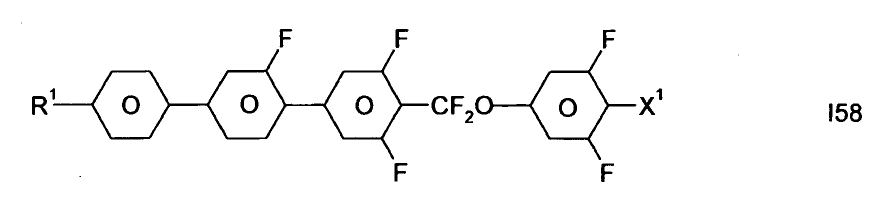 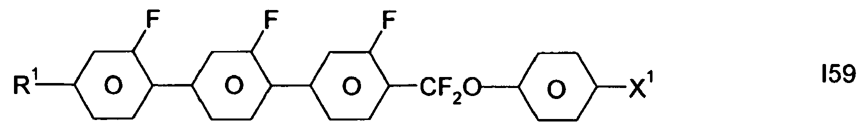 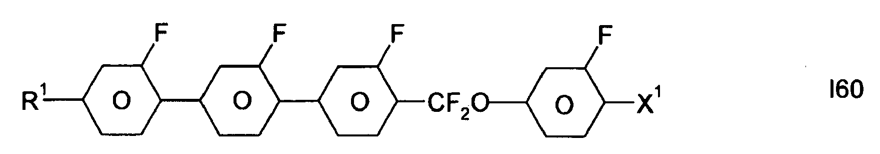 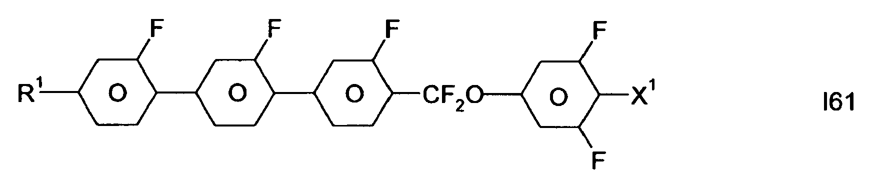 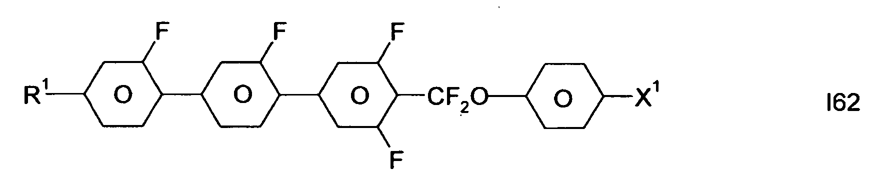 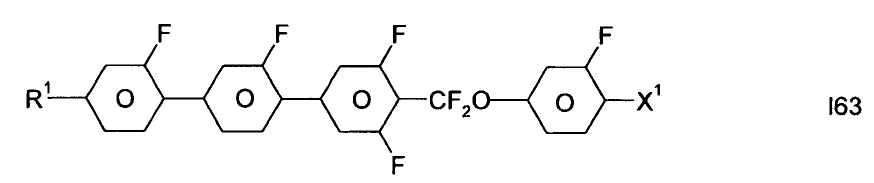 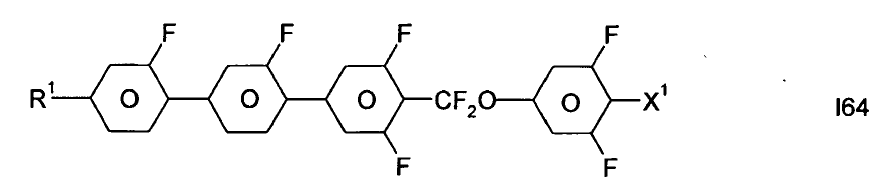 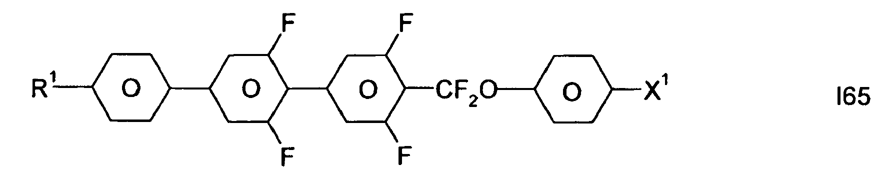 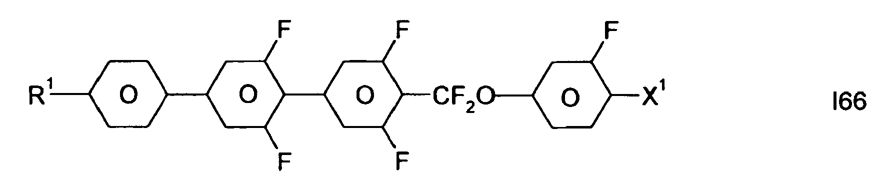 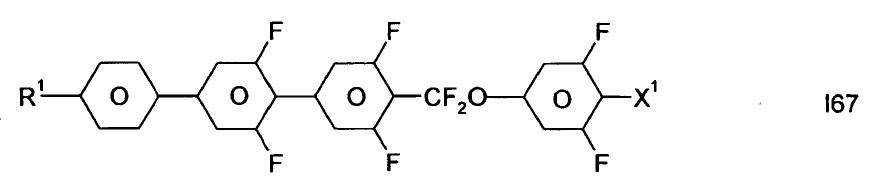 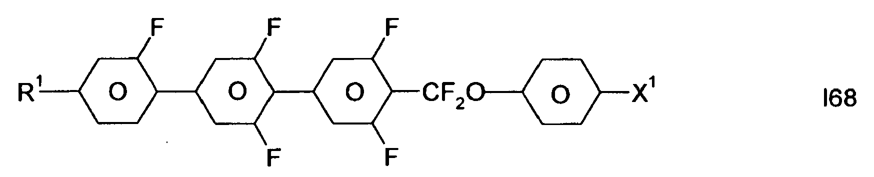 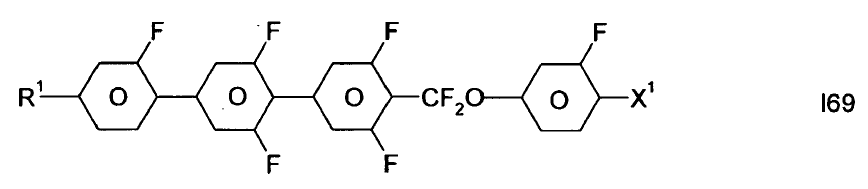 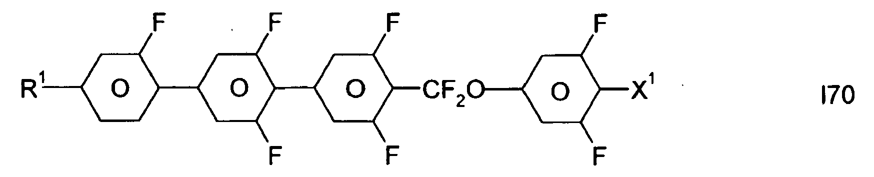 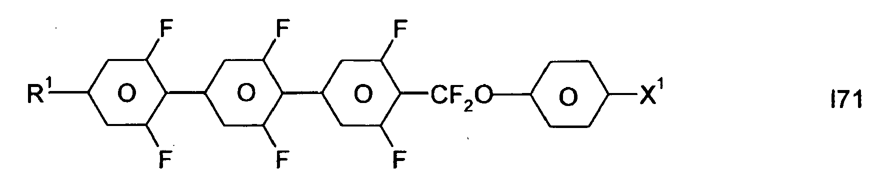 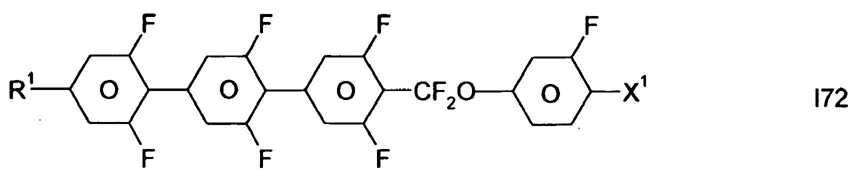 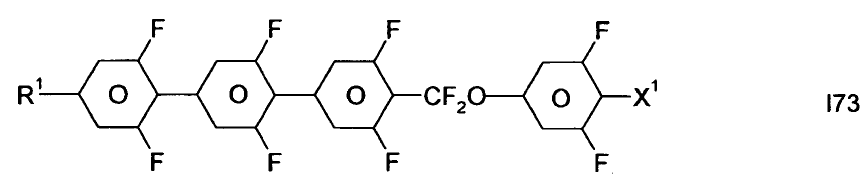 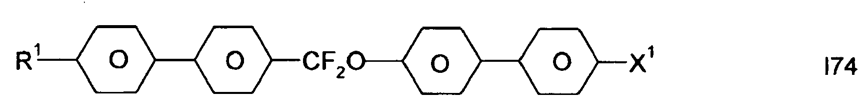 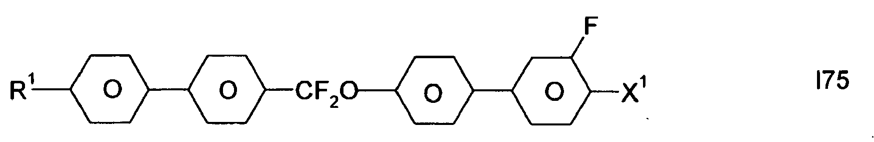 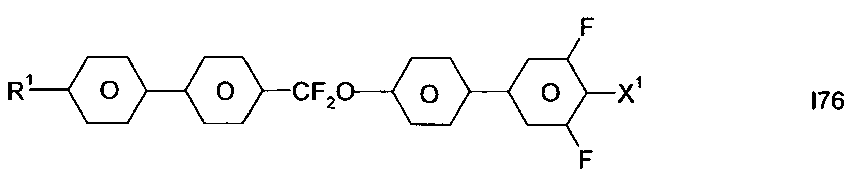 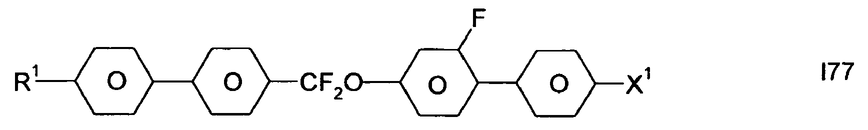 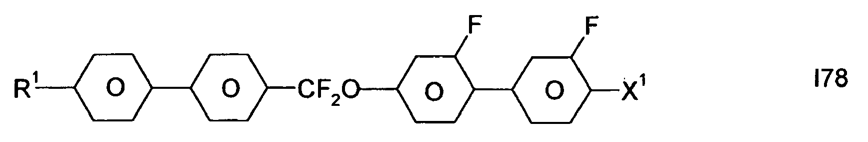 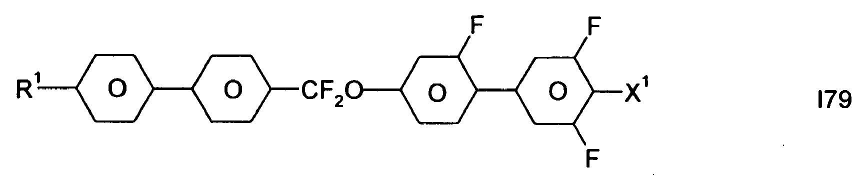 in which R¹ and X¹ are as defined above. (F) is defined as H or F.

Especially preferred are the compounds of the formula I3, I27, I40 and I58. In the compounds of the formula I and the sub-formulae I1 to I79 X¹ is preferably F.

Preferred compounds of the formula E are mentioned in the following: 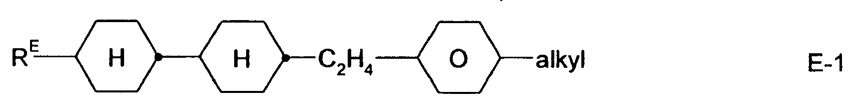 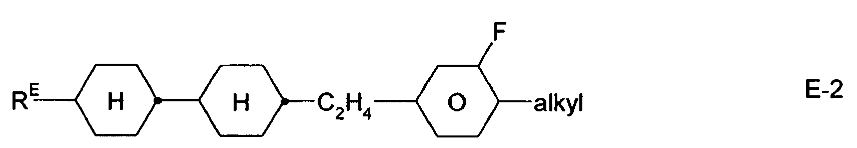 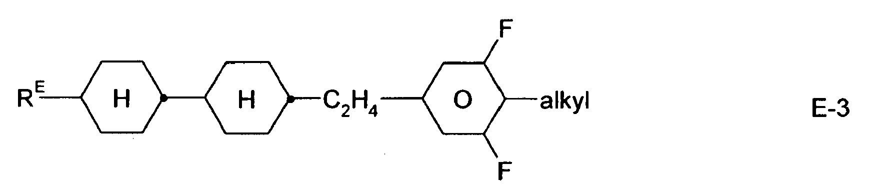 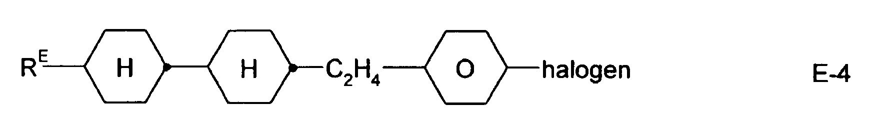 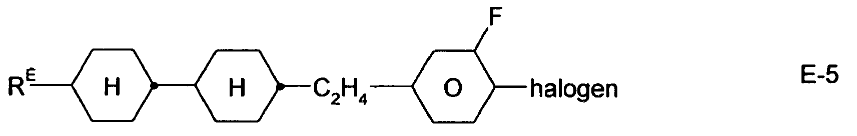 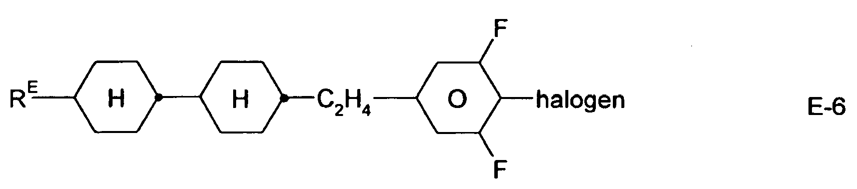 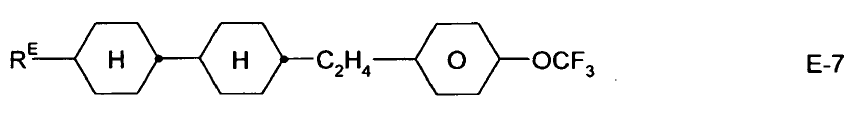 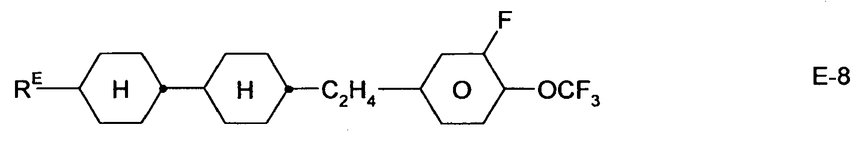 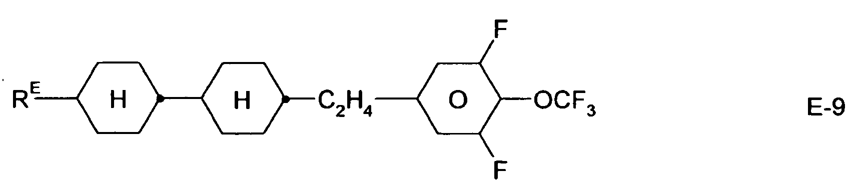 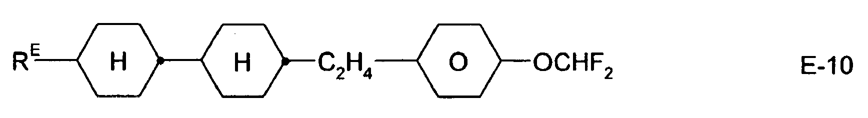 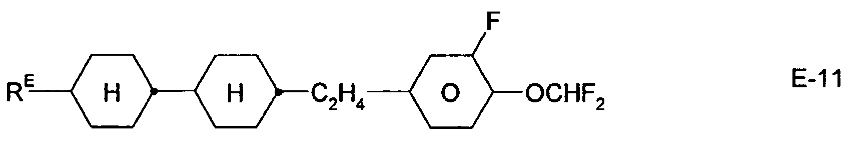 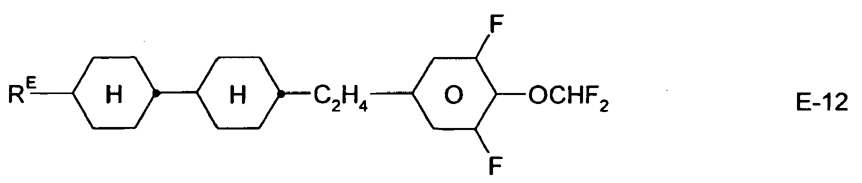 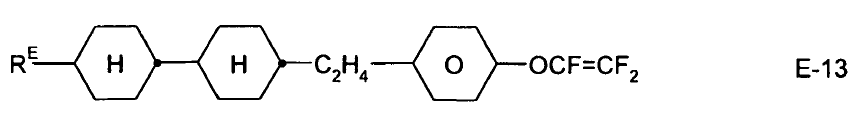 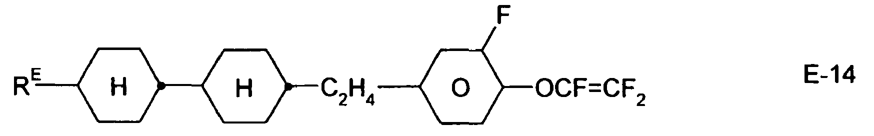 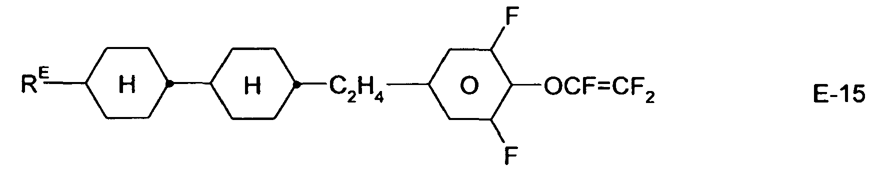 wherein
- halogen: denotes F or Cl, preferably F
- alkyl or alkyl*: are each, independently of one another, a straight-chain or branched alkyl radical having 1-9 carbon atoms, preferably a straight-chain alkyl radical.
- alkenyl or alkenyl*: are each, independently of one another, a straight-chain or branched alkenyl radical having up to 9 carbon atoms, preferably a straight-chain alkenyl radical.

Especially preferred compounds of the formula E are the compounds of the formulae E-1a, E-4a, E-5a, E-6a and E-7a,

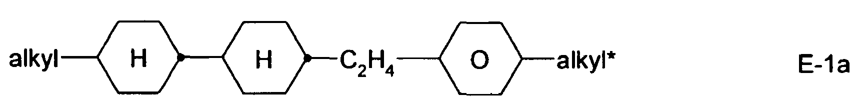

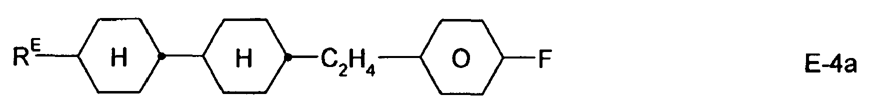

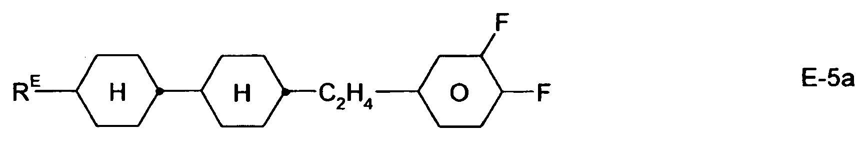

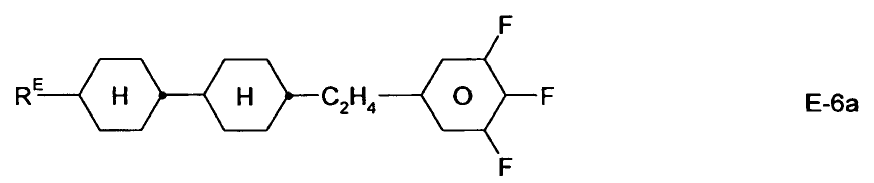

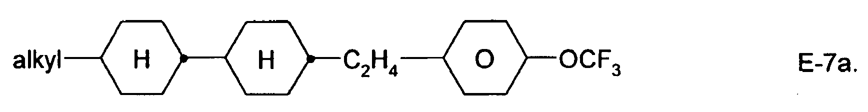

The invention also relates to electro-optical displays (in particular STN or MLC displays having two plane-parallel outer plates, which, together with a frame, form a cell, integrated non-linear elements for switching individual pixels on the outer plates, and a nematic liquid-crystal mixture of positive dielectric anisotropy and high specific resistance which is located in the cell) which contain media of this type, and to the use of these media for electro-optical purposes. The mixtures according to the present invention is highly suitable for TN-TFT; positive VA, FFS, OCB and IPS applications.

The liquid-crystal mixtures according to the invention enable a significant widening of the available parameter latitude.

The achievable combinations of clearing point, viscosity at low temperature, thermal and UV stability, high LTS and dielectric anisotropy are far superior to previous materials from the prior art.

The requirement for a high clearing point, a nematic phase at low temperature and a high Δε has hitherto only been satisfied to an inadequate extent. Although liquid-crystal mixtures such as, for example, MS 99295 (Merck KGaA, Darmstadt, Germany) have comparable clearing points and low-temperature stabilities, they have, however, relatively high Δn values and also higher threshold voltages of about ≥ 1.7 V.

Other mixture systems have comparable viscosities and Δε values, but only have clearing points in the region of 60°C.

The liquid-crystal mixtures according to the invention, while retaining the nematic phase down to -20°C and preferably down to -30°C, particularly preferably down to -40°C, enable clearing points above 80°, preferably above 90°, particularly preferably above 100°C, simultaneously dielectric anisotropy values Δε of ≥ 4, preferably ≥ 6, and a high value for the specific resistance to be achieved, enabling excellent STN and MLC displays to be obtained. In particular, the mixtures are characterised by low operating voltages. The TN thresholds are below 1.5 V, preferably below 1.3 V.

It goes without saying that, through a suitable choice of the components of the mixtures according to the invention, it is also possible for higher clearing points (for example above 110°) to be achieved at a higher threshold voltage or lower clearing points to be achieved at lower threshold voltages with retention of the other advantageous properties. At viscosities correspondingly increased only slightly, it is likewise possible to obtain mixtures having greater Δε and thus lower thresholds. The MLC displays according to the invention preferably operate at the first Gooch and Tarry transmission minimum [C.H. Gooch and H.A. Tarry, Electron. Lett. 10, 2-4, 1974; C.H. Gooch and H.A. Tarry, Appl. Phys., Vol. 8, 1575-1584, 1975], where, besides particularly favourable electro-optical properties, such as, for example, high steepness of the characteristic line and low angle dependence of the contrast (German Patent 30 22 818), a lower dielectric anisotropy is sufficient at the same threshold voltage as in an analogous display at the second minimum. This enables significantly higher specific resistance values to be achieved using the mixtures according to the invention at the first minimum than in the case of mixtures comprising cyano compounds. Through a suitable choice of the individual components and their proportions by weight, the person skilled in the art is able to set the birefringence necessary for a pre-specified layer thickness of the MLC display using simple routine methods.

The flow viscosity ν₂₀ at 20°C is preferably < 60 mm² · s⁻¹, particularly preferably < 50 mm² · s⁻¹. The nematic phase range is preferably at least 90°, in particular at least 100°. This range preferably extends at least from -30° to +80°. The rotational viscosity γ₁ at 20°C is preferably < 200 mPa·s, particularly preferably < 180 mPa·s, in particular < 160 mPa·s.

Measurements of the capacity holding ratio (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] have shown that mixtures according to the invention comprising compounds of the formula I exhibit a significantly smaller decrease in the HR with increasing temperature than analogous mixtures comprising cyanophenylcyclohexanes of the formula 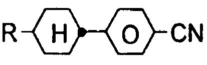 or esters of the formula 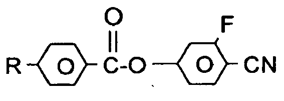 instead of the compounds of the formula I.

The UV stability of the mixtures according to the invention is also considerably better, i.e. they exhibit a significantly smaller decrease in the HR on exposure to UV.

The media according to the invention are preferably based on a plurality of (preferably two, three or more) compounds of the formula I, i.e. the proportion of these compounds is 5-95 %, preferably 10-60 % and particularly preferably in the range 15-40 %.

The media according to the invention are preferably based on a plurality of (preferably one, two, three or more) compounds of the formula E, i.e. the proportion of these compounds is 1-25 %, preferably 3-20 % and particularly preferably in the range 3-15 %.

The individual compounds of the formulae E and I to IX and their sub-formulae which can be used in the media according to the invention are either known or they can be prepared analogously to the known compounds.

Preferred embodiments are indicated below:
- The medium preferably comprises one, two or three homologous compounds of the formula I, where each homologue is present in the mixture in a maximum amount of 10 %.
- Medium additionally comprises one or more compounds selected from the group consisting of the general formulae II to IX: 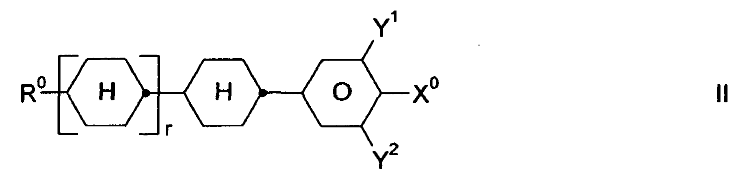 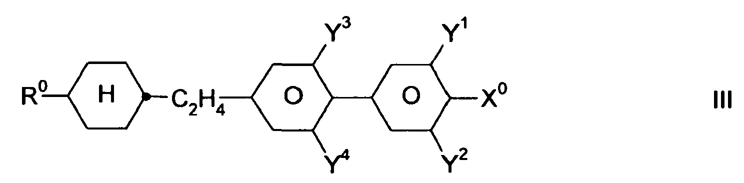 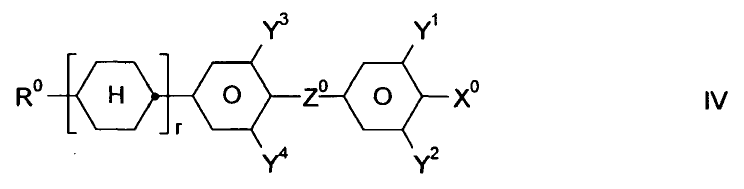 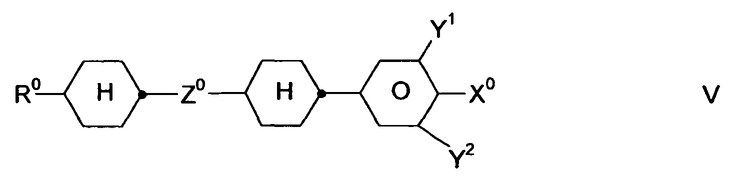 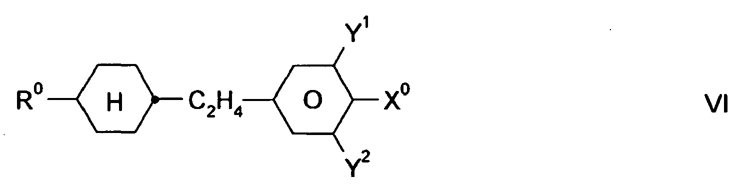 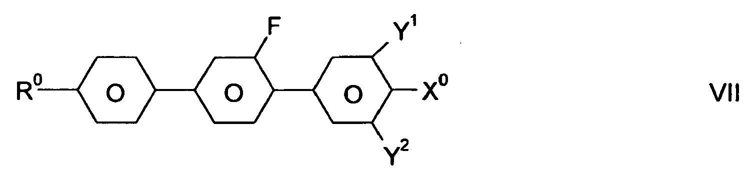 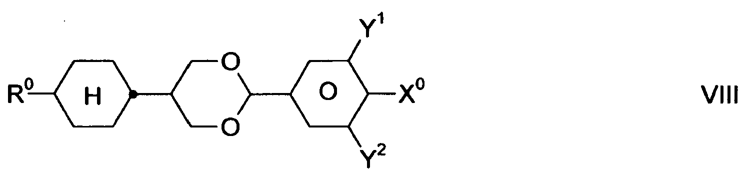 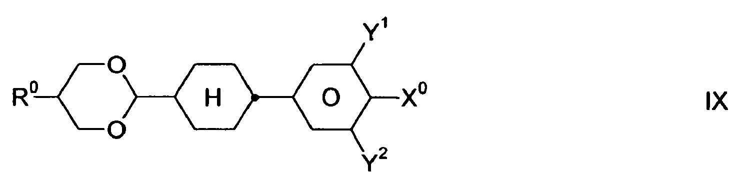 in which the individual radicals have the following meanings:
   - R⁰: n-alkyl, alkoxy, fluoroalkyl, alkenyloxy or alkenyl, each having up to 9 carbon atoms,
   - X⁰: F, Cl, halogenated alkyl, halogenated alkenyl, halogenated alkenyloxy or halogenated alkoxy having up to 7 carbon atoms, preferably F, OCF₃ and OCF=CF₂,
   - Z⁰: -CH=CH-, -C₂H₄-, -(CH₂)₄-, -C₂F₄-, -CH₂O-, -OCH₂-, -CF=CF-, -CF₂O- -OCF₂-, -COO- or -O-,
   - Y¹, Y², Y³ and Y⁴: each, independently of one another, H or F, and
   - r: 0 or 1.

The compound of the formula IV is preferably selected from the group of the following compounds: 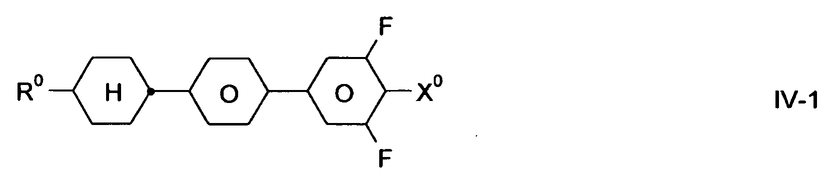 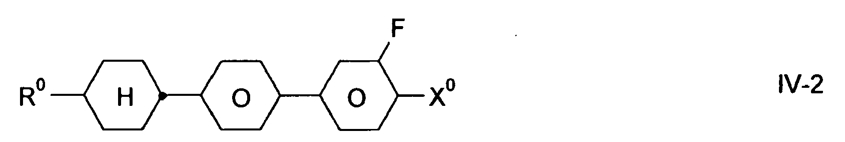 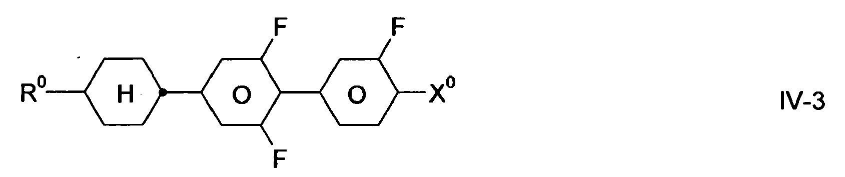 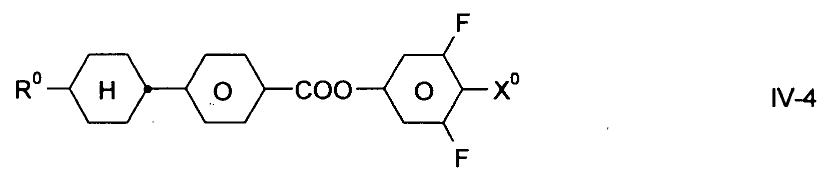 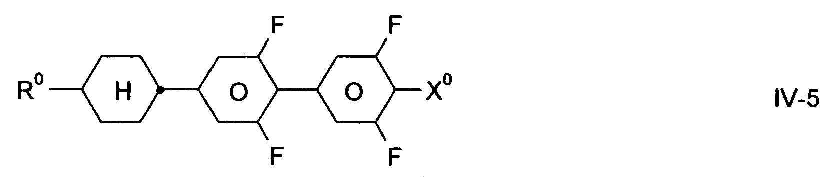 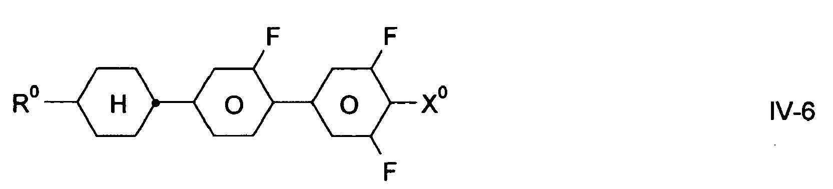
- The medium preferably comprises one or more compounds of the formulae 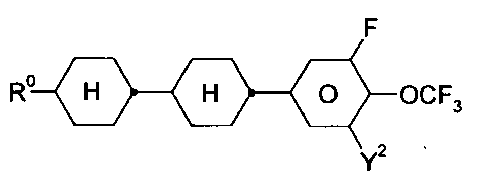 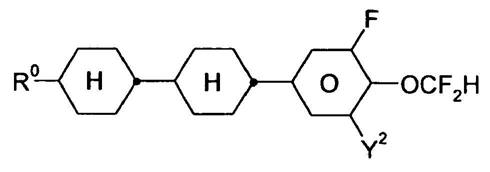 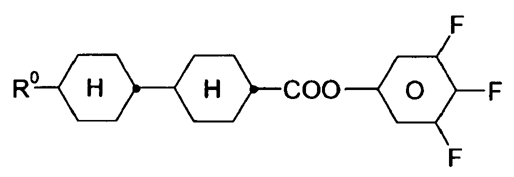 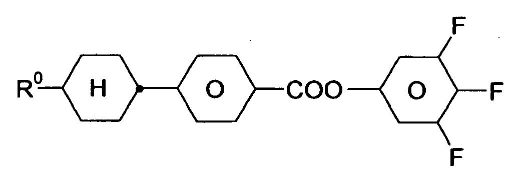 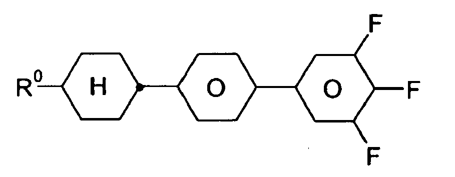 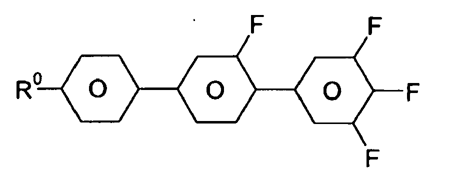 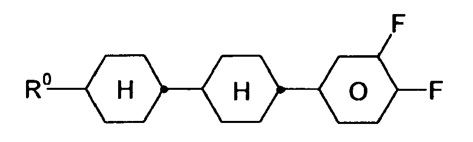 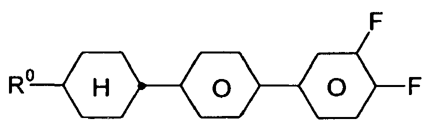 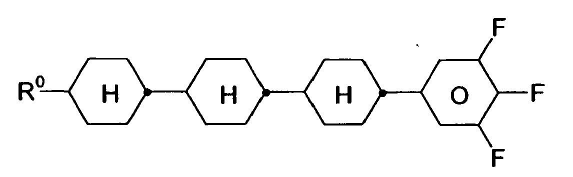 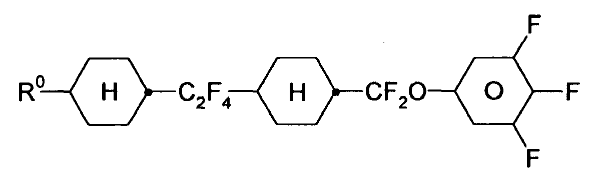 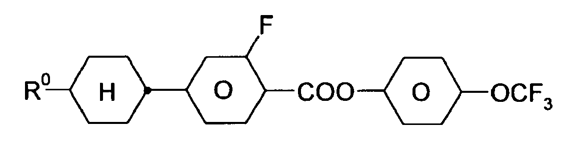 and/or 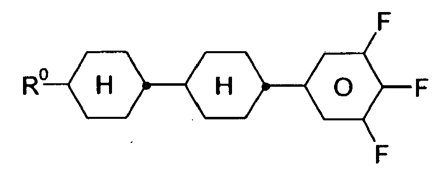 in which R⁰ and Y² are as defined above.
- The medium preferably comprises one, two or three, furthermore four, homologues of the compounds selected from the group consisting of H1 to H18 (n = 1-7): 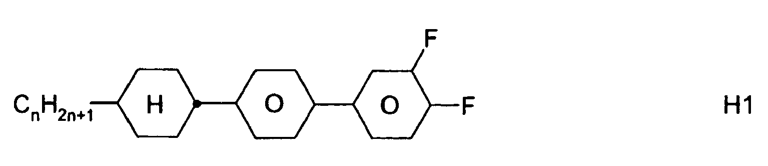 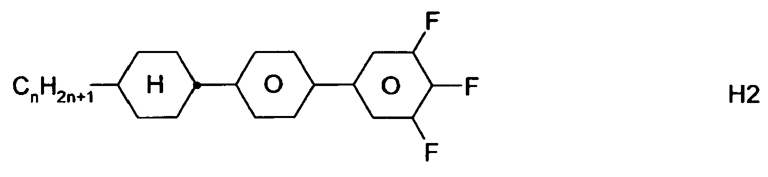 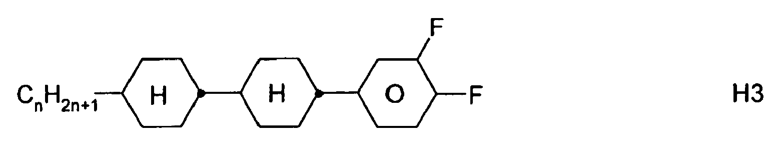 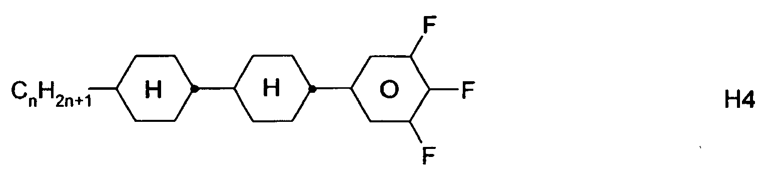 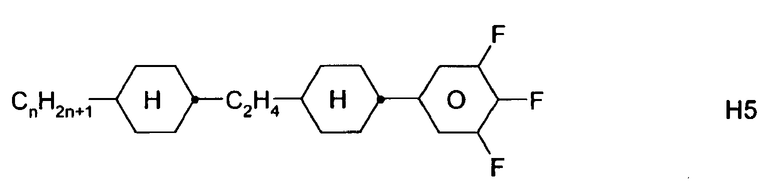 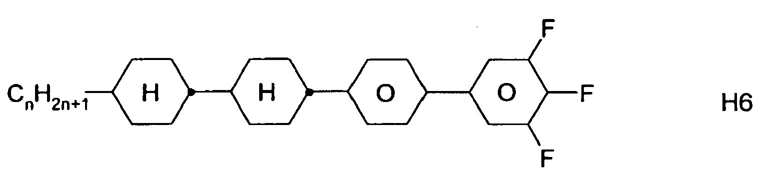 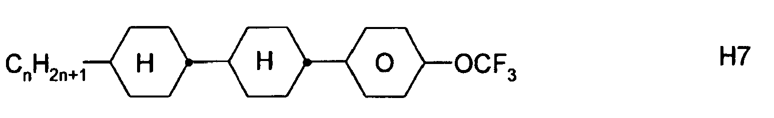 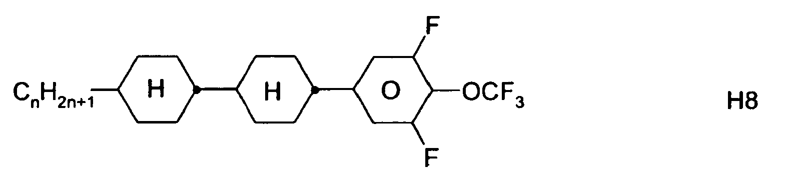 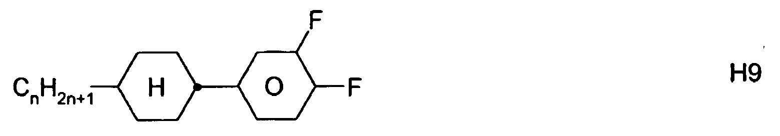 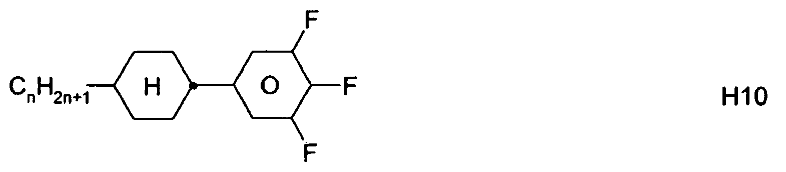 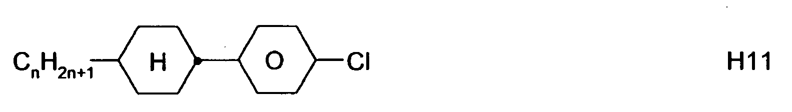 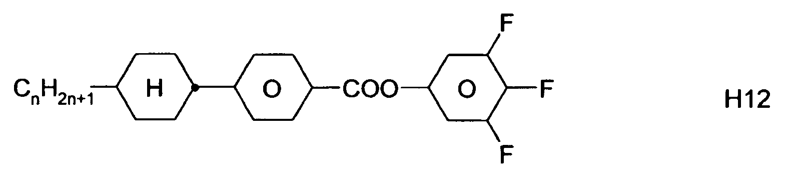 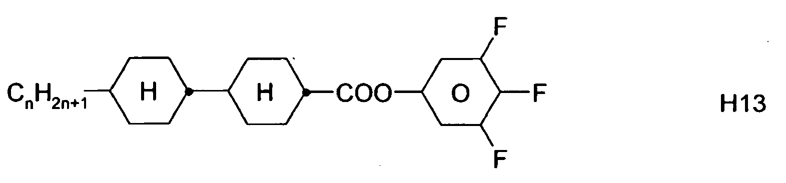 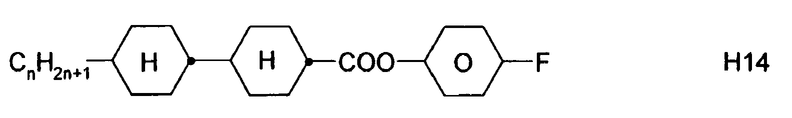 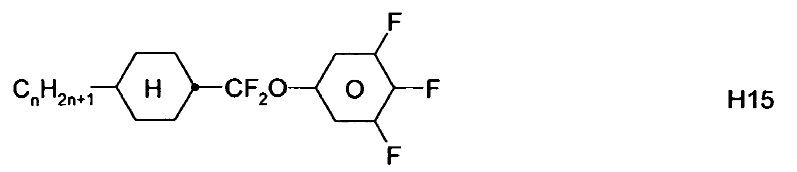 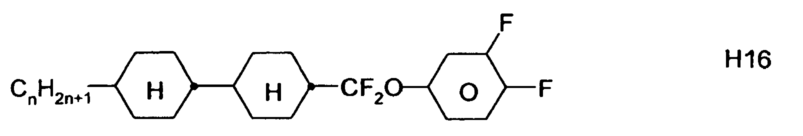 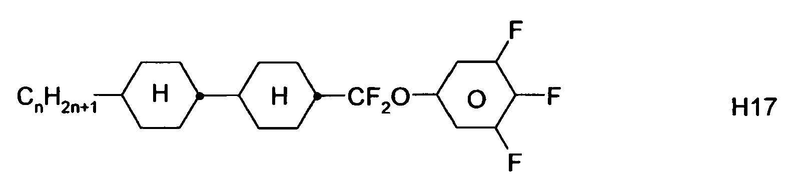 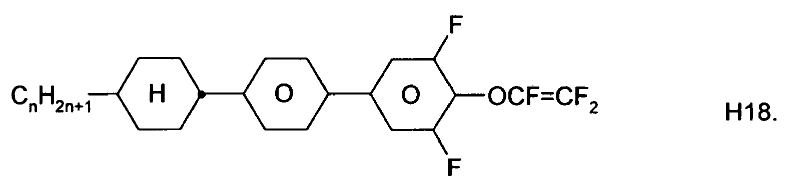
- The medium additionally comprises one or more compounds selected from the group consisting of the general formulae X to XV: 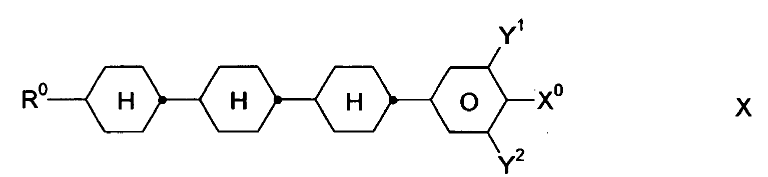 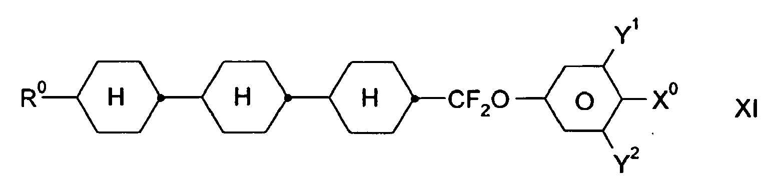 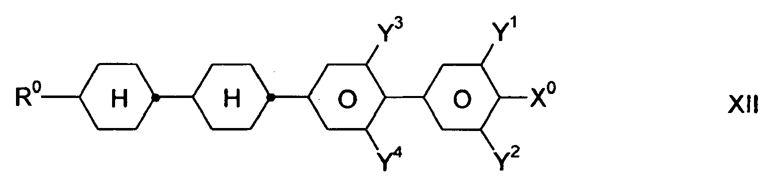 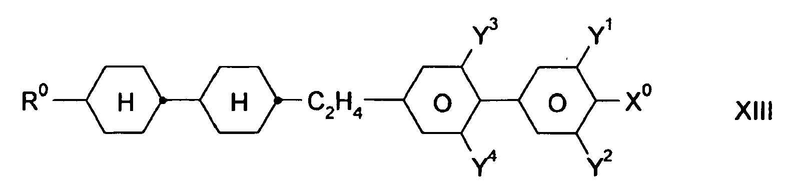 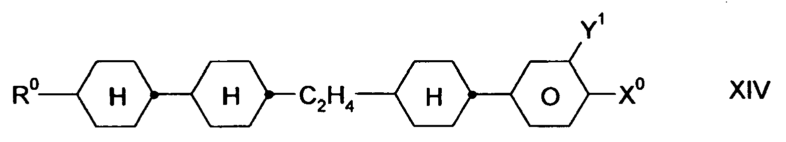 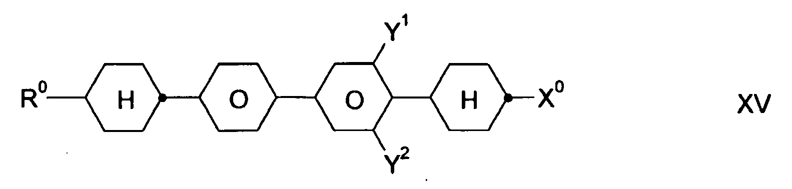 in which R⁰, X⁰, Y¹, Y², Y³ and Y⁴ each, independently of one another, have one of the meanings indicated in Claim 5. X⁰ is preferably F, Cl, CF₃, OCF₃ or OCHF₂. R⁰ is preferably alkyl, oxaalkyl, fluoroalkyl, alkenyl or alkenyloxy.
- The proportion of compounds of the formulae E and I to IX together in the mixture as a whole is at least 50 % by weight.
- The proportion of compounds of the formula I in the mixture as a whole is from 5 to 50% by weight.
- The proportion of compounds of the formula E in the mixture as a whole is from 5 to 30 % by weight, preferably 5 to 20 % by weight.
- The proportion of compounds of the formula II in the mixture as a whole is 3-40 % by weight.
- The proportion of compounds of the formulae II to IX in the mixture as a whole is from 30 to 70 % by weight. 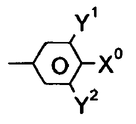 is preferably 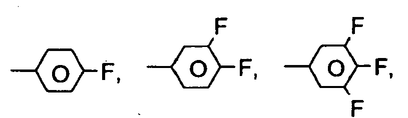 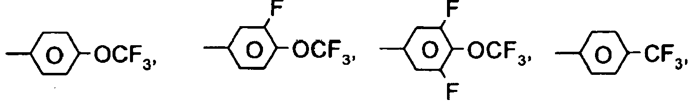 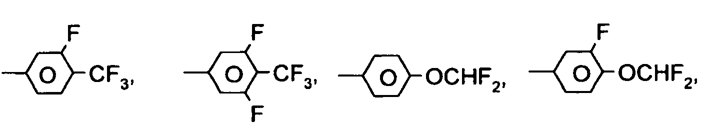 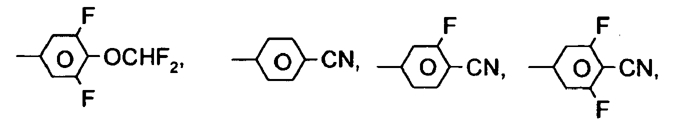 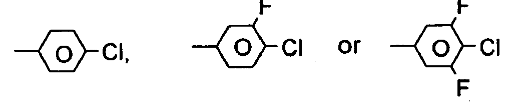
- The medium comprises compounds of the formulae II, III, IV, V, VI, VII, VIII and/or IX.
- R⁰ is straight-chain alkyl or alkenyl having from 2 to 7 carbon atoms.
- The medium essentially consists of compounds of the formulae I to XV.
- The medium comprises 5-40 % by weight of compounds of the formulae H17 and/or H18.
- The medium comprises further compounds, preferably selected from the following group consisting of the general formulae XVI to XX: 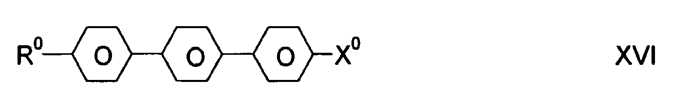 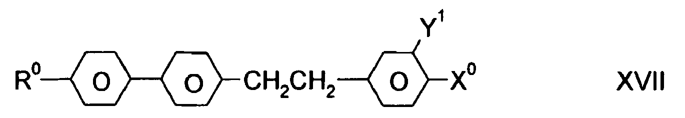 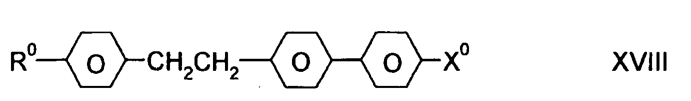 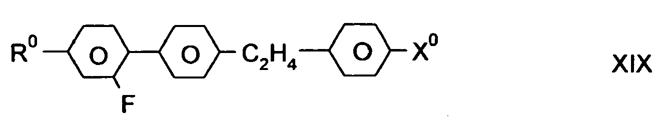 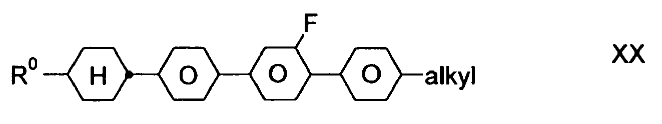 in which R⁰ and X⁰ are as defined above. "alkyl" denotes as defined below.
- The medium comprises further compounds, preferably selected from the following group consisting of the formulae RI to RIX 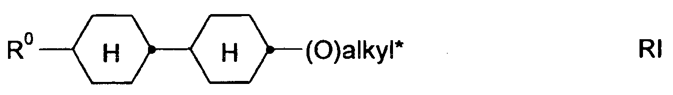 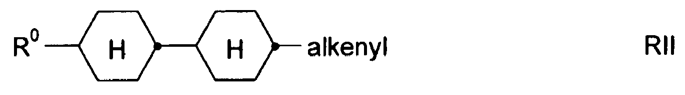 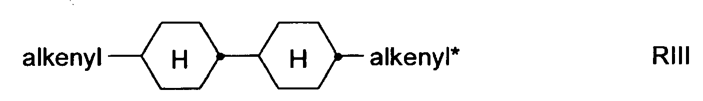 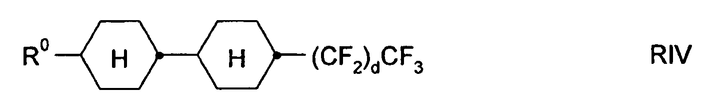 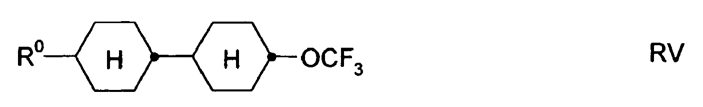 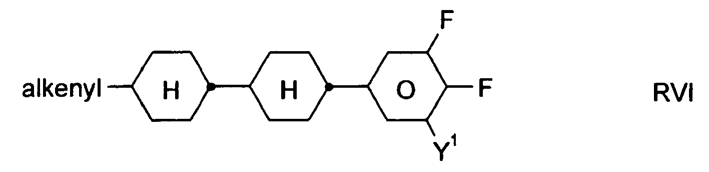 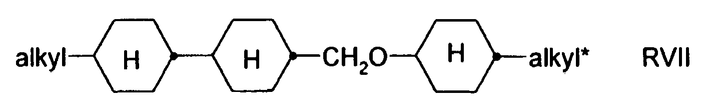 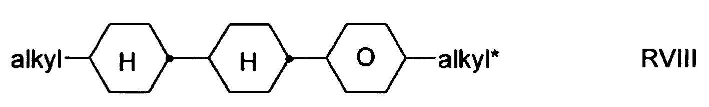 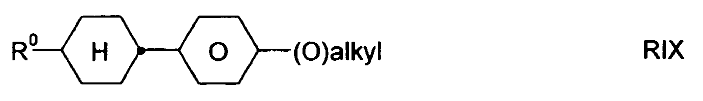 in which
   - R⁰: is n-alkyl, oxaalkyl, fluoroalkyl, alkenyloxy or alkenyl, each having up to 9 carbon atoms,
   - d: is 0, 1 or 2,
   - Y¹: is H or F,
   - alkyl or alkyl*: are each, independently of one another, a straight-chain or branched alkyl radical having 1-9 carbon atoms, preferably a straight-chain alkyl radical.
   - alkenyl or alkenyl*: are each, independently of one another, a straight-chain or branched alkenyl radical having up to 9 carbon atoms, preferably a straight-chain alkenyl radical.
- The medium preferably comprises one or more compounds of the formulae 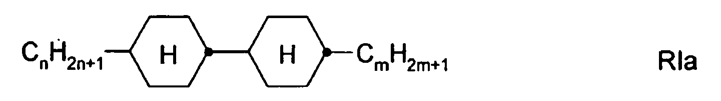 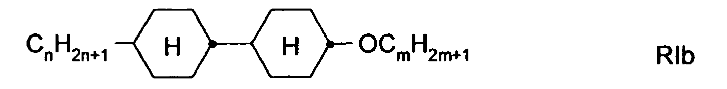 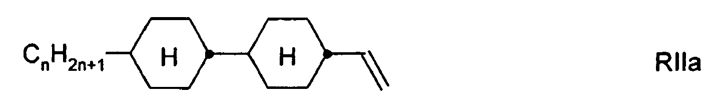 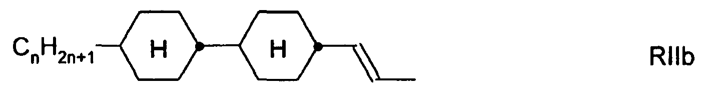 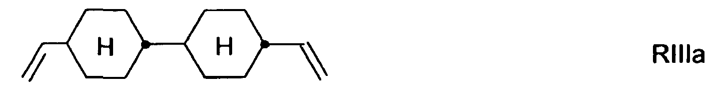 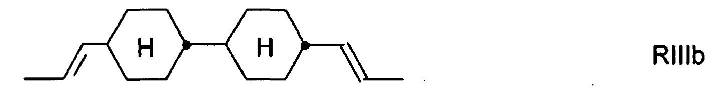 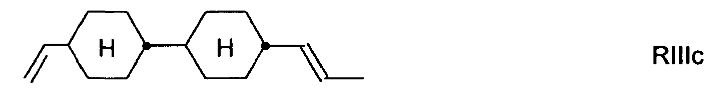 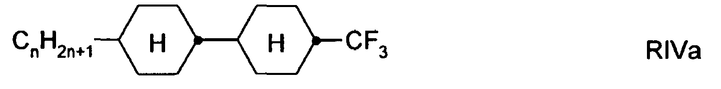
in which n and m are each an integer from 1 to 9.

Especially preferred are mixtures which contain one or two compounds of the formula Rlla and/or RIIb, preferably in amounts of 20-60 %.
- The I : (II + III + IV + V + VI + VII + VIII + IX) weight ratio is preferably from 1 : 10 to 10 : 1.
- The medium essentially consists of compounds selected from the group consisting of the general formulae E and I to XV.

Especially preferred mixtures contain at least one compound, preferably two or three compounds, selected from the group of the formulae 127a, I40a and I58a, 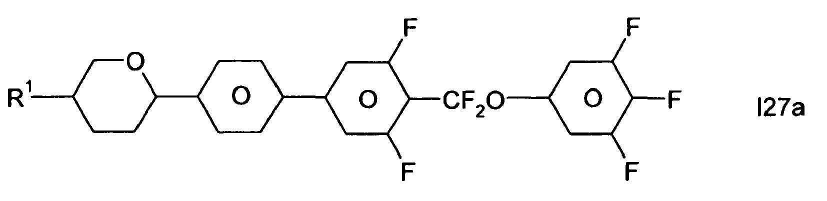 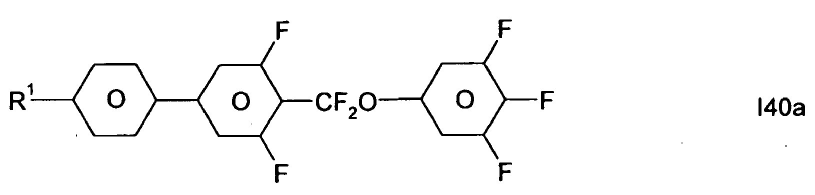 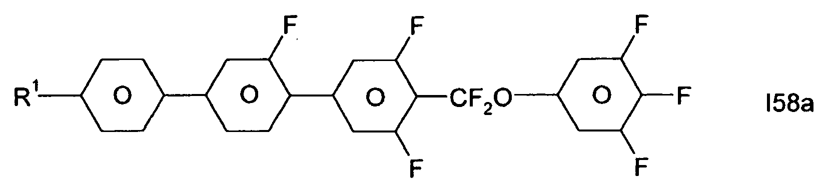 and at least one compound of the formula selected from the group of the formulae E-1a, E-4a, E-5a and E7-a, 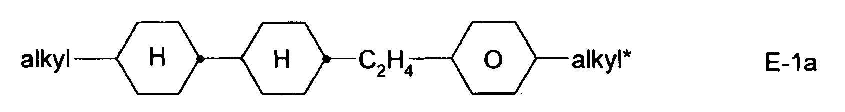 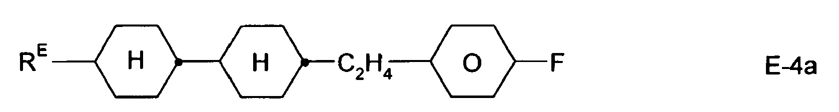 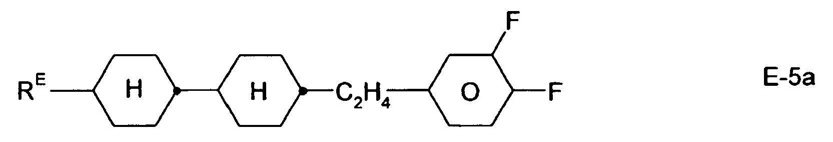 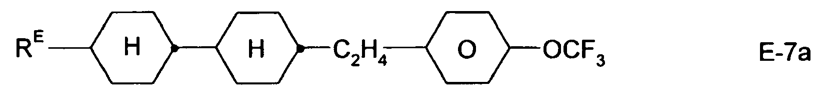 wherein R¹, R^{E}, alkyl and alkyl* have the meaning as given above and alkyl and alkyl* each independently denote a straight-chain alkyl group with 1 to 5 carbon atoms. "alkyl" is preferably n-C₃H₇, n-C₅H₁₁. "alkyl*" is preferably methyl or ethyl, most preferably methyl.

Especially preferred mixtures contain at least one compounds of the formula 127a, preferably

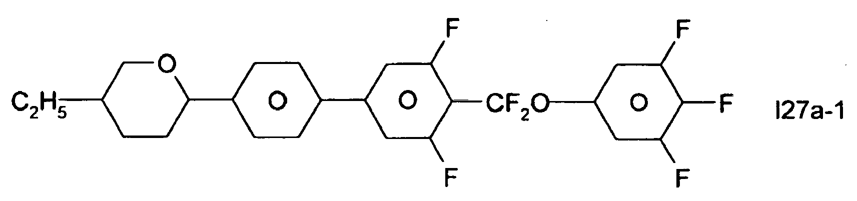

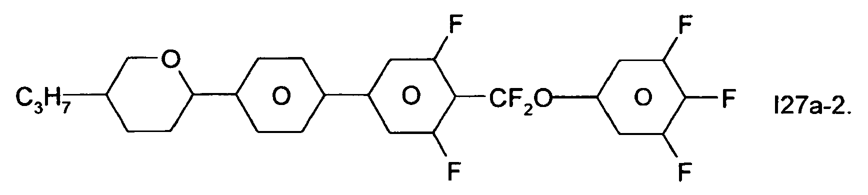

The compound(s) of the formula I27a is preferably used in amounts of 2-20 %, most preferably 3-15 %. Preferred mixtures contain the compounds of the formulae I27a-1 and 127a-2 in amounts of 5-15 % based on the total mixture.

Preferred mixtures contain
- at least one compound of the formula E-5a, preferably in amounts of 1-20%,
   or
- at least one compound of the formula E-4a and at least one compound of the formula E-5a, preferably in amounts of 5-20 % in total.

Preferred mixtures contain at least one compound of the formula 127 at least one compound of the formula I58 and at least one compound of the formula E-5.

Most preferred mixtures contain at least two compounds of the formula 127, at least one compound of the formula 158 and at least one compound of the formula E-5.

It has been found that even a relatively small proportion of compounds of the formulae E and I mixed with conventional liquid-crystal materials, but in particular with one or more compounds of the formula II, III, IV, V, VI, VII, VIII or IX results in a considerable lowering of the threshold voltage and in low birefringence values, with broad nematic phases with low smecticnematic transition temperatures being observed at the same time, improving the storage stability. The compounds of the formulae E, I to IX are colourless, stable and readily miscible with one another and with other liquid-crystal materials.

The term "alkyl" or "alkyl*" covers straight-chain and branched alkyl groups having 1-9 carbon atoms, in particular the straight-chain groups methyl, ethyl, propyl, butyl, pentyl, hexyl and heptyl. Groups having 2-5 carbon atoms are generally preferred.

The term "alkenyl" or "alkenyl*" covers straight-chain and branched alkenyl groups having up to 9 carbon atoms, in particular the straight-chain groups. Particularly preferred alkenyl groups are C₂-C₇-1E-alkenyl, C₄-C₇-3E-alkenyl, C₅-C₇-4-alkenyl, C₆-C₇-5-alkenyl and C₇-6-alkenyl, in particular C₂-C₇-1E-alkenyl, C₄-C₇-3E-alkenyl and C₅-C₇-4-alkenyl. Examples of preferred alkenyl groups are vinyl, 1E-propenyl, 1E-butenyl, 1E-pentenyl, 1 E-hexenyl, 1E-heptenyl, 3-butenyl, 3E-pentenyl, 3E-hexenyl, 3E-heptenyl, 4-pentenyl, 4Z-hexenyl, 4E-hexenyl, 4Z-heptenyl, 5-hexenyl, 6-heptenyl and the like. Groups having up to 5 carbon atoms are generally preferred.

The term "fluoroalkyl" preferably covers straight-chain groups having a terminal fluorine, i.e. fluoromethyl, 2-fluoroethyl, 3-fluoropropyl, 4-fluorobutyl, 5-fluoropentyl, 6-fluorohexyl and 7-fluoroheptyl. However, other positions of the fluorine are not excluded.

The term "oxaalkyl" preferably covers straight-chain radicals of the formula CₙH₂ₙ₊₁-O-(CH₂)ₘ, in which n and m are each, independently of one another, from 1 to 6. Preferably, n = 1 and m is from 1 to 6.

Through a suitable choice of the meanings of R⁰ and X⁰, the addressing times, the threshold voltage, the steepness of the transmission characteristic lines, etc., can be modified in the desired manner. For example, 1 E-alkenyl radicals, 3E-alkenyl radicals, 2E-alkenyloxy radicals and the like generally result in shorter addressing times, improved nematic tendencies and a higher ratio of the elastic constants k₃₃ (bend) and k₁₁ (splay) compared with alkyl or alkoxy radicals. 4-alkenyl radicals, 3-alkenyl radicals and the like generally give lower threshold voltages and smaller values of k₃₃/k₁₁ compared with alkyl and alkoxy radicals.

A -CH₂CH₂- group in Z¹ and/or Z² generally results in higher values of k₃₃/k₁₁ compared with a single covalent bond. Higher values of k₃₃/k₁₁ facilitate, for example, flatter transmission characteristic lines in TN cells with a 90° twist (in order to achieve grey shades) and steeper transmission characteristic lines in STN, SBE and OMI cells (greater multiplexability), and vice versa.

The optimum mixing ratio of the compounds of the formulae E and I and II + III + IV + V + VI + VII + VIII + IX depends substantially on the desired properties, on the choice of the components of the formulae I, II, III, IV, V, VI, VII, VIII and/or IX, and on the choice of any other components that may be present. Suitable mixing ratios within the range given above can easily be determined from case to case.

The total amount of compounds of the formulae E and I to XV in the mixtures according to the invention is not crucial. The mixtures can therefore comprise one or more further components for the purposes of optimisation of various properties. However, the observed effect on the addressing times and the threshold voltage is generally greater, the higher the total concentration of compounds of the formulae E and I to XV.

In a particularly preferred embodiment, the media according to the invention comprise compounds of the formulae II to IX (preferably II and/or III) in which X⁰ is OCF₃, OCHF₂, F, OCH=CF₂, OCF=CF₂, OCF₂CHFCF₃ or OCF₂-CF₂H. A favourable synergistic effect with the compounds of the formula I results in particularly advantageous properties.

The construction of the MLC display according to the invention from polarisers, electrode base plates and surface-treated electrodes corresponds to the conventional construction for displays of this type. The term conventional construction is broadly drawn here and also covers all derivatives and modifications of the MLC display, in particular including matrix display elements based on poly-Si TFT or MIM.

A significant difference between the displays according to the invention and the hitherto conventional displays based on the twisted nematic cell consists, however, in the choice of the liquid-crystal parameters of the liquid-crystal layer.

The liquid-crystal mixtures which can be used in accordance with the invention are prepared in a manner conventional per se. In general, the desired amount of the components used in lesser amount is dissolved in the components making up the principal constituent, advantageously at elevated temperature. It is also possible to mix solutions of the components in an organic solvent, for example in acetone, chloroform or methanol, and to remove the solvent again, for example by distillation, after thorough mixing.

The dielectrics may also comprise further additives known to the person skilled in the art and described in the literature, such as, for example stabilisers and antioxidants. For example, 0-15% of pleochroic dyes or chiral dopants can be added.

C denotes a crystalline phase, S a smectic phase, S_{c} a smectic C phase, S_{B} a smectic B phase, N a nematic phase and I the isotropic phase.

V₁₀ denotes the voltage for 10% transmission (viewing angle perpendicular to the plate surface). tₒₙ denotes the switch-on time and t_{off} the switch-off time at an operating voltage corresponding to 2 times the value of V₁₀. Δn denotes the optical anisotropy and nₒ the refractive index. Δε denotes the dielectric anisotropy (Δε = ε_{∥} - ε_{⊥}, where ε_{∥} denotes the dielectric constant parallel to the longitudinal molecular axes and ε_{⊥} the dielectric constant perpendicular thereto). The electro-optical data were measured in a TN cell at the 1st minimum (i.e. at a d Δn value of 0.5 µm) at 20°C, unless expressly stated otherwise. The optical data were measured at 20°C, unless expressly stated otherwise.

In the present application and in the examples below, the structures of the liquid-crystal compounds are indicated by means of acronyms, the transformation into chemical formulae taking place in accordance with Tables A and B below. All radicals CₙH₂ₙ₊₁ and CₘH₂ₘ₊₁ are straight-chain alkyl radicals having n and m carbon atoms respectively; n and m are each, independently of one another, 1, 2, 3, 4, 5, 6, 7, 8, 9, 10, 11, 12, 13, 14 or 15. The coding in Table B is self-evident. In Table A, only the acronym for the parent structure is indicated. In individual cases, the acronym for the parent structure is followed, separated by a dash, by a code for the substituents R¹, R², L¹ and L²:

| Code for R¹, R², L¹, L² | R¹ | R² | L¹ | L² |
|---|---|---|---|---|
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | H | F |
| nF | CₙH₂ₙ₊₁ | F | H | H |
| nOF | OCₙH₂ₙ₊₁ | F | H | H |
| nCl | CₙH₂ₙ₊₁ | Cl | H | H |
| nF.F | CₙH₂ₙ₊₁ | F | H | F |
| nF.F.F | CₙH₂ₙ₊₁ | F | F | F |
| nCF₃ | CₙH₂ₙ₊₁ | CF₃ | H | H |
| nOCF₃ | CₙH₂ₙ₊₁ | OCF₃ | H | H |
| nOCF₃.F | CₙH₂ₙ₊₁ | OCF₃ | H | F |
| nOCF₂ | CₙH₂ₙ₊₁ | OCHF₂ | H | H |
| nS | CₙH₂ₙ₊₁ | NCS | H | H |
| rVsN | CᵣH₂ᵣ₊₁CH=CH-CₛH₂ₛ- | CN | H | H |
| rEsN | CᵣH₂ᵣ₊₁-O-C₂H₂ₛ- | CN | H | H |
| nAm | CₙH₂ₙ₊₁ | COOCₘH₂ₘ₊₁ | H | H |
| nOCCF₂.F.F | CₙH₂ₙ₊₁ | OCH₂CF₂H | F | F |

Preferred mixture components are given in Tables A and B.

**Table A:**

| | |
|---|---|
| 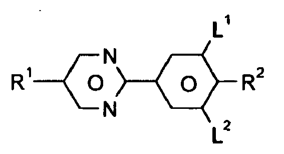 | 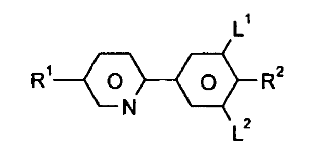 |
| **PYP** | **PYRP** |
| 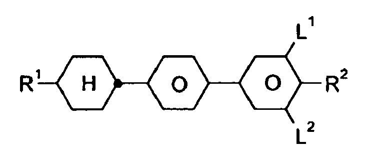 | 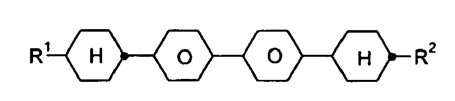 |
| **BCH** | **CBC** |
| 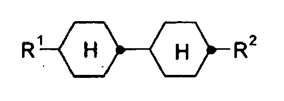 | 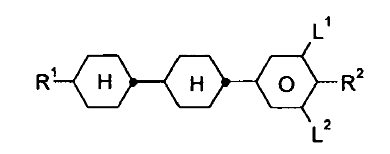 |
| **CCH** | **CCP** |
| 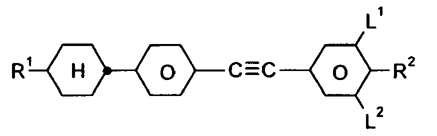 | |
| **CPTP** | |
| 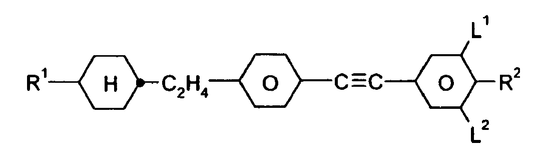 | |
| **CEPTP** | |
| 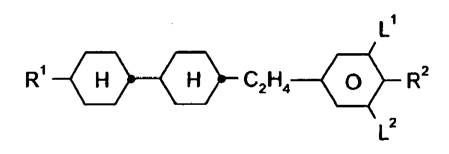 | |
| **ECCP** | |
| 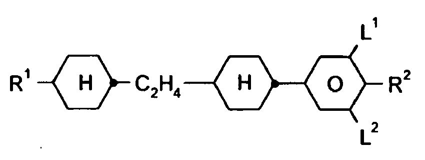 | |
| **CECP** | |
| 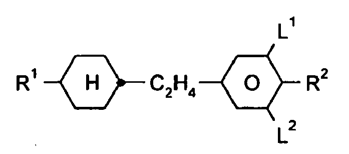 | 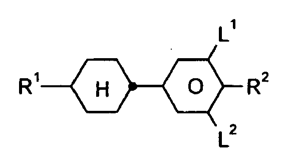 |
| **EPCH** | **PCH** |
| 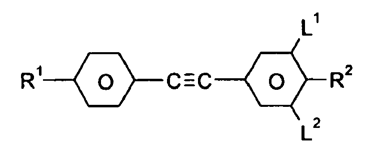 | 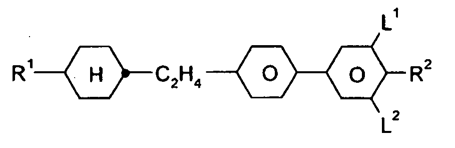 |
| **PTP** | **BECH** |
| 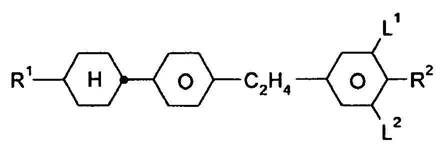 | 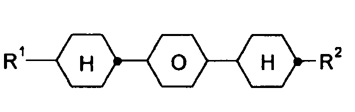 |
| **EBCH** | **CPC** |
| 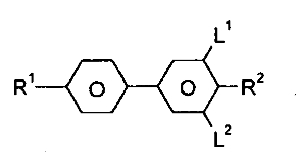 | 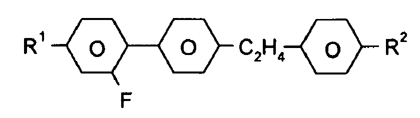 |
| **B** | **FET-nF** |
| 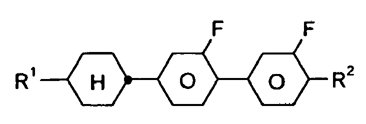 | 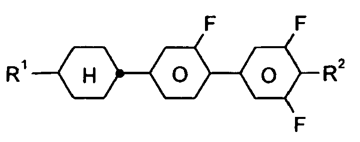 |
| **CGG** | **CGU** |
| 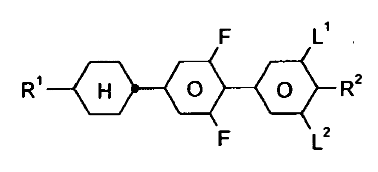 | |
| **CUP** | |
| 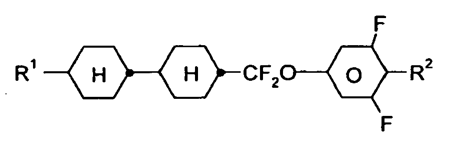 | |
| **CCQU** | |
| 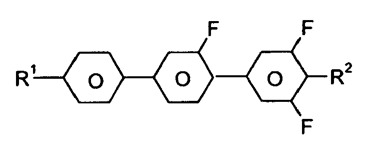 | |
| **PGU** | |
| 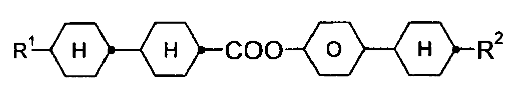 | |
| **CCPC** | |

**Table B:**

| | |
|---|---|
| 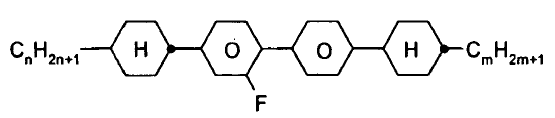 | |
| **CBC-nmF** | |
| 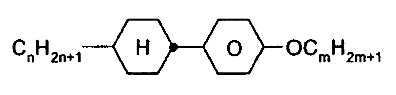 | |
| **PCH-nOm** | |
| 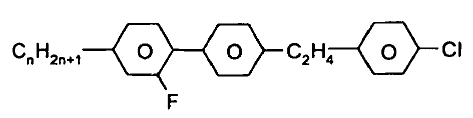 | |
| **FET-nCl** | |
| 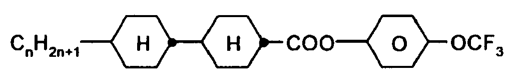 | |
| **CP-nOCF₃** | |
| 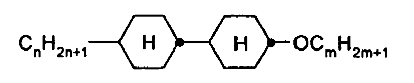 | |
| **CCH-nOm** | |
| 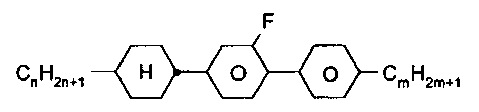 | |
| **BCH-n.Fm** | |
| 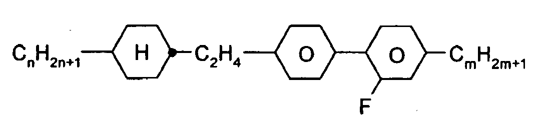 | |
| **Inm** | |
| 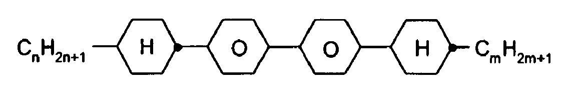 | |
| **CBC-nm** | |
| 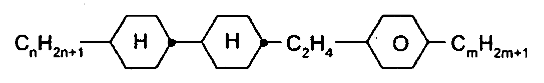 | |
| **ECCP-nm** | |
| 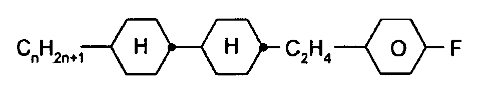 | |
| **ECCP-nF** | |
| 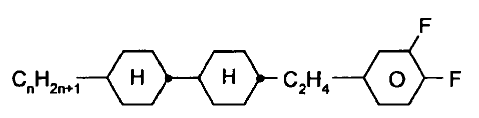 | |
| **ECCP-nF.F** | |
| 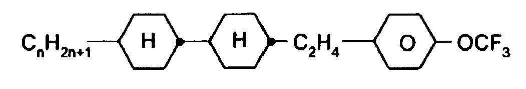 | |
| **ECCP-nOCF₃** | |
| 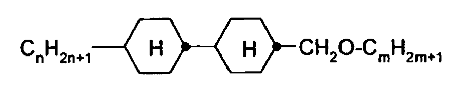 | |
| **CCH-n1Em** | |
| 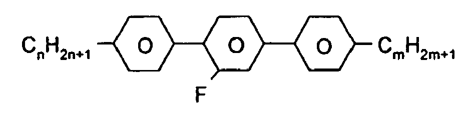 | |
| **T-nFm** | |
| 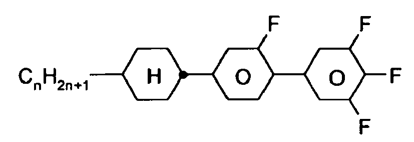 | 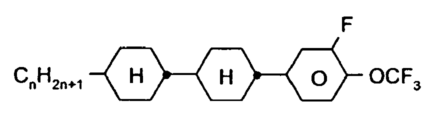 |
| **CGU-n-F** | **CCP-nOCF₃.F** |
| 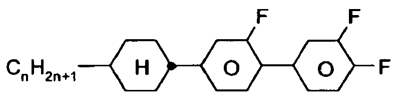 | |
| **CGG-n-F** | |
| 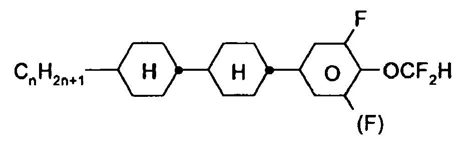 | |
| **CCP-nOCF₂.F(.F)** | |
| 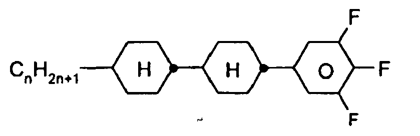 | |
| **CCP-nF.F.F** | |
| 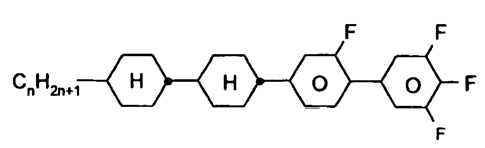 | |
| **CCGU-n-F** | |
| 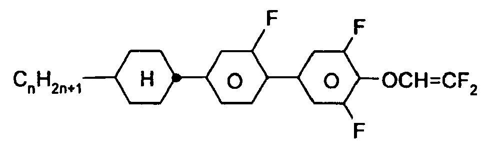 | |
| **CGU-n-OXF** | |
| 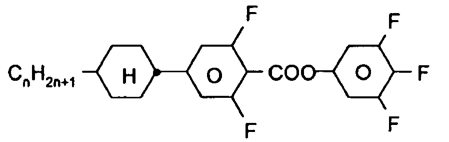 | |
| **CUZU-n-F** | |
| 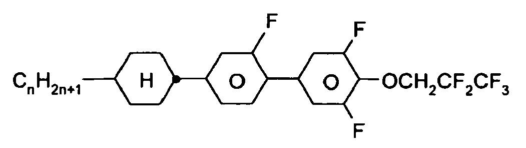 | |
| **CGU-n-O1DT** | |
| 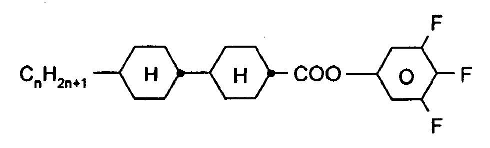 | |
| **CCZU-n-F** | |
| 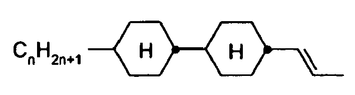 | 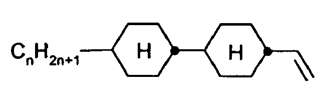 |
| **CC-n-V1** | **CC-n-V** |
| 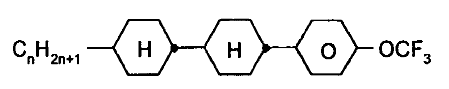 | |
| **CCP-nOCF₃** | |
| 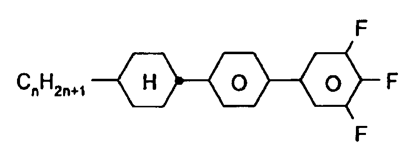 | |
| **BCH-nF.F.F** | |
| 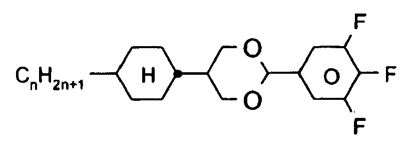 | |
| **CDU-n-F** | |
| 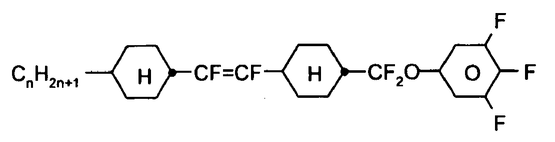 | |
| **CWCQU-n-F** | |
| 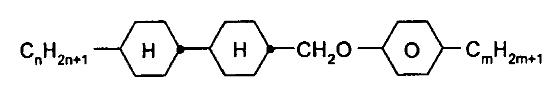 | |
| **CCOC-n-m** | |
| 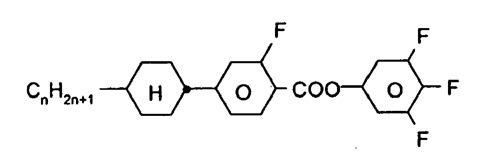 | |
| **CGZU-n-F** | |
| 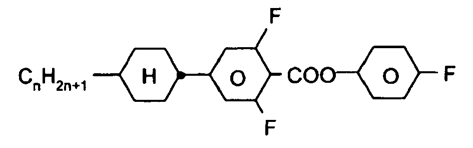 | |
| **CUZP-n-F** | |
| 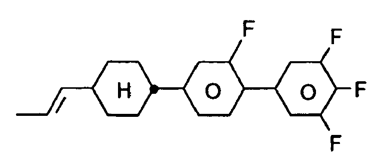 | 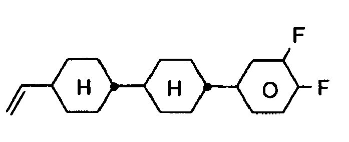 |
| **CGU-1V-F** | **CCG-V-F** |
| 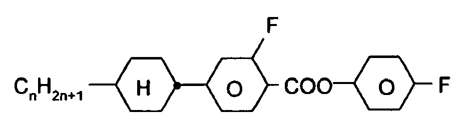 | |
| **CGZP-n-F** | |
| 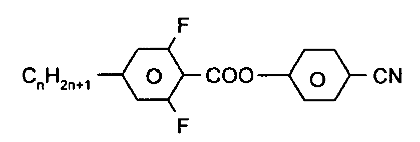 | |
| **UZP-n-N** | |
| 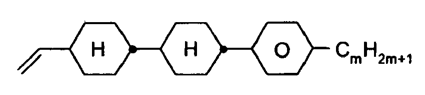 | |
| **CCP-V-m** | |
| 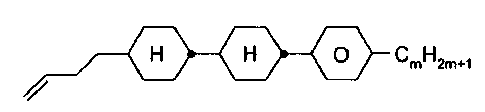 | |
| **CCP-V2-m** | |
| 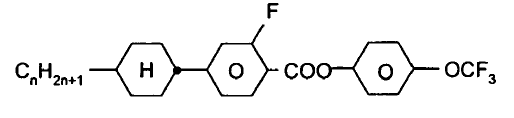 | |
| **CGZP-n-OT** | |
| 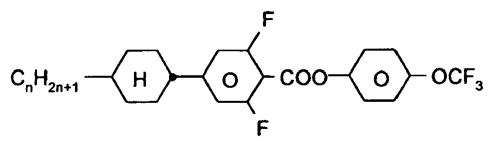 | |
| **CUZP-n-OT** | |
| 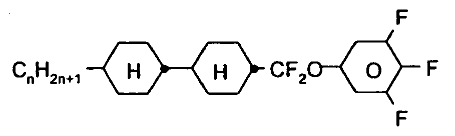 | |
| **CCQU-n-F** | |
| 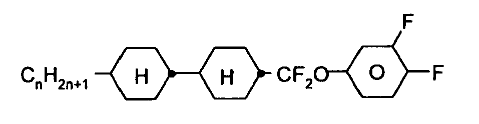 | |
| **CCQG-n-F** | |
| 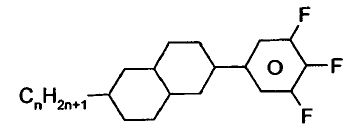 | 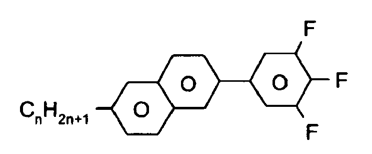 |
| **Dec-U-n-F** | **Nap-U-n-F** |
| 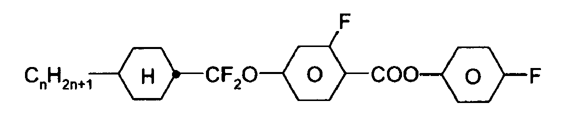 | |
| **CQGZP-n-F** | |
| 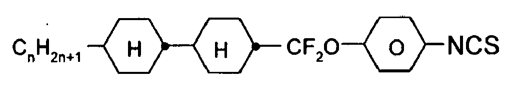 | |
| **CCQP-n-S** | |
| 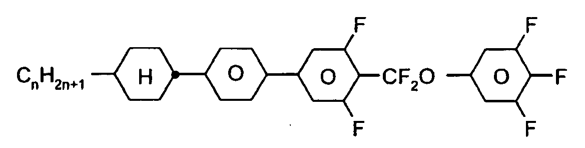 | |
| **CPUQU-n-F** | |
| 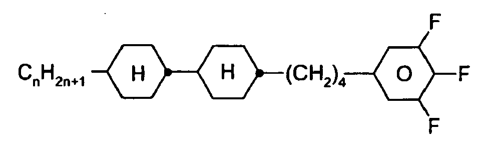 | |
| **CCEEU-n-F** | |
| 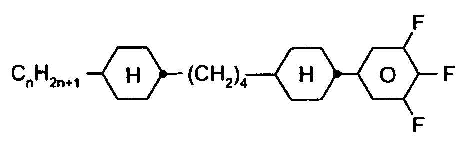 | |
| **CEECU-n-F** | |
| 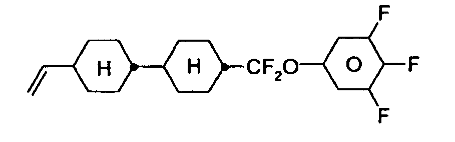 | |
| **CCQU-V-F** | |
| 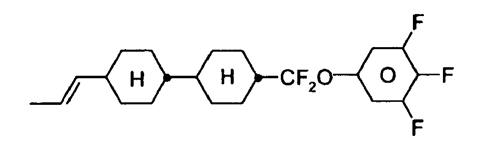 | |
| **CCQU-1V-F** | |
| 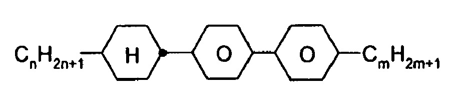 | |
| **CPP-n-m** | |
| 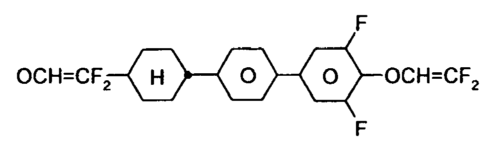 | |
| **CPU-n-OXF** | |
| 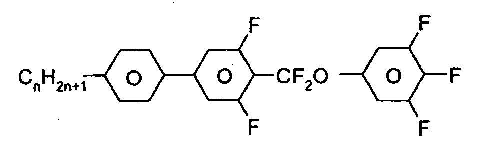 | |
| **PUQU-n-F** | |
| 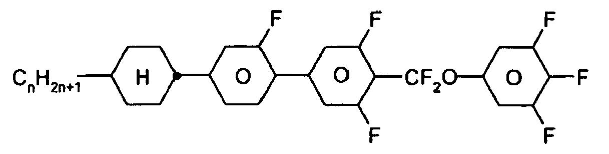 | |
| **CGUQU-n-F** | |
| 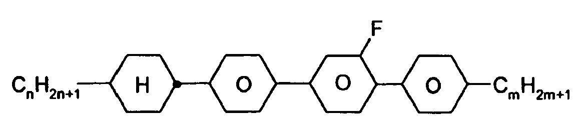 | |
| **CPGP-n-m** | |
| 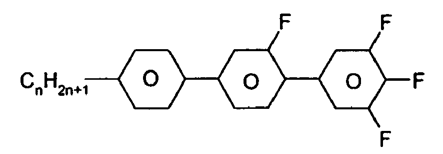 | |
| **PGU-n-F** | |
| 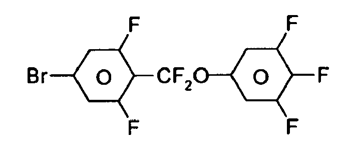 | |
| **PQU-Br-F** | |
| 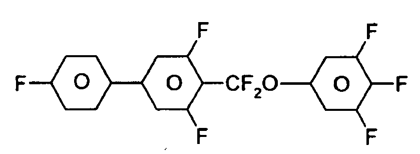 | |
| **PUQU-F-F** | |
| 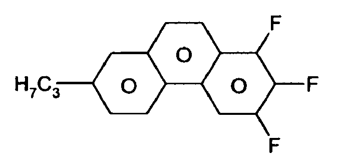 | |
| **IS-9003** | |
| 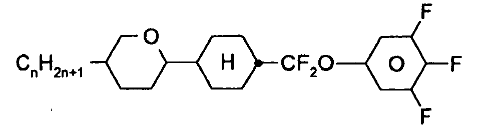 | |
| **ACQU-n-F** | |
| 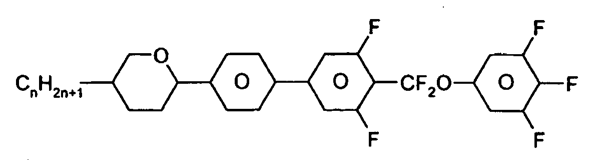 | |
| **APUQU-n-F** | |
| 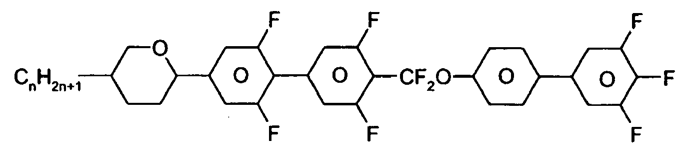 | |
| **AUUQPU-n-F** | |
| 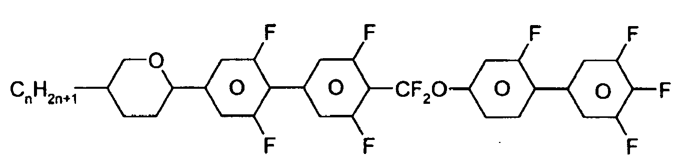 | |
| **AUUQGU-n-F** | |
| 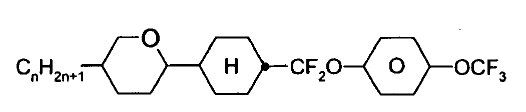 | |
| **ACQP-n-OT** | |
| 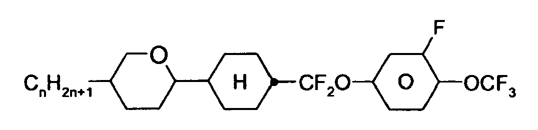 | |
| **ACQG-n-OT** | |
| 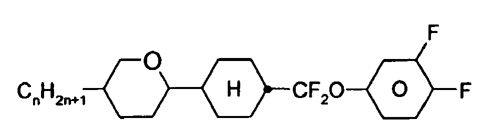 | |
| **ACQG-n-F** | |
| 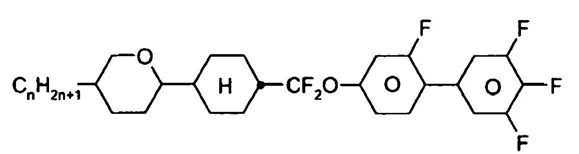 | |
| **ACQGU-n-F** | |
| 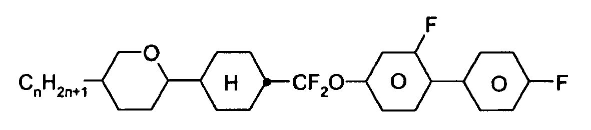 | |
| **ACQGP-n-F** | |
| 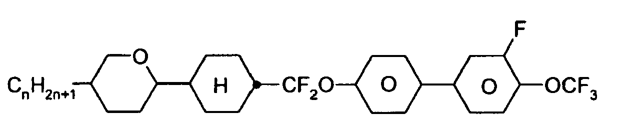 | |
| **ACQPG-n-OT** | |
| 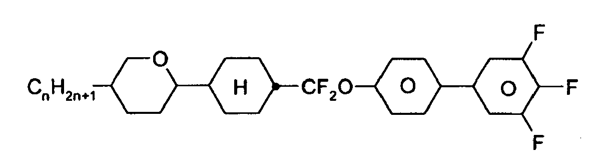 | |
| **ACQPU-n-F** | |
| 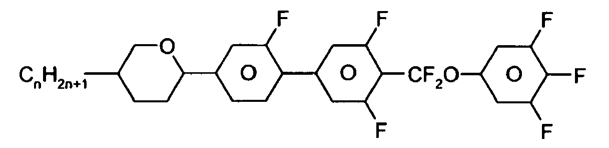 | |
| **AGUQU-n-F** | |
| 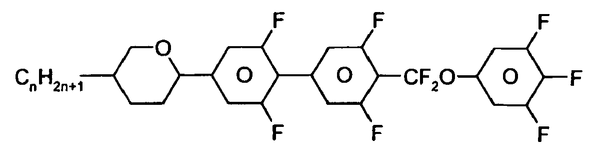 | |
| **AUUQU-n-F** | |
| 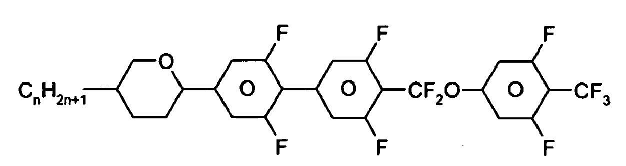 | |
| **AUUQU-n-T** | |
| 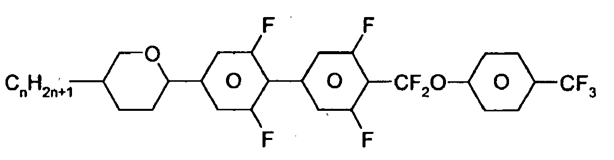 | |
| **AUUQP-n-T** | |
| 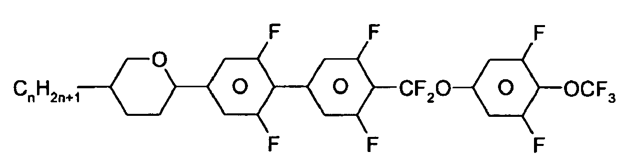 | |
| **AUUQU-n-OT** | |
| 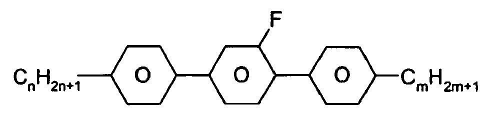 | |
| **PGP-n-m** | |
| 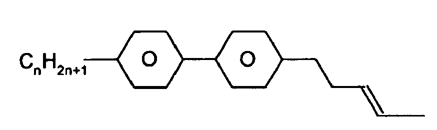 | |
| **PP-n-2V1** | |

**Table C:**

| Table C shows possible dopants which are generally added to the mixtures according to the invention in amounts of from 0.1 to 10% by weight. |
|---|
| 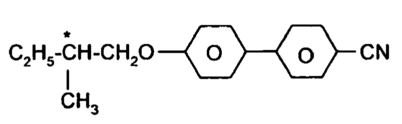 |
| **C15** |
| 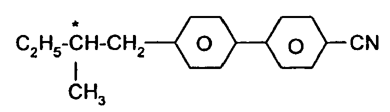 |
| **CB 15** |
| 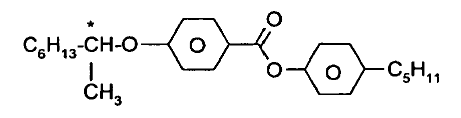 |
| **CM 21** |
| 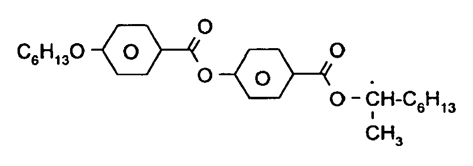 |
| **R/S-811** |
| 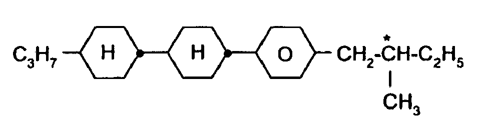 |
| **CM 44** |
| 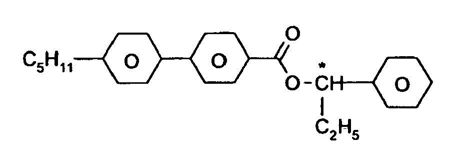 |
| **CM 45** |
| 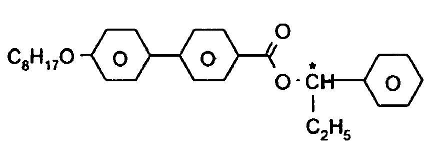 |
| **CM 47** |
| 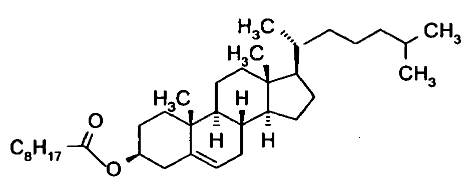 |
| **CN** |
| 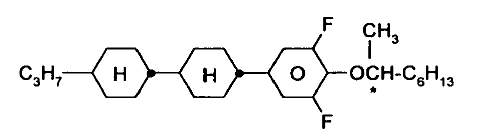 |
| **R/S-2011** |
| 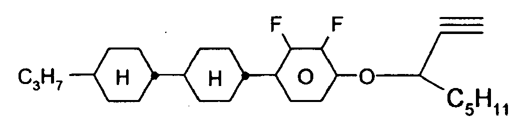 |
| **R/S-3011** |
| 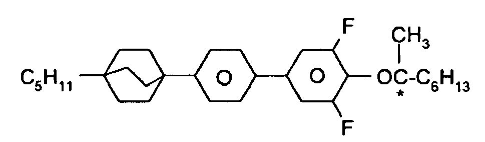 |
| **R/S-4011** |
| 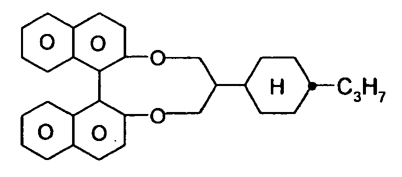 |
| **R/S-5011** |

**Table D**

| Stabilisers which can be added, for example, to the mixtures according to the invention are mentioned below (n = 1,2,3,4,5,6 or 7). | |
|---|---|
| 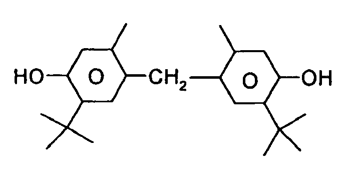 | 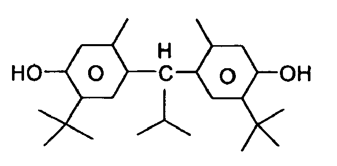 |
| 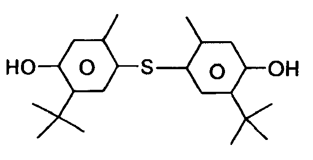 | 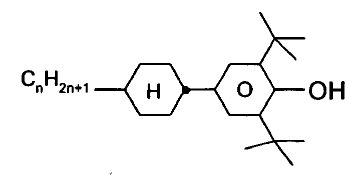 |
| 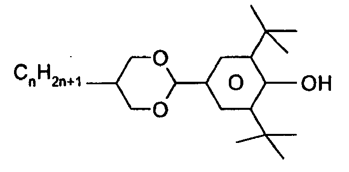 | |
| 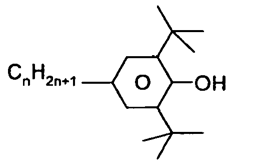 | 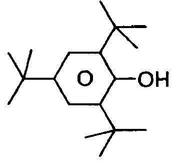 |
| 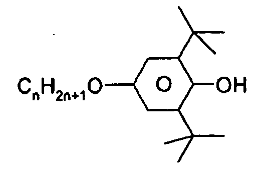 | 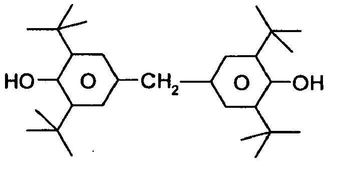 |
| 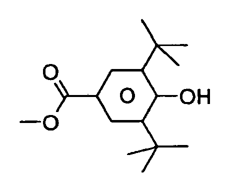 | 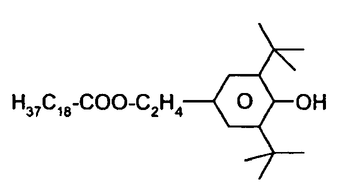 |
| 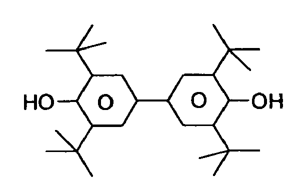 | 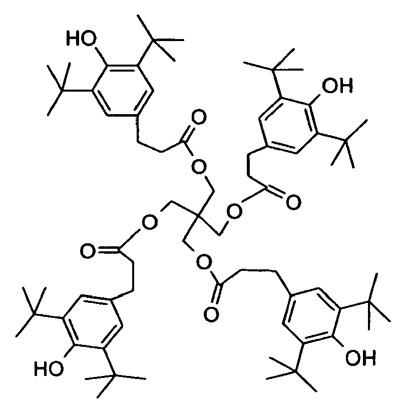 |
| 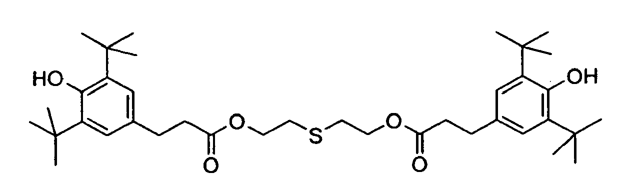 | |
| 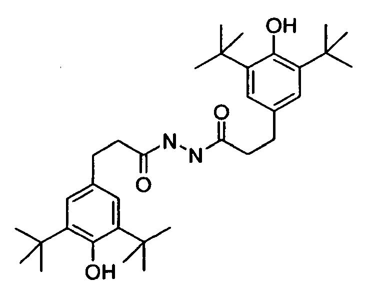 | 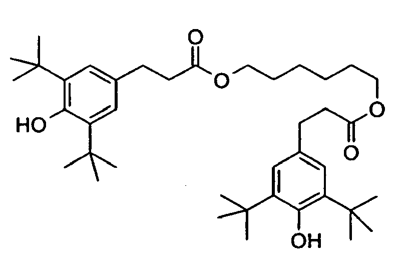 |
| 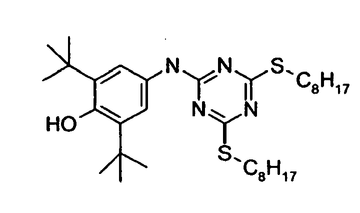 | 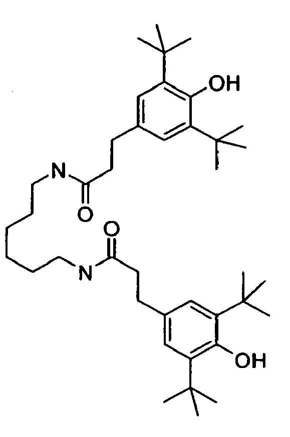 |
| 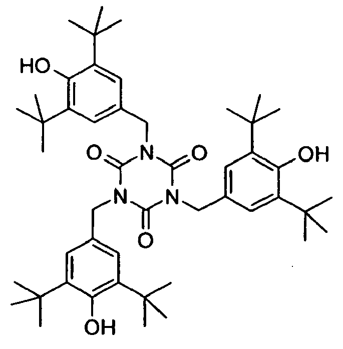 | 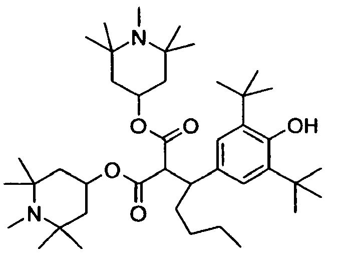 |
| 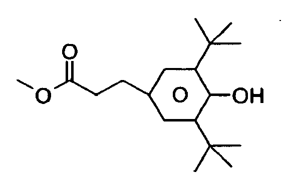 | 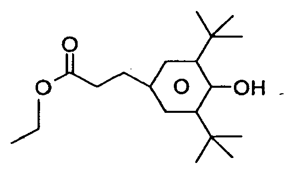 |
| 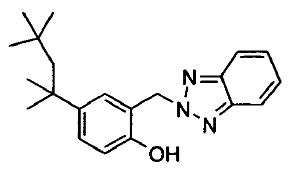 | 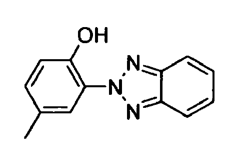 |
| 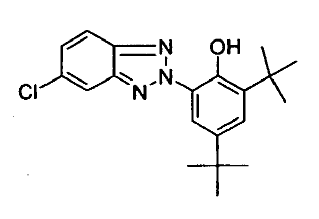 | 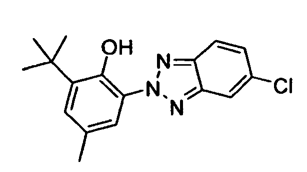 |
| 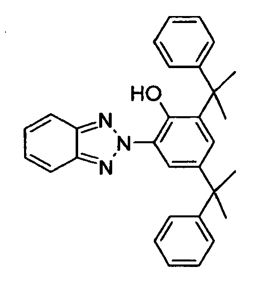 | 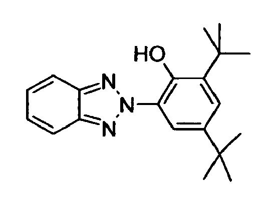 |
| 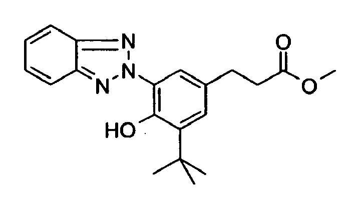 | 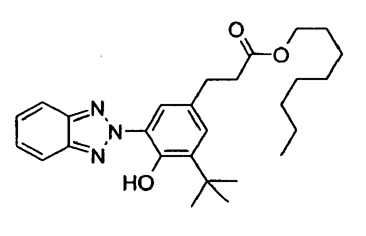 |
| 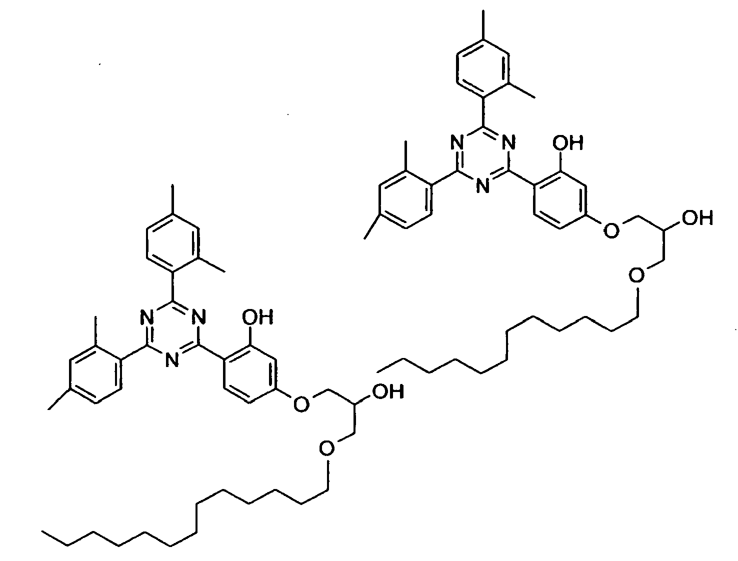 | |
| 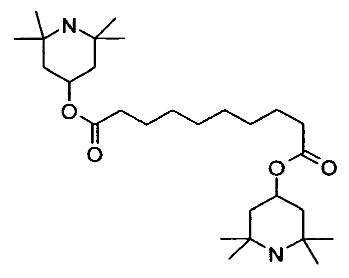 | 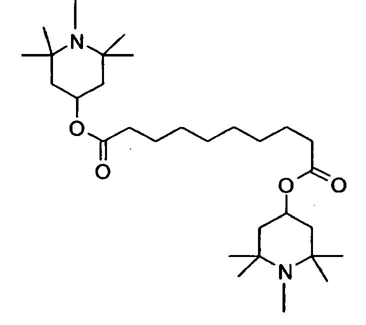 |

**Table E**

| | |
|---|---|
| In the case that the mixtures according to the instant application contain any reactive mesogens (RMs) for PS-IPS, positive PS VA or PS-FFS applications, the RMs are preferably selected from the following compounds listed in this table: | |
| 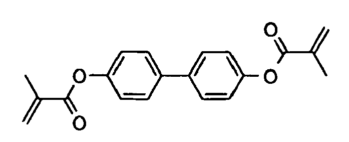 | RM-1 |
| 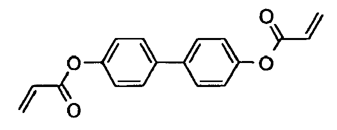 | RM-2 |
| 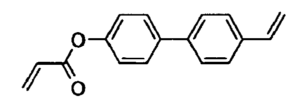 | RM-3 |
| 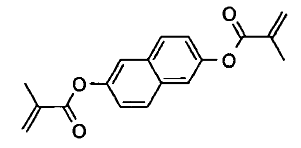 | RM-4 |
| 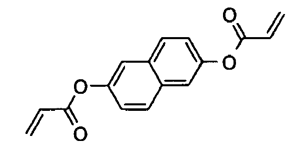 | RM-5 |
| 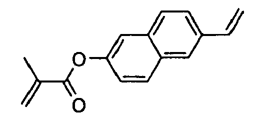 | RM-6 |
| 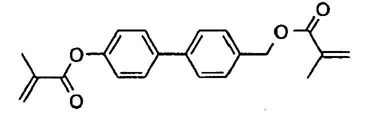 | RM-7 |
| 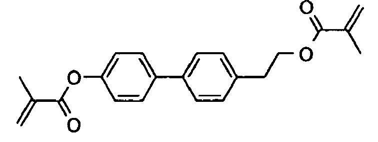 | RM-8 |
| 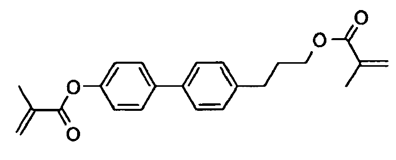 | RM-9 |
| 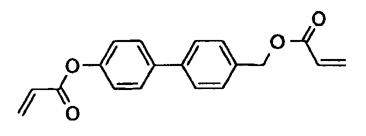 | RM-10 |
| 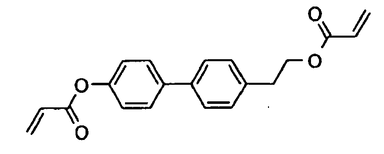 | RM-11 |
| 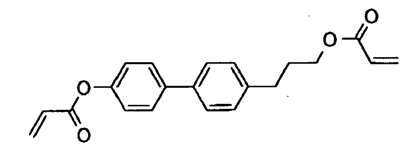 | RM-12 |
| 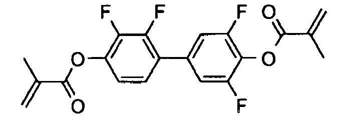 | RM-13 |
| 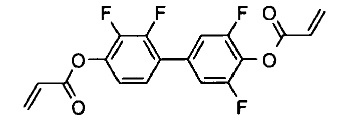 | RM-14 |
| 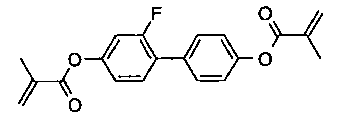 | RM-15 |
| 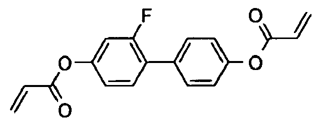 | RM-16 |
| 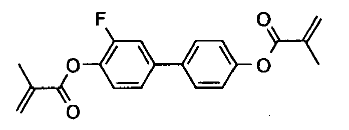 | RM-17 |
| 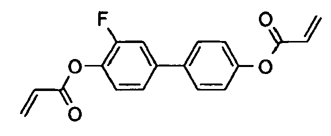 | RM-18 |
| 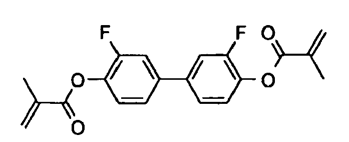 | RM-19 |
| 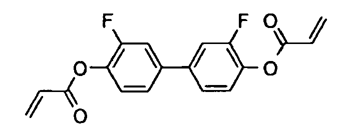 | RM-20 |
| 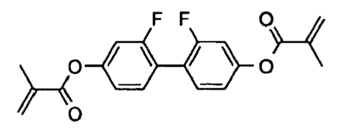 | RM-21 |
| 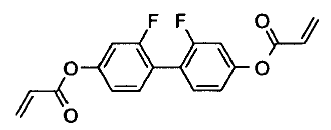 | RM-22 |
| 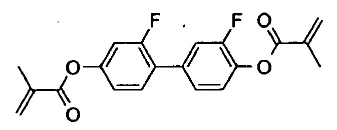 | RM-23 |
| 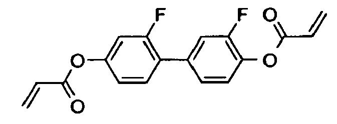 | RM-24 |
| 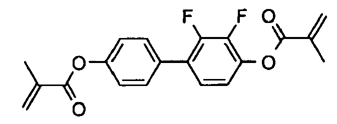 | RM-25 |
| 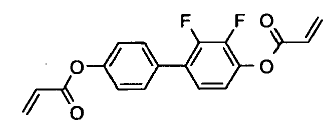 | RM-26 |
| 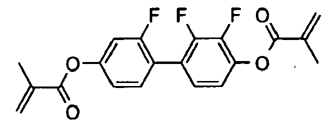 | RM-27 |
| 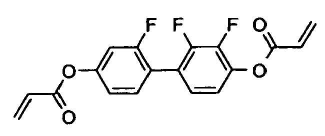 | RM-28 |
| 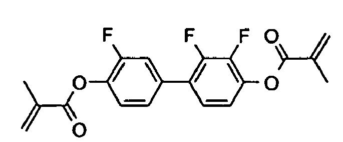 | RM-29 |
| 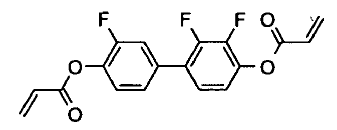 | RM-30 |
| 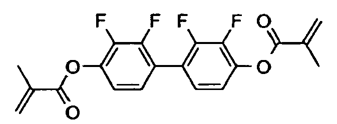 | RM-31 |
| 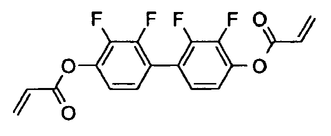 | RM-32 |
| 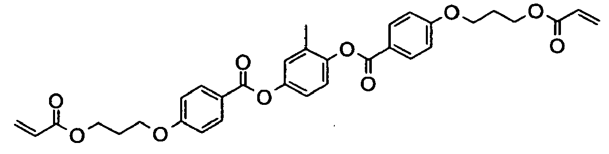 | RM-33 |
| 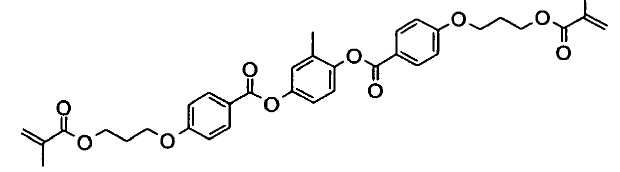 | RM-34 |
| 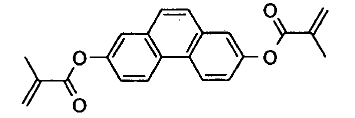 | RM-35 |
| 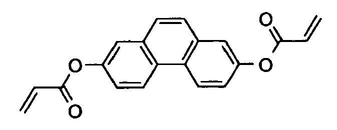 | RM-36 |
| 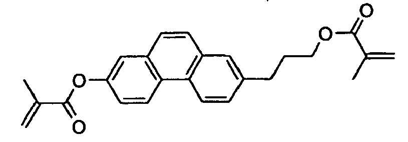 | RM-37 |
| 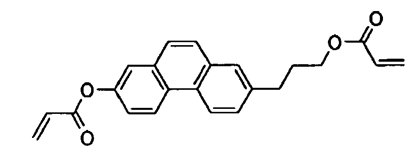 | RM-38 |
| 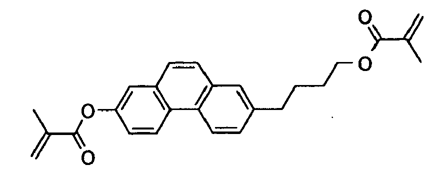 | RM-39 |
| 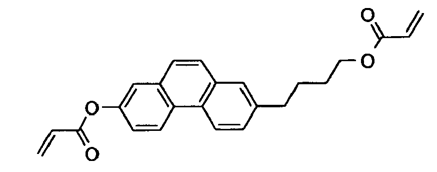 | RM-40 |
| 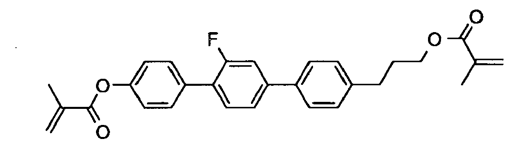 | RM-41 |
| 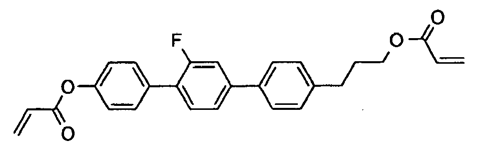 | RM-42 |
| 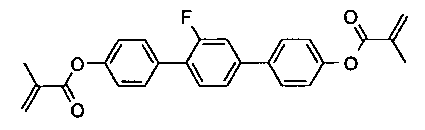 | RM-43 |
| 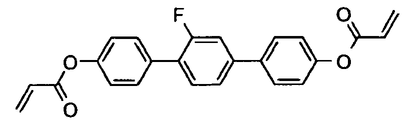 | RM-44 |
| 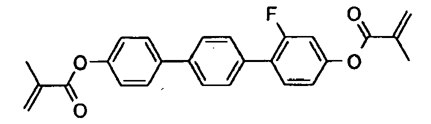 | RM-45 |
| 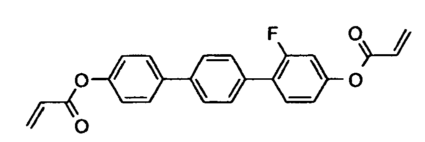 | RM-46 |
| 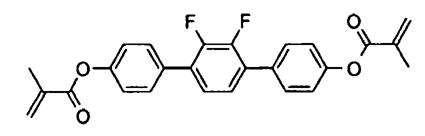 | RM-47 |
| 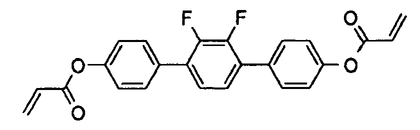 | RM-48 |
| 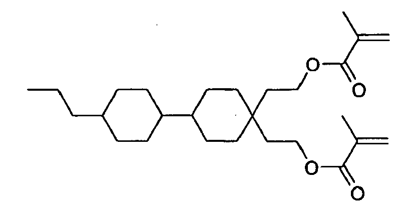 | RM-49 |
| 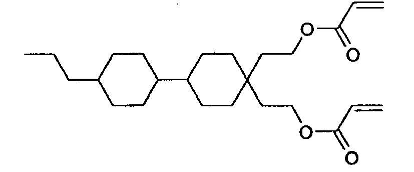 | RM-50 |
| 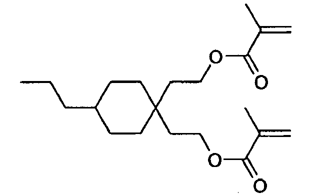 | RM-51 |
| 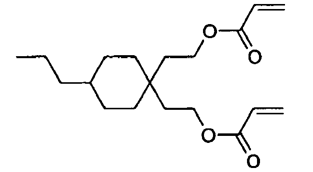 | RM-52 |
| 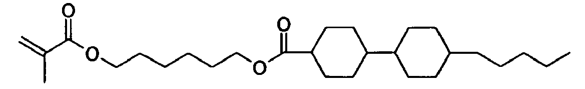 | RM-53 |
| 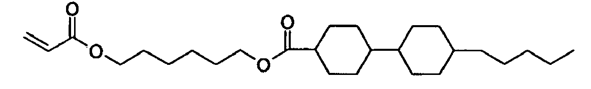 | RM-54 |
| 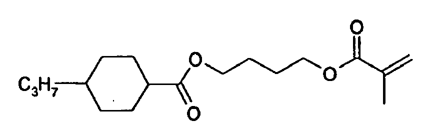 | RM-55 |
| 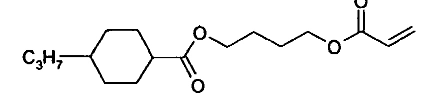 | RM-56 |
| 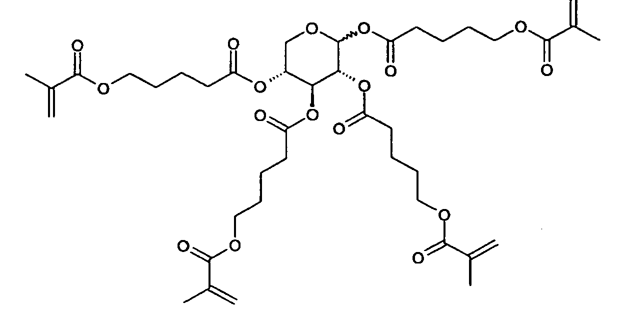 | RM-57 |
| 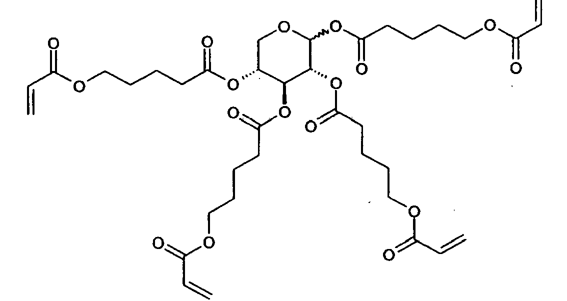 | RM-58 |
| 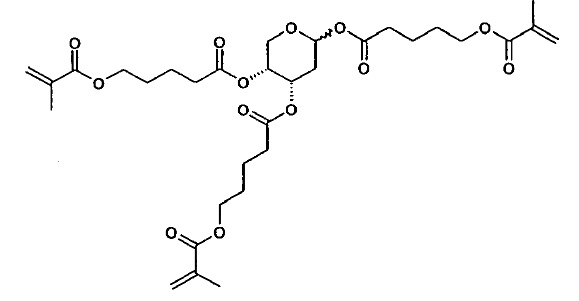 | RM-59 |
| 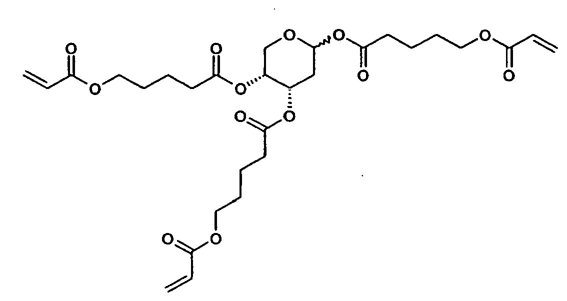 | RM-60 |
| 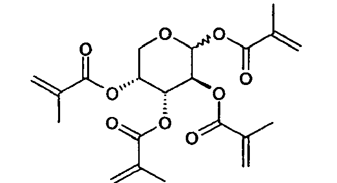 | RM-61 |
| 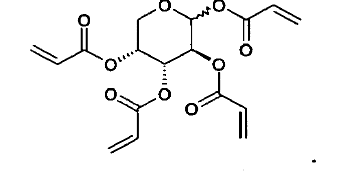 | RM-62 |

In a preferred embodiment the mixtures according to the instant application contain at least one RM selected from the group RM-1 to RM-62.

The following symbols are used in the present application:
- V₀: threshold voltage, capacitive [V] at 20°C,
- nₑ: extraordinary refractive index measured at 20°C and 589 nm,
- no: ordinary refractive index measured at 20°C and 589 nm,
- Δn: optical anisotropy measured at 20°C and 589 nm,
- ε⊥: dielectric susceptibility perpendicular to the director at 20°C and 1 kHz,
- εII: dielectric susceptibility parallel to the director at 20°C and 1 kHz,
- Δε: dielectric anisotropy at 20°C and 1 kHz, (Δε = ε_{∥}-ε_{⊥} ε_{⊥}, where ε_{∥} denotes the dielectric constant parallel to the longitudinal molecular axes and ε_{⊥} denotes the dielectric constant perpendicular thereto),
- γ₁: rotational viscosity measured at 20°C [mPa·s],
- K₁: elastic constant, "splay" deformation at 20°C [pN],
- K₂: elastic constant, "twist" deformation at 20°C [pN],
- K₃: elastic constant, "bend" deformation at 20°C [pN],
- LTS: low-temperature stability (phase stability) determined in test cells,
- V₁₀: voltage for 10% transmission (viewing angle perpendicular to the plate surface).

The electro-optical data are measured in a TN cell at the 1st minimum (i.e. at at. Δn value of 0.5 µm) at 20°C, unless expressly stated otherwise.

The following example explains the present invention without limiting it.

### Mixture Examples

### Example M1

| | | | |
|---|---|---|---|
| APUQU-2-F | 3.00 % | Clearing point [°C]: | +93.7 |
| APUQU-3-F | 6.00 % | Δn [589nm, 20°C]; | +0.0942 |
| PUQU-3-F | 15.00 % | Δε [kHz, 20°C]: | + 7.6 |
| CCGU-3F | 3.50 % | γ₁ [20 °C; mPa·s]: | 96 |
| CC-3-V | 28.00 % | | |
| CC-3-V1 | 3.50 % | | |
| CCP-V-1 | 5.00 % | | |
| CCP-V2-1 | 10.00 % | | |
| ECCP-3F.F | 10.00 % | | |
| ECCP-3F | 6.00 % | | |
| ECCP-3OCF₃ | 3.00 % | | |
| ECCP-31 | 7.00 % | | |

### Example M2

| | | | |
|---|---|---|---|
| PUQU-3-F | 14.00 % | Clearing point [°C]: | +86.4 |
| APUQU-3-F | 3.50 % | Δn [589 nm, 25°C]: | +0.1048 |
| PGUQU-3-F | 3.00 % | Δε [kHz, 20°C]: | +6.5 |
| CCGU-3F | 6.00 % | γ₁ [20 °C; mPa·s]: | 99 |
| CC-4-V | 15.00 % | V₀[V, 20°C]: | 1.58 |
| CC-3-V1 | 8.00 % | | |
| PP-1-2V1 | 5.00 % | | |
| CCP-V-1 | 13.00 % | | |
| CCP-V2-1 | 12.00 % | | |
| CPGP-5-2 | 0.50 % | | |
| PCH-302 | 12.00 % | | |
| ECCP-3F.F | 8.00 % | | |

### Example M3

| | | | |
|---|---|---|---|
| PUQU-3-F | 15.00 % | Clearing point [°C]: | +86.3 |
| APUQU-3-F | 3.50 % | Δn [589nm,25°C]: | +0.1096 |
| PGUQU-3-F | 4.00 % | Δε [kHz, 20°C]: | +6.4 |
| CCGU-3F | 1.50 % | γ₁[20 °C; mPa·s]: | 99 |
| CC-4-V | 15.00 % | V₀ [V, 20°C]: | 1.58 |
| CC-3-V1 | 8.00 % | | |
| PP-1-2V1 | 5.00 % | | |
| CCP-V-1 | 12.00 % | | |
| CCP-V2-1 | 12.00 % | | |
| CPGP-5-2 | 4.00 % | | |
| PCH-302 | 12.00 % | | |
| ECCP-3F.F | 8.00 % | | |

### Example M4

| | | | |
|---|---|---|---|
| APUQU-2-F | 4.00 % | Clearing point [°C]: | +94.3 |
| APUQU-3-F | 7.00 % | Δn [589 nm, 20°C]: | +0.0923 |
| PUQU-3-F | 12.00 % | Δε [kHz, 20°C]: | + 7.8 |
| CCGU-3-F | 4.00 % | γ₁ [20°C, mPa·s]: | 100 |
| CCQU-3-F | 4.00 % | V₀ [V, 20°C]: | 1.50 |
| CC-3-V | 28.50 % | | |
| CC-3-V1 | 7.00 % | | |
| CCP-V2-1 | 13.50 % | | |
| ECCP-3F.F | 12.00 % | | |
| ECCP-31 | 8.00 % | | |

### Example M5

| | | | |
|---|---|---|---|
| CC-3-V | 22.00 % | Clearing point [°C]: | +96.9 |
| PUQU-3-F | 18.00 % | Δn [589 nm, 20°C): | +0.1186 |
| APUQU-2-F | 5.00 % | Δε- [kHz, 20°C]: | + 11.8 |
| APUQU-3-F | 6.50 % | γ₁[20°C, mPa·s]: | 135 |
| PGUQU-3-F | 4.00 % | V₀[V, 20°C]: | 1.19 |
| CPGP-5-2 | 2.50 % | LTS [Bulk, -30°C]: | > 1000 h |
| PGP-2-3 | 5.00 % | | |
| CCP-V-1 | 6.00 % | | |
| CCP-V2-1 | 12.00 % | | |
| ECCP-5F.F | 16.00 % | | |
| CCGU-3-F | 3.00 % | | |

### Example M6

| | | | |
|---|---|---|---|
| CC-3-V | 25.00 % | Clearing point [°C]: | +94.7 |
| PUQU-3-F | 17.50 % | Δn[589 nm, 20°C]: | +0.1079 |
| APUQU-2-F | 5.00 % | Δε[kHz, 20°C]: | + 11.2 |
| APUQU-3-F | 5.00 % | γ₁[20°C, mPa·s]: | 124 |
| PGUQU-3-F | 4.00 % | V₀[V, 20°C]: | 1.17 |
| CPGP-5-2 | 2.50 % | LTS [Bulk, -30°C]: | > 1000 h |
| CCP-V-1 | 16.00 % | | |
| CCP-V2-1 | 3.00 % | | |
| ECCP-5F.F | 15.00 % | | |
| CCGU-3-F | 5.00 % | | |
| CCQU-3-F | 2.00 % | | |

### Example M7

| | | | |
|---|---|---|---|
| CC-3-V | 22.00 % | Clearing point [°C]: | +88.8 |
| CC-3-V1 | 6.50 % | Δn[589 nm, 20°C]: | +0.0972 |
| PUQU-3-F | 15.00 % | Δε[kHz, 20°C]: | + 11.0 |
| APUQU-2-F | 5.50 % | γ₁[20°C, mPa·s]: | 103 |
| APUQU-3-F | 7.00% | V₀[V, 20°C]: | 1.18 |
| PGUQU-3-F | 2.50 % | | |
| CCP-V-1 | 4.50 % | | |
| CCP-V2-1 | 12.00 % | | |
| CCQU-3-F | 11.00 % | | |
| ECCP-3F.F | 7.00 % | | |
| ECCP-5F.F | 7.00 % | | |

### Example M8

| | | | |
|---|---|---|---|
| CC-3-V | 20.50 % | Clearing point [°C]: | +88.1 |
| CC-3-V1 | 7.00 % | Δn[589 nm, 20°C]: | +0.0955 |
| PUQU-3-F | 16.00 % | Δε[kHz, 20°C]: | + 10.8 |
| APUQU-2-F | 5.00 % | γ₁[20°C, mPa·s]: | 99 |
| APUQU-3-F | 5.50 % | | |
| PGUQU-3-F | 2.00 % | | |
| CCP-V-1 | 10.00 % | | |
| CCP-V2-1 | 7.00 % | | |
| CCQU-3-F | 8.00 % | | |
| CCQU-5-F | 8.00 % | | |
| ECCP-5F.F | 11.00 % | | |

### Example M9

| | | | |
|---|---|---|---|
| PUQU-3-F | 12.50 % | Clearing point [°C]: | +88.0 |
| APUQU-3-F | 3.00 % | Δε[kHz, 20°C]: | + 6.6 |
| PGUQU-3-F | 5.00 % | γ₁[20°C, mPa·s]: | 99 |
| CCGU-3-F | 6.00 % | V₀[V, 20°C]: | 1.58 |
| CC-4-V | 15.00 % | | |
| CC-3-V1 | 8.00 % | | |
| PP-1-2V1 | 5.00 % | | |
| CCP-V-1 | 13.00 % | | |
| CCP-V2-1 | 12.00 % | | |
| CPGP-5-2 | 0.50 % | | |
| PCH-302 | 12.00 % | | |
| ECCP-3F.F | 8.00 % | | |

### Example M10

| | | | |
|---|---|---|---|
| PGUQU-3-F | 6.00 % | Clearing point [°C]: | +93.8 |
| APUQU-3-F | 2.00 % | Δn [589 nm, 20°C]: | 0,0882 |
| PUQU-3-F | 4.00 % | Δε [kHz, 20°C]: | + 4.3 |
| CCGU-3-F | 6.00 % | γ₁[20°C, mPa·s]: | 82 |
| CC-3-V | 40.00 % | V₀ [V, 20°C]: | 2.01 |
| CC-3-V1 | 8.00 % | | |
| PP-1-2V1 | 2.00 % | | |
| CCP-V-1 | 3.50 % | | |
| CCP-V2-1 | 14.00 % | | |
| ECCP-3F.F | 10.00 % | | |
| PPGU-3-F | 0.50 % | | |
| CCOC-3-5 | 4.00 % | | |

### Example M11

| | | | |
|---|---|---|---|
| CCQU-2-F | 12.00 % | Clearing point [°C]: | +122.1 |
| CCQU-3-F | 12.00 % | Δn [589 nm, 20°C]: | 0.1001 |
| CCQU-5-F | 10.00 % | Δε [kHz, 20°C]: | + 14.4 |
| APUQU-2-F | 5.50 % | | |
| APUQU-3-F | 6.00 % | | |
| PGUQU-3-F | 6.00 % | | |
| CCP-4OCF₃ | 6.00 % | | |
| ECCP-3F.F | 8.00 % | | |
| ECCP-5F.F | 16.00 % | | |
| CCP-3OCF₃.F | 12.00 % | | |
| CCH-35 | 1.50 % | | |
| CBC-33 | 5.00 % | | |

### Example M12

| | | | |
|---|---|---|---|
| CCQU-2-F | 12.00 % | Clearing point [°C]: | +120.8 |
| CCQU-3-F | 12.00 % | Δn[589 nm, 20°C]: | 0.0948 |
| CCQU-5-F | 10.00 % | Δε [kHz, 20°C]: | + 13.4 |
| APUQU-2-F | 5.50 % | | |
| APUQU-3-F | 6.00 % | | |
| PGUQU-3-F | 3.00 % | | |
| CCP-4OCF₃ | 4.00 % | | |
| CCGU-3-F | 2.00 % | | |
| ECCP-3F.F | 12.00 % | | |
| ECCP-5F.F | 15.00 % | | |
| CCP-3OCF₃.F | 12.00 % | | |
| CCH-35 | 2.50 % | | |
| CBC-33 | 4.00 % | | |

### Example M13

| | | | |
|---|---|---|---|
| APUQU-3-F | 5.00 % | Clearing point [°C]: | + 94.6 |
| PGUQU-3-F | 7.00 % | Δn [589 nm, 20°C]: | 0.0913 |
| CCGU-3-F | 3.50 % | Δε [kHz, 20°C]: | + 4.4 |
| CC-3-V | 42.00 % | γ₁ [20°C, mPa·s]: | 77 |
| CC-3-V1 | 7.00 % | V₀ [V, 20°C]: | 2.00 |
| PGP-2-3 | 3.00 % | | |
| CCP-V-1 | 5.00 % | | |
| CCP-V2-1 | 12.00 % | | |
| ECCP-3F.F | 15.00 % | | |
| PPGU-3-F | 0.50 % | | |

### Example M14

| | | | |
|---|---|---|---|
| CC-3-V | 18.00 % | Clearing point [°C]: | + 91.2 |
| PUQU-3-F | 8.00 % | Δn [589 nm,20°C]: | 0.1217 |
| APUQU-2-F | 7.00 % | Δε [kHz, 20°C]: | + 11.8 |
| APUQU-3-F | 7.00 % | γ₁ [20°C, mPa·s]: | 127 |
| CPU-3-OXF | 17.00 % | V₀ [V, 20°C]: | 1.20 |
| CCQU-3-F | 4.00 % | | |
| ECCP-3F.F | 11.00 % | | |
| ECCP-5-F.F | 18.00 % | | |
| PGP-2-3 | 5.00 % | | |
| PGP-2-4 | 5.00 % | | |

### Example M15

| | | | |
|---|---|---|---|
| APUQU-2-F | 5.00 % | Clearing point [°C]: | + 100.5 |
| APUQU-3-F | 5.00 % | Δn [589 nm, 20°C]: | 0.0860 |
| CC-3-V | 16.50 % | Δε [kHz, 20°C]: | + 10.1 |
| CC-3-V1 | 8.00 % | γ₁ [20°C, mPa·s]: | 133 |
| CCG-V-F | 5.00 % | V₀ [V, 20°C]: | 1.21 |
| CCGU-3-F | 5.00 % | | |
| CCP-3OCF₃.F | 8.00 % | | |
| CCP-5OCF₃.F | 8.00 % | | |
| CCQU-3-F | 8.00 % | | |
| CCZU-3-F | 12.00 % | | |
| CCZU-5-F | 4.00 % | | |
| ECCP-3F.F | 12.00 % | | |
| PUQU-3-F | 3.50 % | | |

### Example M16

| | | | |
|---|---|---|---|
| APUQU-2-F | 4.00 % | Clearing point [°C]: | + 101.2 |
| APUQU-3-F | 5.50 % | Δn [589nm, 20°C]: | 0.0867 |
| CC-3-V | 16.00 % | Δε [kHz, 20°C]: | + 10.2 |
| CC-3-V1 | 10.00 % | γ₁ [20°C, mPa·s]: | 141 |
| CCGU-3-F | 6.00 % | V₀ [V, 20°C]: | 1.21 |
| CCP-3OCF₃.F | 8.00 % | | |
| CCP-5OCF₃.F | 8.00 % | | |
| CCQU-3-F | 8.00 % | | |
| CCQU-5-F | 4.50 % | | |
| CCZU-3-F | 13.00 % | | |
| ECCP-3F.F | 13.00 % | | |
| PUQU-3-F | 4.00 % | | |

### Example M 17

| | | | |
|---|---|---|---|
| CC-3-V | 21.00 % | Clearing point [°C]: | + 88.4 |
| CC-3-V1 | 7.00 % | Δn [589 nm, 20°C]: | 0.0948 |
| PUQU-3-F | 16.50 % | Δε [kHz, 20°C]: | + 10.8 |
| APUQU-2-F | 6.00 % | V₀ [V, 20°C]: | 1.19 |
| APUQU-3-F | 7.50 % | | |
| CCP-V1 | 4.00 % | | |
| CCP-V2-1 | 12.00 % | | |
| CCQU-3-F | 9.50 % | | |
| ECCP-5F.F | 16.50 % | | |

### Example M18

| | | | |
|---|---|---|---|
| APUQU-2-F | 6.00 % | Clearing point [°C]: | + 105.4 |
| APUQU-3-F | 6.00 % | Δn [589nm, 20°C]: | 0.0847 |
| CC-3-V | 24.00 % | Δε [kHz, 20°C]: | + 8.5 |
| CC-3-V1 | 8.00 % | γ₁ [20°C, mPa·s]: | 116 |
| CCGU-3-F | 6.00 % | V₀ [V, 20°C]: | 1.39 |
| CCP-3OCF₃.F | 8.00 % | | |
| CCP-V2-1 | 6.00 % | | |
| CCPC-33 | 1.00 % | | |
| CCQU-3-F | 8.00 % | | |
| CCQU-5-F | 6.00 % | | |
| CCZU-3-F | 13.00 % | | |
| ECCP-3F.F | 6.00 % | | |
| ECCP-5F.F | 2.00 % | | |

### Example M19

| | | | |
|---|---|---|---|
| APUQU-2-F | 6.00 % | Clearing point [°C]: | + 101.1 |
| APUQU-3-F | 8.00 % | Δn [589 nm, 20°C]: | 0.0835 |
| CC-3-V | 24.00 % | Δε [kHz, 20°C]: | + 9.9 |
| CC-3-V1 | 8.00 % | γ₁ [20°C, mPa·s]: | 127 |
| CCGU-3-F | 6.00 % | V₀ [V, 20°C]: | 1.28 |
| CCP-3OCF₃.F | 8.00 % | | |
| CCPC-33 | 1.00 % | | |
| CCQU-3-F | 8.00 % | | |
| CCQU-5-F | 6.00 % | | |
| CCZU-3-F | 13.00 % | | |
| ECCP-3F.F | 12.00 % | | |

### Example M20

| | | | |
|---|---|---|---|
| ECCP-3F.F | 8.00 % | Clearing point [°C]: | + 110.7 |
| BCH-2F.F | 4.00 % | Δn [589 nm, 20°C]: | 0.1000 |
| BCH-3F.F | 8.00 % | Δε [kHz, 20°C]: | + 5.1 |
| APUQU-3-F | 4.50 % | γ₁ [20°C, mPa·s]: | 155 |
| CCP-2F.F.F | 2.00 % | LTS [Bulk, -40°C]: | > 1000 h |
| CCP-3F.F.F | 10.00 % | | |
| CCG-V-F | 8.00 % | | |
| CC-4-V | 11.50 % | | |
| CCP-V-1 | 12.50 % | | |
| CCP-3-1 | 5.00 % | | |
| CBC-33F | 3.00 % | | |
| CBC-53F | 2.50 % | | |
| CBC-33 | 3.00 % | | |
| PCH-301 | 10.00 % | | |
| CCQU-3-F | 8.00 % | | |

### Example M21

| | | | |
|---|---|---|---|
| ECCP-3F.F | 7.00 % | Clearing point [°C]: | + 110.6 |
| BCH-2F.F | 4.50 % | Δn [589 nm, 20°C]: | 0.0993 |
| BCH-3F.F | 9.00 % | Δε [kHz, 20°C]: | + 5.3 |
| APUQU-3-F | 5.50 % | γ₁ [20°C, mPa·s]: | 140 |
| CCP-3F.F.F | 10.00 % | V₀ [V, 20°C]: | 1.75 |
| CCG-V-F | 8.50 % | LTS [Bulk, -40°C]: | > 1000 h |
| CC-3-V1 | 4.50 % | | |
| CC-4-V | 10.50 % | | |
| CCP-V-1 | 14.00 % | | |
| CCP-V2-1 | 9.00 % | | |
| CBC-33 | 2.50 % | | |
| CBC-33F | 1.00 % | | |
| PCH-301 | 6.00 % | | |
| CCQU-3-F | 8.00 % | | |

### Example M22

| | | | |
|---|---|---|---|
| ECCP-3F.F | 6.00 % | Clearing point [°C]: | + 100.4 |
| BCH-2F.F | 7.00 % | Δn [589 nm, 20°C]: | 0.0998 |
| BCH-3F.F | 8.00 % | Δε [kHz, 20°C]: | + 5.4 |
| APUQU-2-F | 3.50 % | γ₁ [20°C, mPa·s]: | 113 |
| APUQU-3-F | 6.00 % | | |
| CGU-3-F | 3.50 % | | |
| CCP-3F.F.F | 5.00 % | | |
| CCG-V-F | 8.00 % | | |
| CC-3-V-1 | 6.00 % | | |
| CC-4-V | 12.00 % | | |
| CC-5-V | 5.00 % | | |
| CCP-V-1 | 12.00 % | | |
| CCP-V2-1 | 12.00 % | | |
| CBC-33F | 1.00 % | | |
| PCH-301 | 5.00 % | | |

### Example M23

| | | | |
|---|---|---|---|
| CCP-3F.F.F | 10.00 % | Clearing point [°C]: | + 100.7 |
| CC-3-V | 10.00 % | Δn [589 nm, 20°C]: | 0.0757 |
| CC-3-V1 | 8.00 % | Δε [kHz, 20°C]: | + 8.8 |
| CCP-3OCF₃.F | 8.00 % | γ₁ [20°C, mPa·s]: | 136 |
| CCQU-2-F | 4.50 % | V₀ [V, 20°C]: | 1.25 |
| CCQU-3-F | 8.00 % | | |
| CCQU-5-F | 8.00 % | | |
| CCZU-2-F | 4.00 % | | |
| CCZU-3-F | 12.00 % | | |
| CCZU-5-F | 4.00 % | | |
| ECCP-3F.F | 13.00 % | | |
| CCG-V-F | 5.00 % | | |
| CCP-V2-1 | 2.00 % | | |
| APUQU-3-F | 3.50 % | | |

### Example M24

| | | | |
|---|---|---|---|
| CCP-3F.F.F | 10.00 % | Clearing point [°C]: | + 101.1 |
| CC-3-V | 10.50 % | Δn [589 nm, 20°C]: | 0.0753 |
| CC-3-V1 | 8.00 % | Δε [kHz, 20°C]: | + 9.0 |
| CCP-3OCF₃.F | 8.00 % | γ₁ [20°C, mPa·s]: | 137 |
| CCQU-2-F | 8.00 % | V₀ [V, 20°C]: | 1.25 |
| CCQU-3-F | 8.00 % | | |
| CCQU-5-F | 8.00 % | | |
| CCZU-2-F | 4.00 % | | |
| CCZU-3-F | 12.00 % | | |
| CCZU-5-F | 4.00 % | | |
| ECCP-3F.F | 13.00 % | | |
| CCP-V2-1 | 2.50 % | | |
| APUQU-3-F | 3.50 % | | |
| CCPC-33 | 0.50 % | | |

### Example M25

| | | | |
|---|---|---|---|
| CCP-2F.F.F | 7.00 % | Clearing point [°C]: | +91.4 |
| CCP-3F.F.F | 11.00 % | Δn [589 nm, 20°C]: | +0.0999 |
| CCP-5F.F.F | 5.00 % | Δε [kHz, 20°C]: | + 8.5 |
| ECCP-5F.F | 10.00 % | | |
| BCH-3F.F.F | 15.00 % | | |
| CC-5-V | 9.00 % | | |
| CC-3-V1 | 6.00 % | | |
| CCP-V-1 | 10.00 % | | |
| CCP-V2-1 | 7.00 % | | |
| CBC-33F | 3.00 % | | |
| PUQU-3-F | 6.00 % | | |
| CGU-2-F | 4.00 % | | |
| CGU-3-F | 7.00 % | | |

### Example M26

| | | | |
|---|---|---|---|
| CCP-2F.F.F | 9.00 % | Clearing point [°C]: | +90.5 |
| CCP-3F.F.F | 11.00 % | Δn [589 nm, 20°C]: | +0.0996 |
| CCP-5F.F.F | 5.00 % | Δε [kHz, 20°C]: | +8.6 |
| ECCP-5F.F | 9.00 % | | |
| BCH-3F.F.F | 15.00 % | | |
| CC-5-V | 8.00 % | | |
| CC-3-V1 | 6.00 % | | |
| CCP-V-1 | 10.00 % | | |
| CCP-V2-1 | 7.00 % | | |
| CBC-33F | 3.00 % | | |
| PUQU-3-F | 6.00 % | | |
| CGU-2-F | 4.00 % | | |
| CGU-3-F | 7.00 % | | |

### Example M27

| | | | |
|---|---|---|---|
| CCP-2F.F.F | 7.00 % | Clearing point [°C]: | +91.4 |
| CCP-3F.F.F | 11.00 % | Δn [589 nm, 20°C]: | +0.0995 |
| CCP-5F.F.F | 5.00 % | Δε [kHz, 20°C]: | + 8.5 |
| CCP-2OCF₃ | 3.00 % | γ₁ [20 °C; mPa·s]: | 130 |
| CCP-3OCF₃ | 3.00 % | | |
| BCH-3F.F | 2.00 % | | |
| ECCP-5F.F | 5.00 % | | |
| BCH-3F.F.F | 10.00 % | | |
| CC-5-V | 9.00 % | | |
| CC-3-V1 | 6.00 % | | |
| CCP-V-1 | 10.00 % | | |
| CCP-V2-1 | 7.00 % | | |
| CBC-33F | 3.00 % | | |
| PUQU-3-F | 7.00 % | | |
| CGU-2-F | 5.00 % | | |
| CGU-3-F | 7.00 % | | |

### Example M28

| | | | |
|---|---|---|---|
| CCP-2F.F.F | 8.00 % | Clearing point [°C]: | +90.4 |
| CCP-3F.F.F | 11.00 % | Δn [589 nm, 20°C]: | +0.1004 |
| CCP-5F.F.F | 5.00 % | Δε [kHz, 20°C]: | + 8.7 |
| CCP-2OCF₃ | 3.00 % | γ₁ [20°C; mPa.s]: | 131 |
| CCP-3OCF₃ | 2.00 % | | |
| BCH-3F.F | 3.00 % | | |
| ECCP-5F.F | 5.00 % | | |
| BCH-3F.F.F | 10.00 % | | |
| CC-5-V | 8.00 % | | |
| CC-3-V1 | 6.00 % | | |
| CCP-V-1 | 10.00 % | | |
| CCP-V2-1 | 7.00 % | | |
| CBC-33F | 3.00 % | | |
| PUQU-3-F | 7.00 % | | |
| CGU-2-F | 5.00 % | | |
| CGU-3-F | 7.00 % | | |

### Example M29

| | | | |
|---|---|---|---|
| CCP-2F.F.F | 10.00 % | Clearing point [°C]: | +90.4 |
| CCP-3F.F.F | 11.00 % | Δn [589 nm, 20°C]: | +0.0997 |
| CCP-5F.F.F | 5.00 % | Δε [kHz, 20°C]: | + 8.6 |
| CCP-2OCF₃ | 2.00 % | | |
| CCP-3OCF₃ | 2.00 % | | |
| BCH-3F.F | 3.00 % | | |
| ECCP-5F.F | 4.00 % | | |
| BCH-3F.F.F | 9.00 % | | |
| CC-5-V | 9.00 % | | |
| CC-3-V1 | 6.00 % | | |
| CCP-V-1 | 10.00 % | | |
| CCP-V2-1 | 6.00 % | | |
| CBC-33F | 4.00 % | | |
| PUQU-3-F | 7.00 % | | |
| CGU-2-F | 5.00 % | | |
| CGU-3-F | 7.00 % | | |

### Example M30

| | | | |
|---|---|---|---|
| CCP-2F.F.F | 4.95 % | Clearing point [°C]: | +91 |
| CCP-3F.F.F | 7.80 % | Δn [589 nm, 20°C]: | +0.1026 |
| CCP-5F.F.F | 1.75 % | Δε [kHz, 20°C]: | + 7.3 |
| BCH-3F.F | 3.85 % | γ₁ [20 °C; mPa·s]: | 165 |
| BCH-5.F.F | 10.00 % | LTS [Bulk, -30 °C]: | > 1000 h |
| BCH-3F.F.F | 13.05 % | | |
| PUQU-2-F | 1.75 % | | |
| CC-3-V1 | 1.40 % | | |
| CC-5-V | 3.85 % | | |
| CCP-V-1 | 4.20 % | | |
| CCP-V2-1 | 1.75 % | | |
| CCH-34 | 2.10 % | | |
| CCP-1F.F.F | 5.20 % | | |
| BCH-2F.F | 3.90 % | | |
| ECCP-3F.F | 10.40 % | | |
| ECCP-5F.F | 10.40 % | | |
| CBC-33F | 1.95 % | | |
| CBC-53F | 1.95 % | | |
| CCGU-3-F | 3.25 % | | |
| PCH-53 | 6.50 % | | |

### Example M31

| | | | |
|---|---|---|---|
| CCP-2F.F.F | 7.50 % | Clearing point [°C]: | +80.2 |
| CCP-3F.F.F | 10.00 % | Δn [589 nm, 20°C]: | +0.0897 |
| PGU-3-F | 4.50 % | Δε [kHz, 20°C]: | + 7.6 |
| PUQU-2-F | 7.00 % | γ₁ [20 °C; mPa·s]: | 76 |
| PUQU-3-F | 7.00 % | V₁₀ [V, 20°C]: | 1.50 |
| CCP-V-1 | 2.00 % | | |
| CCP-V2-1 | 12.00 % | | |
| CC-3-V | 22.00 % | | |
| CC-4-V | 11.00 % | | |
| CC-3-V1 | 2.00 % | | |
| CCGU-3-F | 8.00 % | | |
| ECCP-3F.F | 7.00 % | | |

### Example M32

| | | | |
|---|---|---|---|
| PCH-53 | 9.00 % | Clearing point [°C]: | +82.7 |
| CCP-2F.F.F | 10.00 % | Δn [589 nm, 20°C]: | +0.0811 |
| CCP-3F.F.F | 10.00 % | Δε [kHz,20°C]: | + 9.2 |
| CCP-5F.F.F | 4.00 % | γ₁ [20 °C; mPa·s]: | 146 |
| ECCP-3F.F | 14.00 % | | |
| ECCP-5F.F | 14.00 % | | |
| CCQU-2-F | 8.00 % | | |
| CCQU-3-F | 8.00 % | | |
| CCQU-5-F | 8.00 % | | |
| PUQU-2-F | 8.00 % | | |
| CCP-V-1 | 7.00 % | | |

### Example M33

| | | | |
|---|---|---|---|
| BCH-2F.F | 1.35 % | Clearing point [°C]: | +93.2 |
| BCH-3F.F | 2.40 % | Δn [589 nm, 20°C]: | +0.1030 |
| BCH-3F.F.F | 7.00 % | Δε [kHz, 20°C]: | + 8.7 |
| CBC-33F | 2.10 % | γ₁ [20 °C; mPa·s]: | 138 |
| CC-3-V1 | 5.40 % | V₀ [V, 20°C]: | 1.24 |
| CC-5-V | 7.10 % | LTS [Bulk, -40 °C]: | > 1000 h |
| CCG-V-F | 1.95 % | | |
| CCGU-3-F | 1.20 % | | |
| CCP-2OCF₃ | 3.75 % | | |
| CCP-2F.F.F | 7.62 % | | |
| CCP-3OCF₃ | 3.05 % | | |
| CCP-3F.F.F | 8.75 % | | |
| CCP-4OCF₃ | 1.65 % | | |
| CCP-5OCF₃ | 1.13 % | | |
| CCP-5F.F.F | 3.50 % | | |
| CCP-V-1 | 11.05 % | | |
| CCP-V2-1 | 6.70 % | | |
| CGU-2-F | 6.65 % | | |
| CGU-3-F | 5.95 % | | |
| ECCP-5F.F | 3.50 % | | |
| PGU-2-F | 2.10 % | | |
| PGU-3-F | 1.20 % | | |
| PUQU-3-F | 4.90 % | | |

### Example M34

| | | | |
|---|---|---|---|
| BCH-3F.F | 5.40 % | Clearing point [°C]: | +102.4 |
| BCH-3F.F.F | 2.00 % | Δn [589 nm, 20°C]: | +0.1035 |
| CBC-33 | 2.40 % | Δε [kHz, 20°C]: | + 8.0 |
| CBC-33F | 3.00 % | LTS [Bulk, -30 °C]: | > 1000 h |
| CBC-53F | 2.40 % | | |
| CC-3-V1 | 7.20 % | | |
| CC-5-V | 12.80 % | | |
| CCP-2OCF₃ | 0.60 % | | |
| CCP-2F.F.F | 1.60 % | | |
| CCP-3OCF₃ | 0.40 % | | |
| CCP-3F.F.F | 2.20 % | | |
| CCP-5F.F.F | 1.00 % | | |
| CCP-V-1 | 11.60 % | | |
| CCP-V2-1 | 9.40 % | | |
| CCQU-2-F | 6.00 % | | |
| CCQU-5-F | 8.80 % | | |
| CGU-2-F | 1.00 % | | |
| CGU-3-F | 8.60 % | | |
| ECCP-5F.F | 1.00 % | | |
| PUQU-2-F | 3.20 % | | |
| PUQU-3-F | 9.40 % | | |

### Example M35

| | | | |
|---|---|---|---|
| BCH-2F.F | 10.00 % | Clearing point [°C]: | +95.3 |
| CCP-3F.F.F | 10.00 % | Δn [589 nm, 20°C]: | +0.0923 |
| CCG-V-F | 12.00 % | Δε [kHz, 20°C]: | + 5.7 |
| ECCP-3F.F | 15.00 % | γ₁ [20 °C; mPa·s]: | 113 |
| ECCP-5F.F | 7.00 % | LTS [Bulk, -30 °C]: | > 1000 h |
| CC-3-V1 | 9.00 % | | |
| CC-4-V | 11.00 % | | |
| CCP-V-1 | 12.00 % | | |
| CCP-V2-1 | 4.00 % | | |
| PUQU-3-F | 6.00 % | | |
| BCH-3F.F.F | 4.00 % | | |

### Example M36

| | | | |
|---|---|---|---|
| BCH-2F.F | 12.00 % | Clearing point [°C]: | +95.6 |
| CCP-3F.F.F | 12.00 % | Δn [589nm, 20°C]: | +0.0919 |
| CCG-V-F | 12.00 % | Δε [kHz, 20°C]: | + 5.5 |
| ECCP-3F.F | 15.00 % | | |
| ECCP-5F.F | 7.00 % | | |
| CC-3-V1 | 8.00 % | | |
| CC-4-V | 11.50 % | | |
| CCP-V-1 | 12.50 % | | |
| CCP-V2-1 | 1.50 % | | |
| PUQU-3-F | 6.00 % | | |
| BCH-32 | 2.50 % | | |

### Example M37

| | | | |
|---|---|---|---|
| CCP-1 F.F.F | 5.00 % | Clearing point [°C]: | +100.5 |
| CCP-2F.F.F | 5.00 % | Δn [589 nm, 20°C]: | +0.1003 |
| CCP-3F.F.F | 8.00 % | Δε [kHz, 20°C]: | +5.3 |
| ECCP-3F.F | 6.00 % | γ₁ [20 °C; mPa·s]: | 118 |
| PUQU-3-F | 9.50 % | V₀ [V, 20°C]: | 1.72 |
| CCG-V-F | 4.00 % | | |
| CC-3-V1 | 7.00 % | | |
| CC-4-V | 13.00 % | | |
| CC-5-V | 11.00 % | | |
| CCP-V-1 | 14.00 % | | |
| CCP-V2-1 | 3.00 % | | |
| CPGP-5-2 | 4.00 % | | |
| CPGP-5-3 | 4.00 % | | |
| CPGP-4-3 | 3.50 % | | |
| CGU-2-F | 3.00 % | | |

### Example M38

| | | | |
|---|---|---|---|
| CCP-3F.F.F | 10.00 % | Clearing point [°C]: | +86.1 |
| CCP-2OCF₃ | 7.00 % | Δn [589 nm, 20°C]: | +0.1018 |
| ECCP-3F.F | 15.00 % | Δε [kHz, 20°C]: | +9.1 |
| BCH-2F.F | 10.00 % | γ₁ [20 °C; mPa·s]: | 146 |
| BCH-3F.F.F | 14.00 % | V₀ [V, 20°C]: | |
| CCQU-3-F | 6.00 % | LTS [Bulk, -30 °C]: | > 1000 h |
| PUQU-3-F | 12.00 % | | |
| CC-5-V | 5.00 % | | |
| CC-3-V1 | 7.00 % | | |
| CCP-V-1 | 14.00 % | | |

### Example M39

| | | | |
|---|---|---|---|
| CCP-2F.F.F | 5.00 % | Clearing point [°C]: | + 85.1 |
| CCP-3F.F.F | 6.00 % | Δn [589 nm, 20°C]: | +0.1005 |
| ECCP-3F.F | 5.00 % | Δε [kHz, 20°C]: | + 7.5 |
| ECCP-5F.F | 2.50 % | γ₁ [20 °C; mPa·s]: | 136 |
| BCH-2F.F | 7.50 % | V₀ [V, 20°C]: | |
| BCH-3F.F | 10.00 % | | |
| BCH-5F.F | 5.00 % | | |
| BCH-5F.F.F | 6.00 % | | |
| CCQU-3-F | 6.50 % | | |
| CCQU-5-F | 4.00 % | | |
| PUQU-3-F | 9.00 % | | |
| CCP-V1 | 11.50 % | | |
| CCP-V2-1 | 2.00 % | | |
| CC-5-V | 9.00 % | | |
| CC-3-V1 | 8.00 % | | |
| PCH-301 | 3.00 % | | |

Example M40

| | | | |
|---|---|---|---|
| CCP-3F.F.F | 12.00 % | Clearing point [°C]: | + 85.9 |
| CCP-20CF₃ | 7.00 % | Δn [589 nm, 20°C]: | +0.1039 |
| ECCP-3F.F | 15.00 % | Δε [kHz, 20°C]: | + 9.5 |
| BCH-2F.F | 10.00 % | γ₁ [20 °C; mPa·s]: | 143 |
| BCH-3F.F.F | 14.00 % | V₀ [V, 20°C]: | |
| CCQU-3-F | 6.00 % | | |
| PUQU-3-F | 13.00 % | | |
| CC-5-V | 2.00 % | | |
| CC-3-V1 | 7.00 % | | |
| CCP-V-1 | 14.00 % | | |

### Example M41

| | | | |
|---|---|---|---|
| CCP-3F.F.F | 13.00 % | Clearing point [°C]: | + 88.2 |
| CCP-2OCF₃ | 7.00 % | Δn [589 nm, 20°C]: | +0.0862 |
| CCP-3OCF₃ | 6.00 % | Δε [kHz,20°C]: | + 11.5 |
| CCP-4OCF₃ | 6.00 % | γ₁ [20 °C; mPa·s]: | 186 |
| ECCP-3F.F | 11.00 % | | |
| ECCP-5F.F | 15.00 % | | |
| CCQU-3-F | 10.00 % | | |
| CCQU-5-F | 9.00 % | | |
| PUQU-3-F | 17.00 % | | |
| CCH-501 | 6.00 % | | |

### Example M42

| | | | |
|---|---|---|---|
| CCP-2F.F.F | 5.00 % | Clearing point [°C]: | + 100 |
| CCP-3F.F.F | 8.00 % | Δn [589 nm, 20°C]: | +0.0996 |
| CCP-5F.F.F | 2.00 % | Δε [kHz, 20°C]: | + 9.6 |
| CCG-V-F | 4.00 % | γ₁ [20 °C; mPa·s]: | 182 |
| CCP-2OCF₃ | 4.00 % | V₀ [V, 20°C]: | 1.21 |
| CCP-3OCF₃ | 3.00 % | | |
| CCP-5OCF₃ | 3.00 % | | |
| ECCP-3F.F | 8.00 % | | |
| ECCP-5F.F | 8.00 % | | |
| BCH-2F.F | 6.00 % | | |
| BCH-3F.F | 5.00 % | | |
| BCH-5F.F | 5.00 % | | |
| CCQU-2-F | 4.00 % | | |
| CCQU-3-F | 5.00 % | | |
| CCQU-5-F | 4.00 % | | |
| PUQU-3-F | 10.00 % | | |
| CCGU-3-F | 2.00 % | | |
| CC-5-V | 4.00 % | | |
| CCP-V-1 | 7.00 % | | |
| CBC-33F | 3.00 % | | |

### Example M43

| | | | |
|---|---|---|---|
| CCP-2F.F.F | 3.00 % | Clearing point [°C]: | + 101.8 |
| CCP-3F.F.F | 10.00 % | Δn[589nm,20°C]: | +0.0854 |
| CCP-5F.F.F | 4.00 % | Δε [kHz, 20°C]: | + 8.8 |
| CCG-V-F | 11.00 % | γ₁ [20 °C; mPa·s]: | 173 |
| CCP-2OCF₃ | 6.50 % | V₀ [V, 20°C]: | 1.32 |
| CCP-3OCF₃ | 3.50 % | LTS [Bulk, -40°C]: | > 1000h |
| ECCP-3F.F | 5.00 % | | |
| ECCP-5F.F | 5.00 % | | |
| CCQU-3-F | 6.00 % | | |
| CCQU-5-F | 6.00 % | | |
| PUQU-3-F | 10.00 % | | |
| CCGU-3-F | 6.00 % | | |
| CCH-303 | 10.50 % | | |
| CC-3-V1 | 3.00 % | | |
| CC-5-V | 3.50 % | | |
| CCP-V-1 | 2.50 % | | |
| CCPC-33 | 3.00 % | | |
| CCPC-34 | 1.50 % | | |

### Example M44

| | | | |
|---|---|---|---|
| CCP-2F.F.F | 10.00 % | Clearing point [°C]: | + 81.6 |
| CCP-3F.F.F | 12.00 % | Δn [589 nm, 20°C]: | +0.0916 |
| ECCP-3F.F | 10.00 % | Δε [kHz, 20°C]: | + 7.7 |
| ECCP-5F.F | 10.00 % | γ₁ [20 °C; mPa·s]: | 113 |
| BCH-2F.F | 5.00 % | | |
| BCH-3F.F | 10.00 % | | |
| CCQU-5-F | 5.00 % | | |
| PUQU-3-F | 10.00 % | | |
| CCP-V-1 | 7.00 % | | |
| CC-5-V | 10.00 % | | |
| CC-3-V1 | 8.00 % | | |
| PCH-301 | 3.00 % | | |

### Example M45

| | | | |
|---|---|---|---|
| CCP-2F.F.F | 10.00 % | Clearing point [°C]: | + 85.7 |
| CCP-3F.F.F | 12.00 % | Δn [589 nm, 20°C]: | +0.0905 |
| ECCP-3F.F | 10.00 % | Δε [kHz, 20°C]: | + 7.5 |
| ECCP-5F.F | 5.00 % | γ₁ [20 °C; mPa·s]: | 117 |
| BCH-2F.F | 5.00 % | LTS [Bulk, -30°C]: | > 1000h |
| BCH-3F.F | 10.00 % | | |
| CCQU-3-F | 8.00 % | | |
| CCQU-5-F | 3.00 % | | |
| PUQU-3-F | 7.00 % | | |
| CCP-V-1 | 10.00 % | | |
| CC-5-V | 9.00 % | | |
| CC-3-V1 | 8.00 % | | |
| PCH-301 | 3.00 % | | |

### Example M46

| | | | |
|---|---|---|---|
| CCP-2F.F.F | 10.00 % | Clearing point [°C]: | + 84.8 |
| CCP-3F.F.F | 12.00 % | Δn [589 nm, 20°C]: | +0.0907 |
| CCP-5F.F.F | 5.00 % | Δε [kHz, 20°C]: | +10.0 |
| ECCP-3F.F | 10.00 % | γ₁, [20 °C; mPa.s]: | 164 |
| ECCP-5F.F | 6.00 % | LTS [Bulk, -30°C]: | > 1000h |
| BCH-2F.F | 10.00 % | | |
| BCH-3F.F | 10.00 % | | |
| CCQU-2-F | 8.00 % | | |
| CCQU-3-F | 8.00 % | | |
| CCQU-5-F | 8.00 % | | |
| PUQU-3-F | 5.00 % | | |
| CCP-V-1 | 3.00 % | | |
| CC-3-V1 | 5.00 % | | |

### Example M47

| | | | |
|---|---|---|---|
| CCP-2F.F.F | 8.00 % | Clearing point [°C]: | + 85 |
| CCP-3F.F.F | 12.00 % | Δn [589 nm, 20°C]: | +0.0978 |
| CCP-5F.F.F | 4.00 % | Δε [kHz, 20°C]: | + 13.9 |
| CCP-3OCF₃ | 7.00 % | γ₁ [20 °C; mPa·s]: | 170 |
| CCP-4OCF₃ | 6.00 % | | |
| ECCP-5F.F | 6.00 % | | |
| CPP-3-F | 4.00 % | | |
| BCH-3F.F | 9.00 % | | |
| CCGU-3-F | 2.00 % | | |
| CCQU-2-F | 9.00 % | | |
| CCQU-3-F | 10.00 % | | |
| PUQU-3-F | 20.00 % | | |
| CCPC-33 | 3.00 % | | |

### Example M48

| | | | |
|---|---|---|---|
| PGUQU-3-F | 8.00 % | Clearing point [°C]: | + 93.3 |
| PUQU-3-F | 4.00 % | Δn [589 nm, 20°C]: | +0.0903 |
| CCGU-3-F | 6.00 % | Δε [kHz, 20°C]: | + 4.4 |
| CC-3-V | 40.00 % | γ₁ [20 °C; mPa·s]: | 81 |
| CC-3-V1 | 7.50 % | V₀ [V, 20°C]: | 1.99 |
| PP-1-2V1 | 2.50 % | | |
| CCP-V-1 | 3.50 % | | |
| CCP-V2-1 | 14.00 % | | |
| ECCP-3F.F | 10.00 % | | |
| PPGU-3-F | 0.50 % | | |
| CCOC-3-5 | 4.00 % | | |

## Claims

1. Liquid crystalline medium **characterized in that** it contains at least one compounds of the formula I 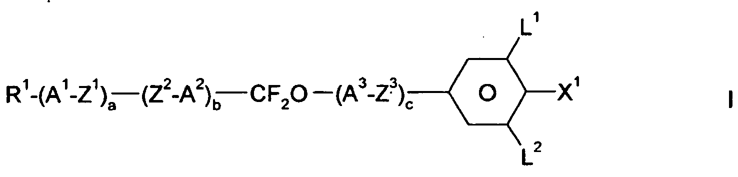 and at least one compound of the formula E 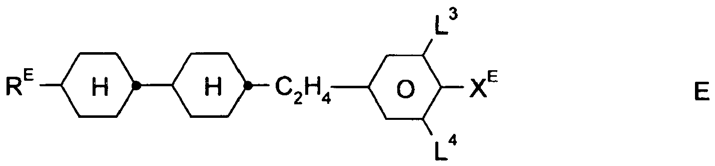 in which
R¹ and R^{E} are each, independently of one another, H, a halogenated or unsubstituted alkyl or alkoxy radical having from 1 to 15 carbon atoms, where, in addition, one or more CH₂ groups in these radicals may each, independently of one another, be replaced by -C≡C-, -CH=CH-, -O-, -CO-O- or -O-CO- in such a way that O atoms are not linked directly to one another,
A¹, A² and A³ are each, independently of one another, 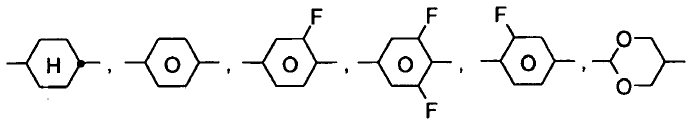 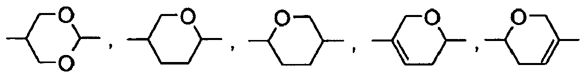 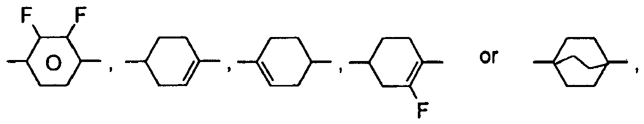
X¹ F, Cl, CN, NCS, OCN, SF₅, fluorinated alkyl with 1 to 5 carbon atoms, fluorinated alkoxy with 1 to 5 carbon atoms, fluorinated alkenyl with 2 to 5 carbon atoms, fluorinated alkenyloxy with 1 to 5 carbon atoms,
X^{E} F, Cl, OCF₃, OCHF₂, OCH=CF₂, OCF=CF₂, OCHFCF₃, OCF₂CFHCF₃, CH₃, C₂H₅, n-C₃H₇,
L¹, L², L³ and L⁴ are each, independently of one another H or F,
Z¹, Z² and Z³ are each, independently of one another, -CO-O-, -O-CO-, -CF₂O-, -OCF₂-, -CH₂O-, -OCH₂-, -CH₂CH₂-, -(CH₂)₄-, -C₂F₄-, -CH₂CF₂-, -CF₂CH₂-, -CF=CF-, -CH=CH-, -C=C- or a single bond, and
a, b and c are each, independently of one another, 0, 1, 2 or 3, where a + b + c is 1, 2, 3 or 4.

2. Liquid-crystalline medium according to claim 1 **characterized in that** it contains at least one compound selected from the group of the formulae 11 to 179, 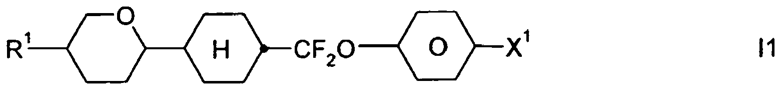 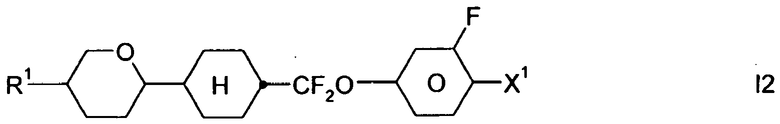 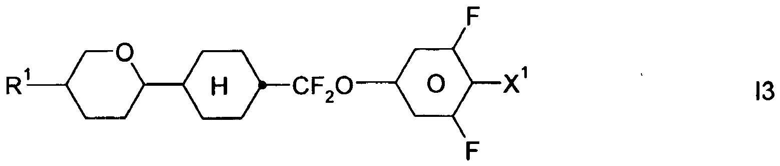 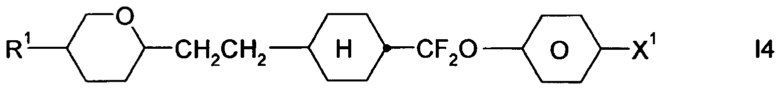 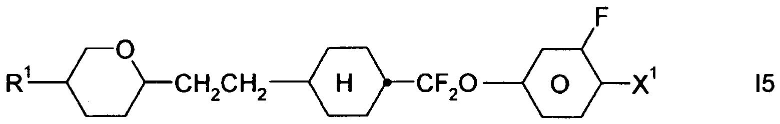 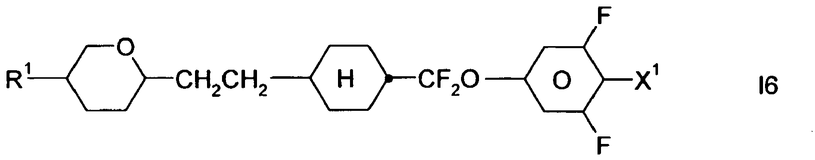 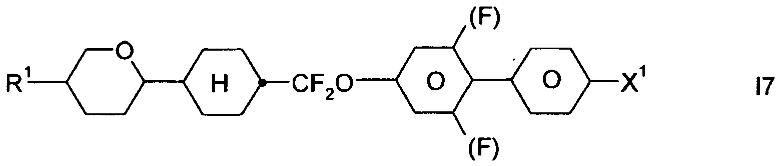 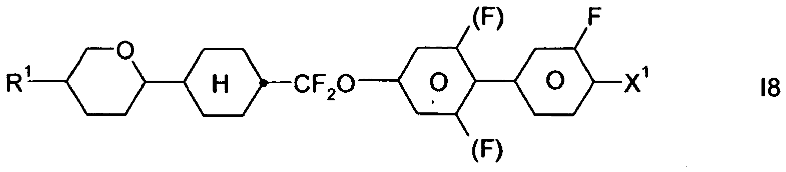 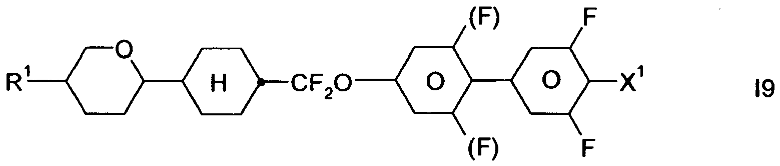 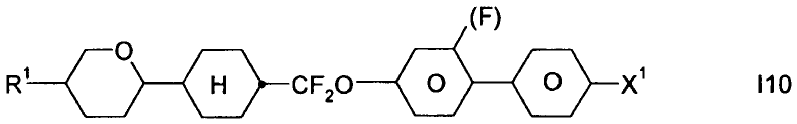 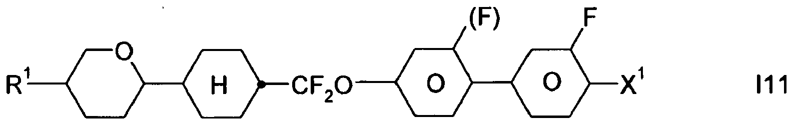 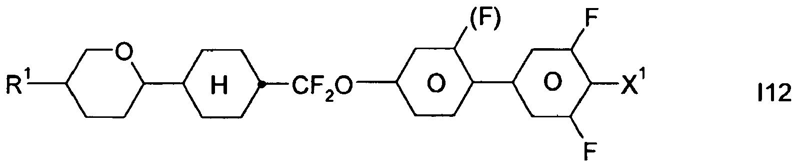 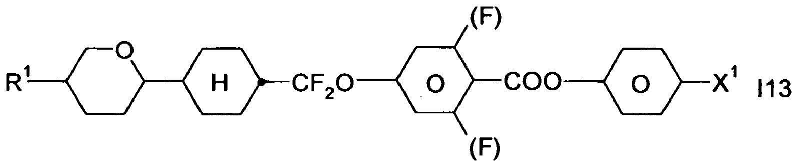 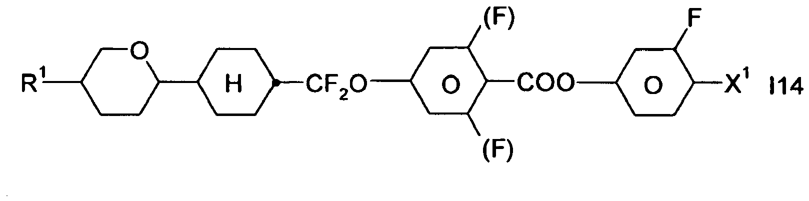 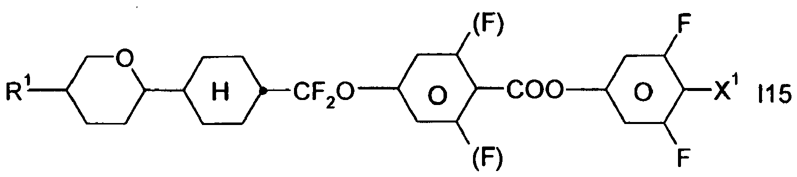 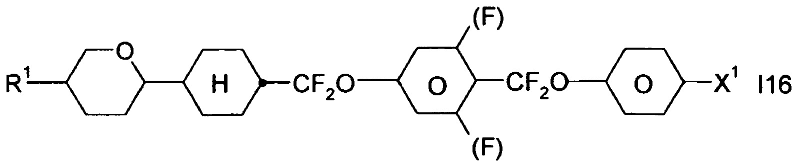 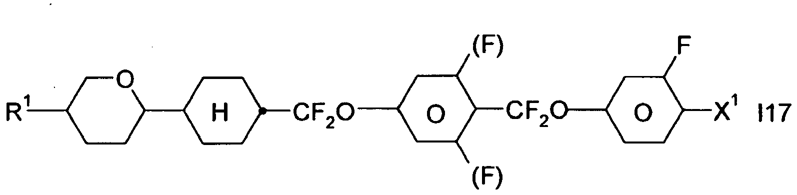 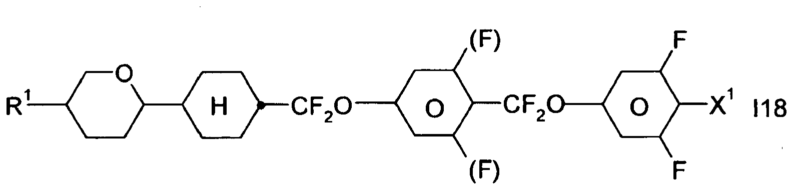 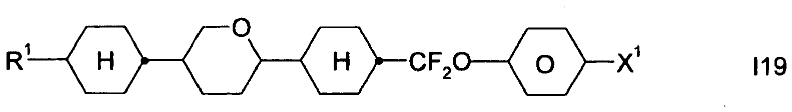 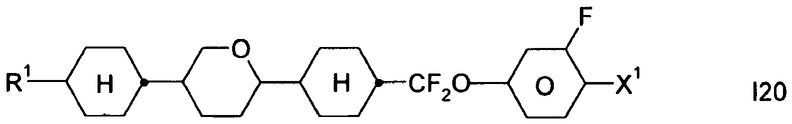 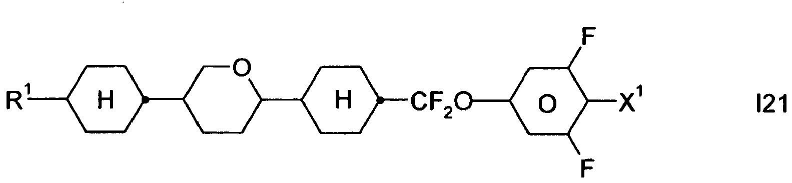 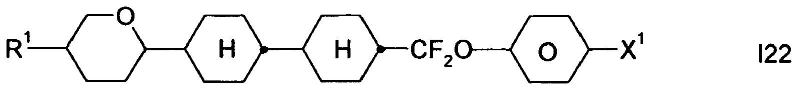 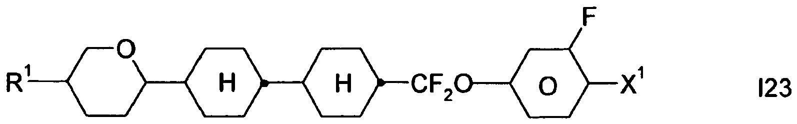 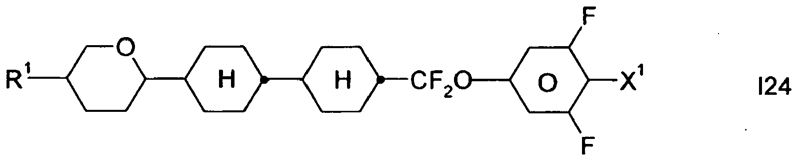 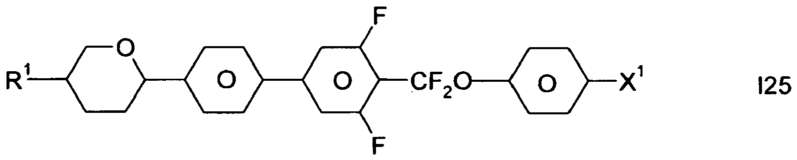 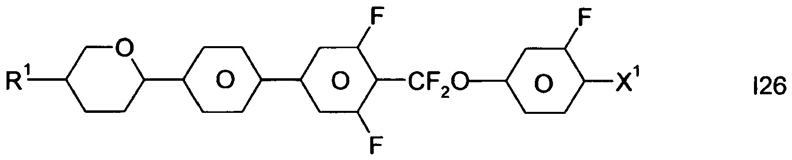 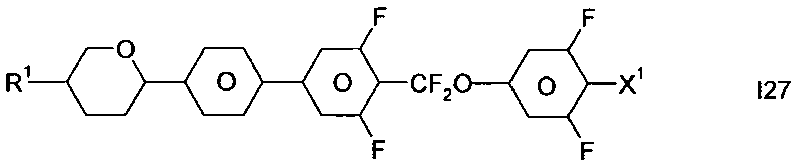 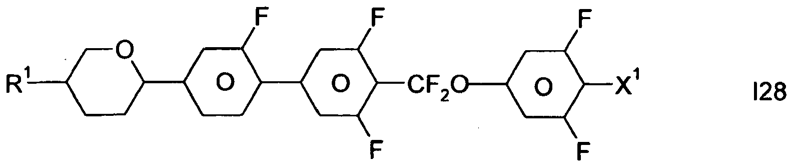 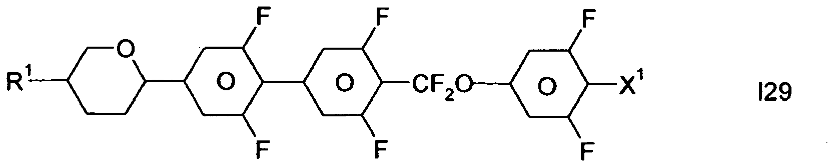 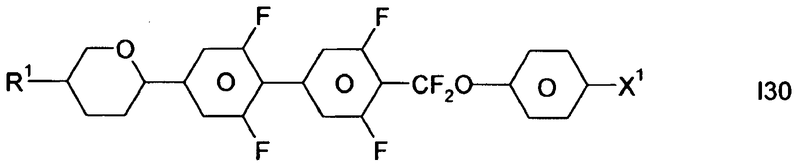 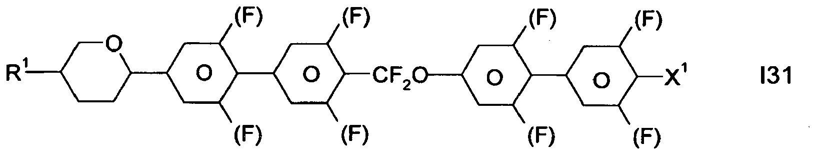 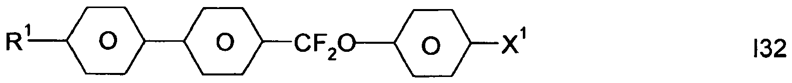 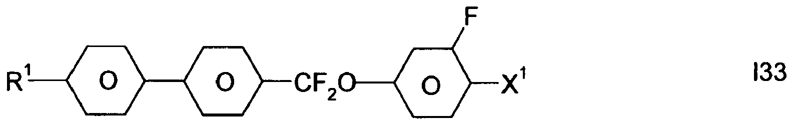 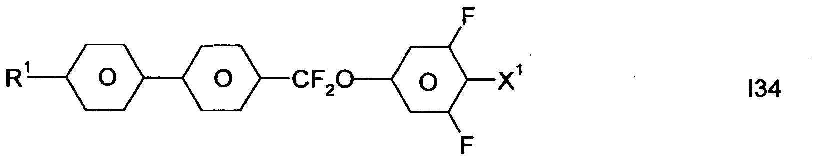 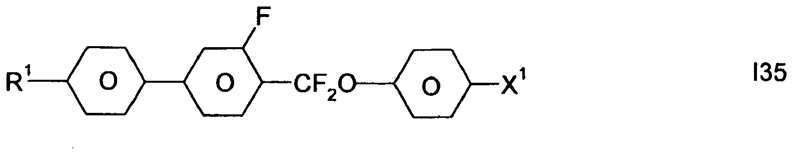 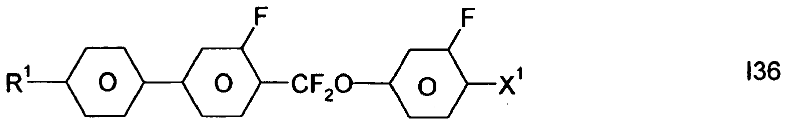 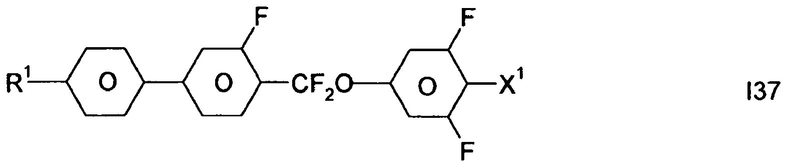 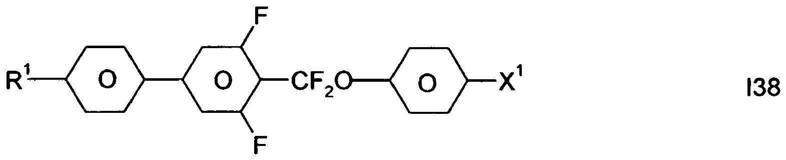 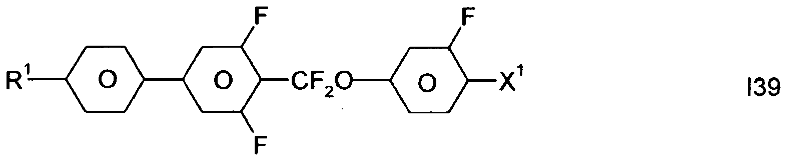 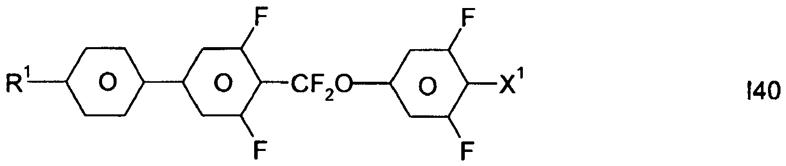 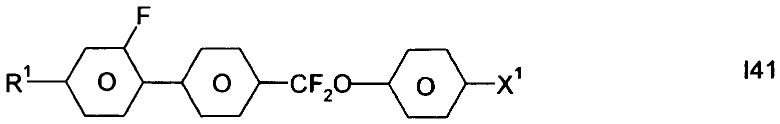 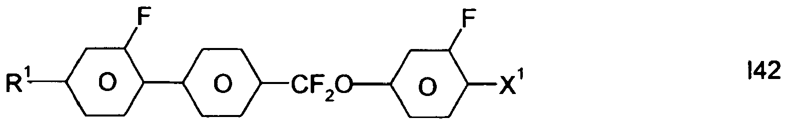 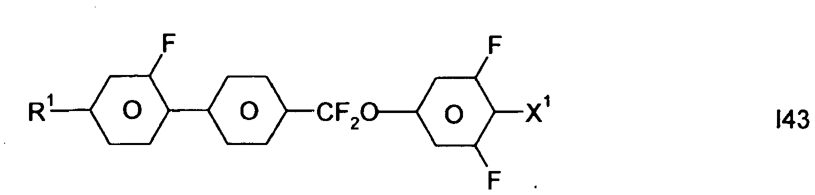 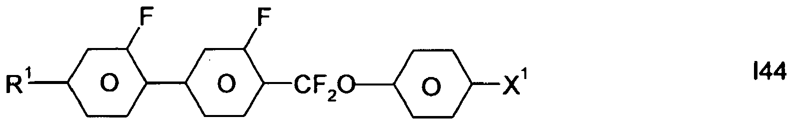 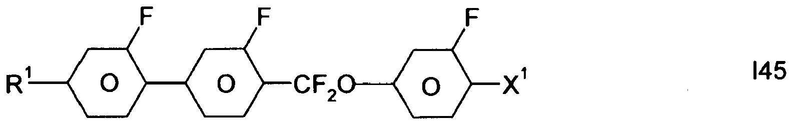 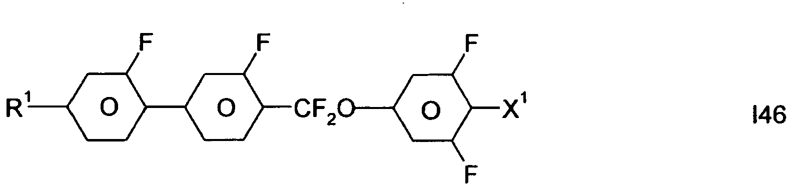 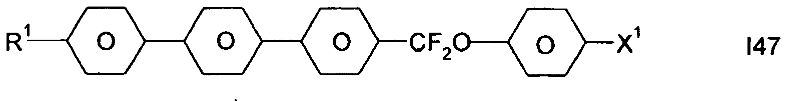 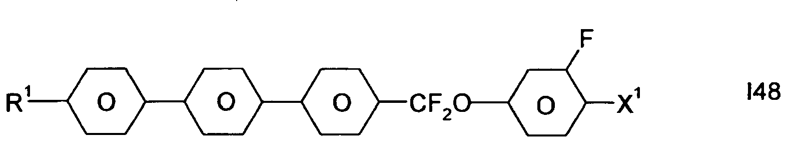 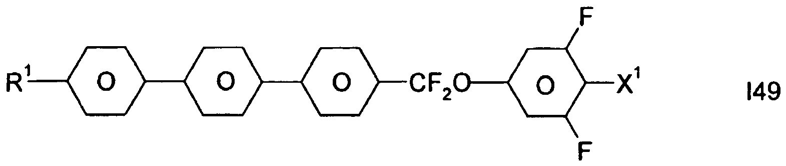 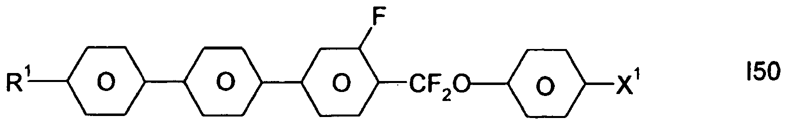 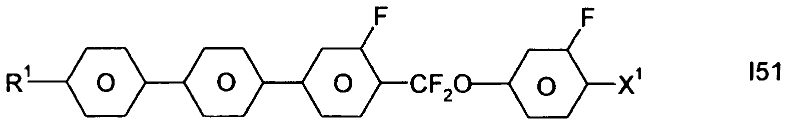 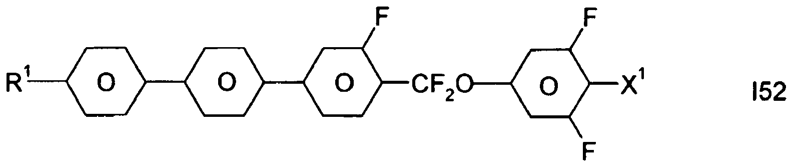 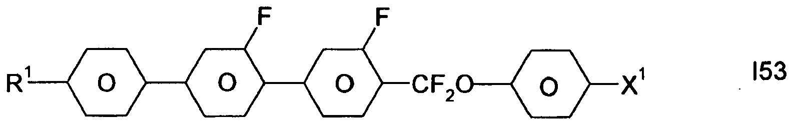 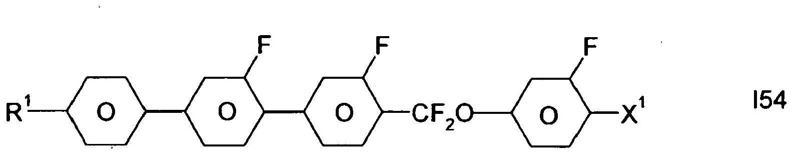 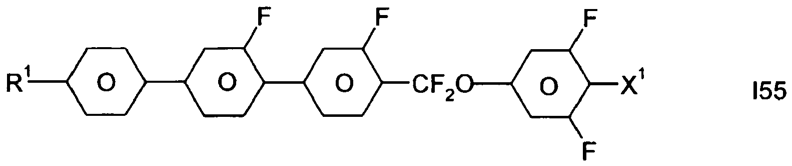 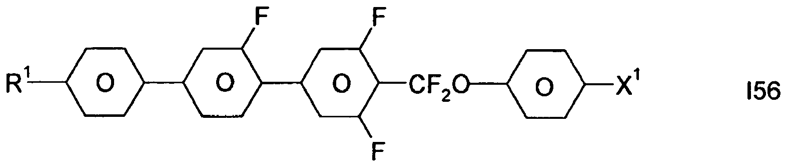 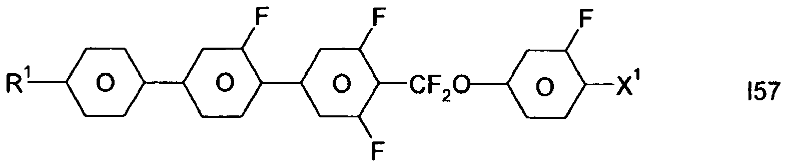 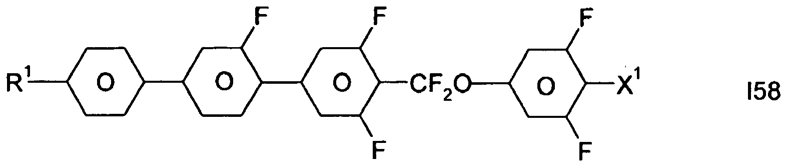 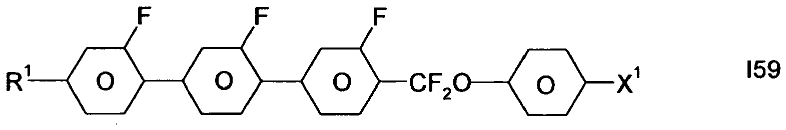 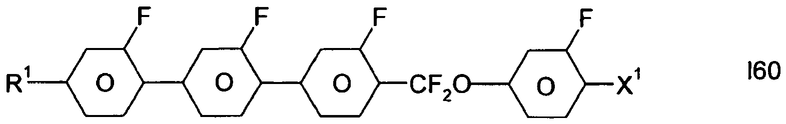 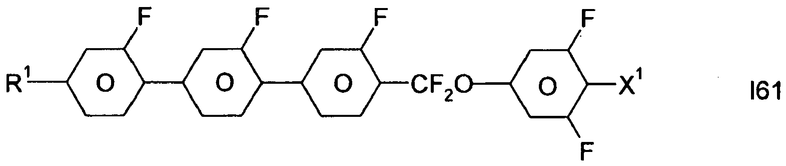 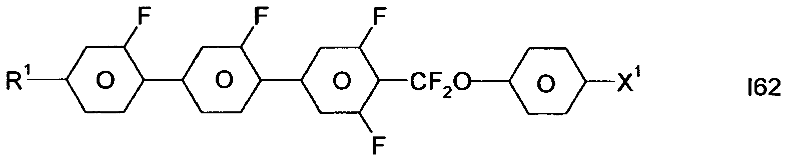 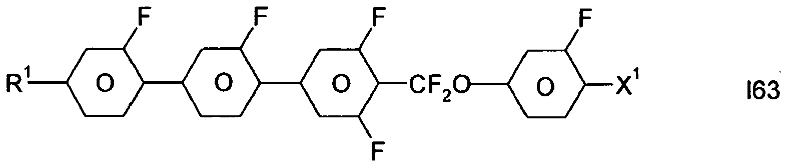 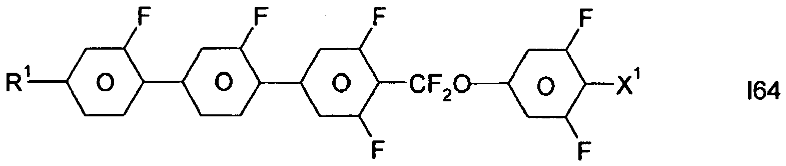 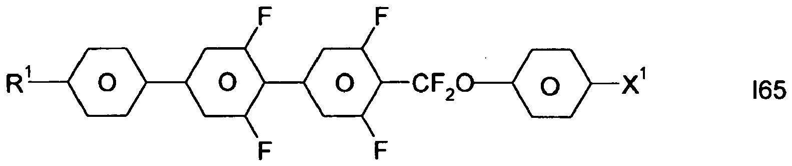 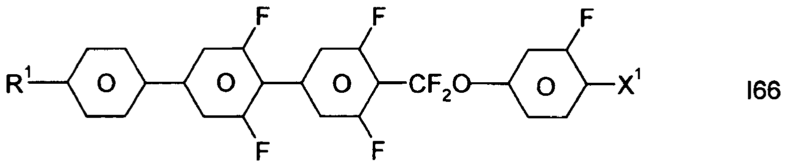 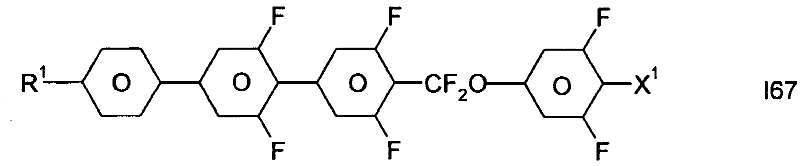 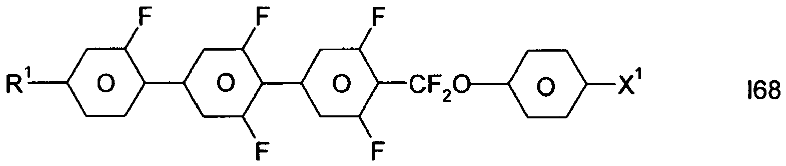 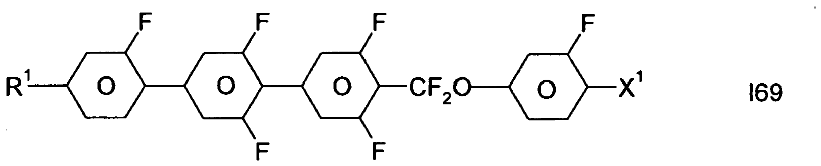 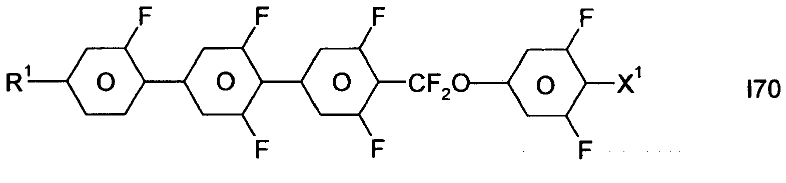 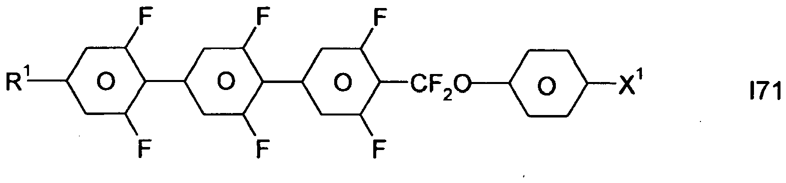 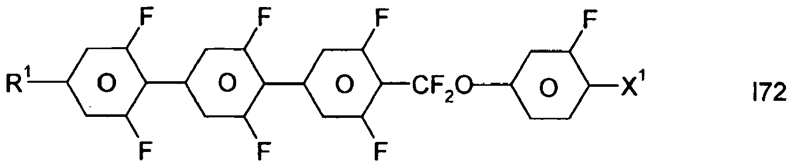 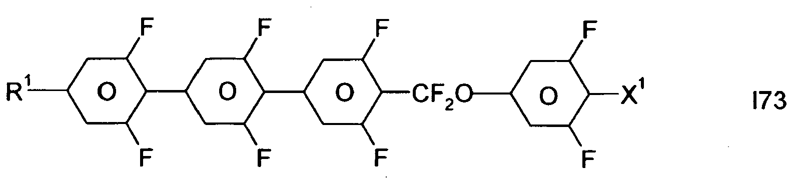 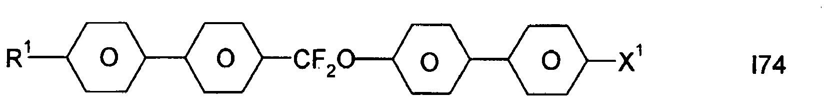 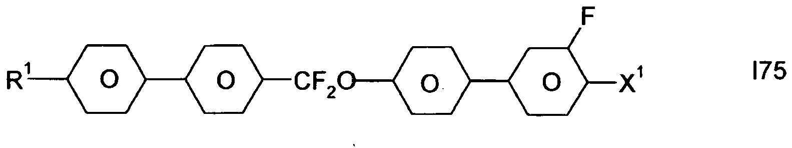 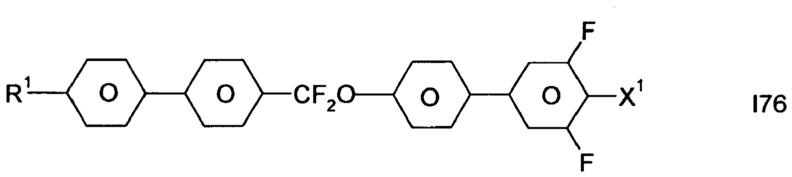 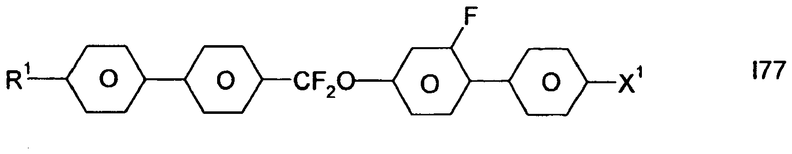 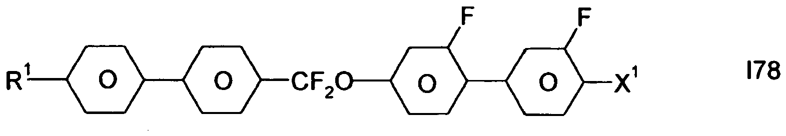 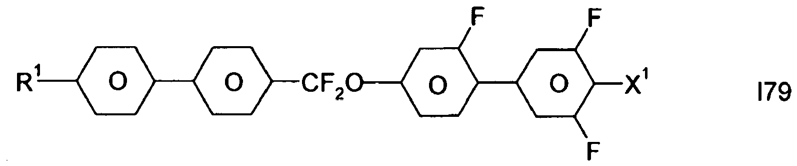 in which R¹ and X¹ have the meaning as defined in Claim 1 and (F) denotes H or F.

3. Liquid crystalline medium according to Claim 1 or 2 **characterized in that** it contains at least one compound selected from the group of the formulae E-1 to E-15, 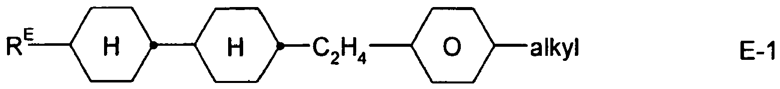 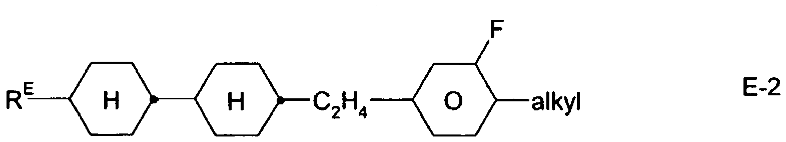 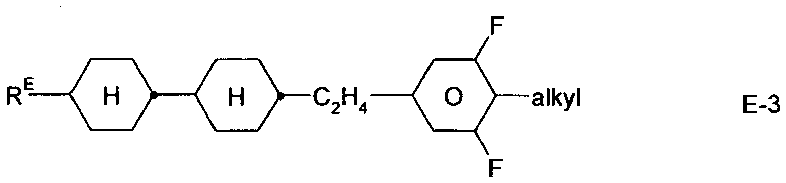 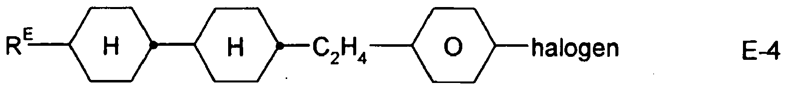 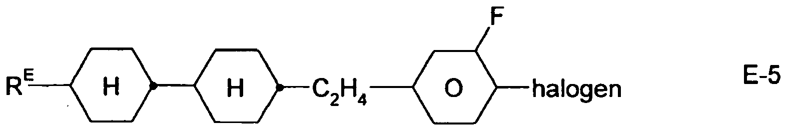 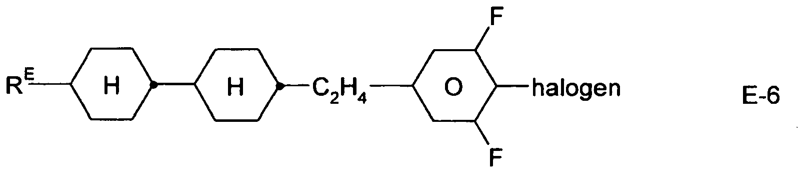 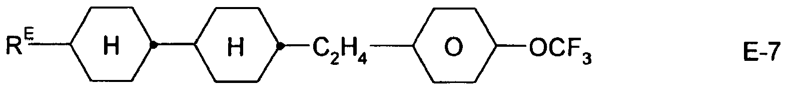 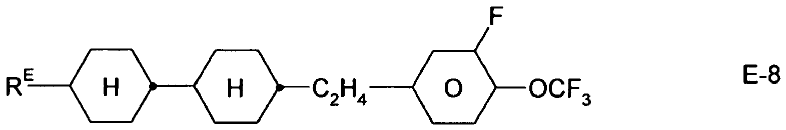 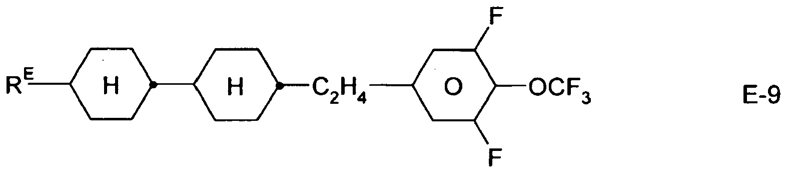 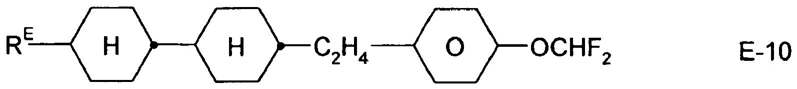 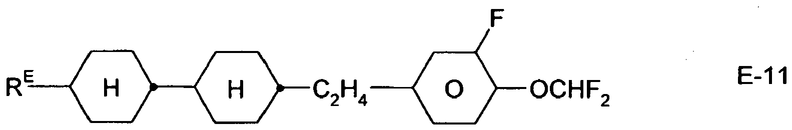 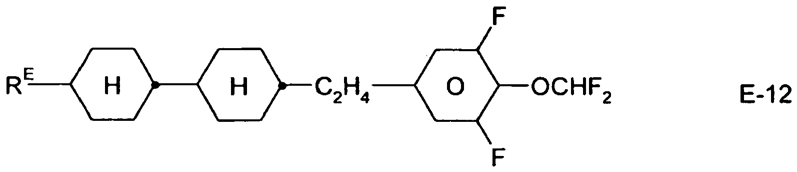 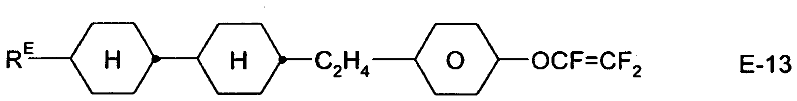 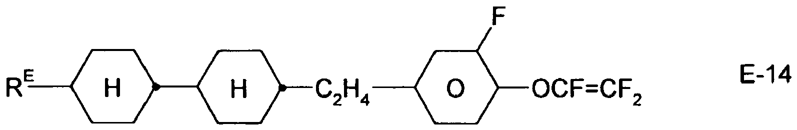 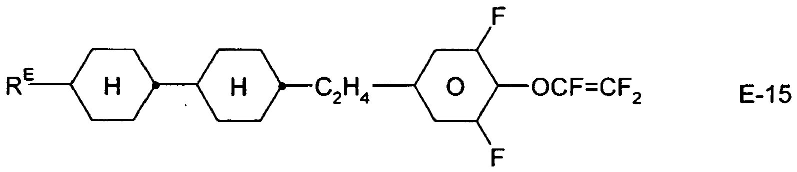 in which
R^{E} has the meaning as defined in Claim 1
halogen is F or Cl
alkyl or alkyl* are each, independently of one another, a straight-chain or branched alkyl radical having 1-9 carbon atoms, preferably a straight-chain alkyl radical.
alkenyl or alkenyl* are each, independently of one another, a straight-chain or branched alkenyl radical having up to 9 carbon atoms, preferably a straight-chain alkenyl radical.

4. Liquid-crystalline medium according to one or more of Claims 1 to 3, **characterised in that** it contains at least two compounds of the formula I.

5. Liquid-crystalline medium according to one or more of Claims 1 to 4, **characterised in that** it contains one or more compounds selected from the group of the general formulae II to IX, 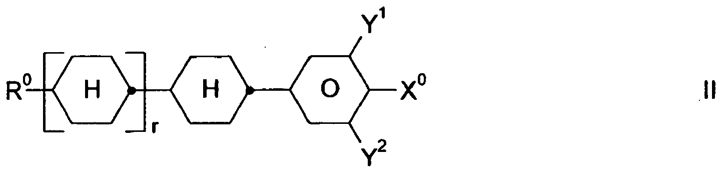 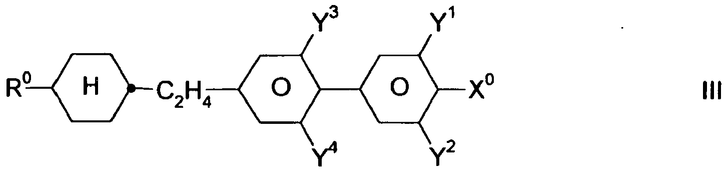 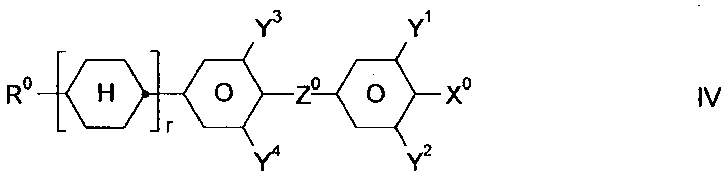 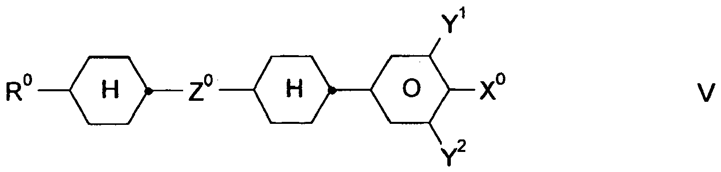 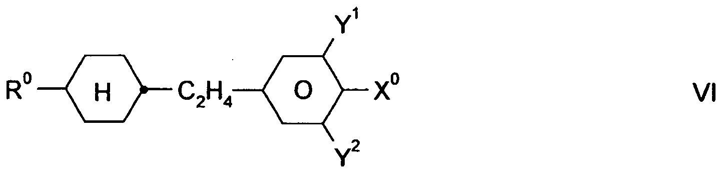 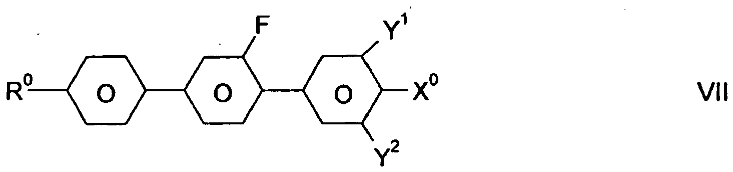 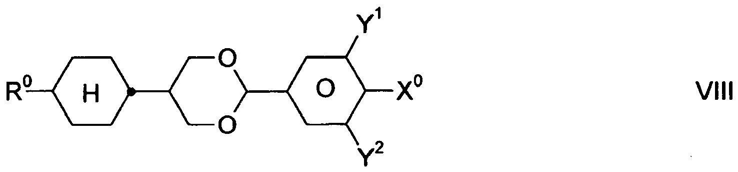 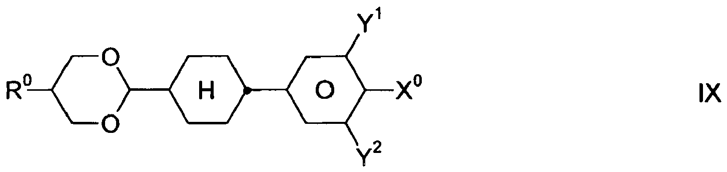 in which
R⁰ is n-alkyl, alkoxy, fluoroalkyl, alkenyloxy or alkenyl, each having up to 9 carbon atoms,
X⁰ is F, Cl, halogenated alkyl having up to 7 carbon atoms, halogenated alkenyl having up to 7 carbon atoms, halogenated alkenyloxy having up to 7 carbon atoms or halogenated alkoxy having up to 7 carbon atoms,
Z⁰ is -CH=CH-, -C₂H₄-, -(CH₂)₄-, -C₂F₄-, -CH₂O-, -OCH₂-, -CF=CF-, -CF₂O-, -OCF₂-, -COO- or -0-,
Y¹, Y², Y³ and Y⁴ are each, independently of one another, H or F, and
r is 0 or 1.

6. Liquid crystalline medium according to one or more claims 1 to 5 **characterized in that** it contains at least one compound selected from the group of the formulae I27a, I40a and I58a 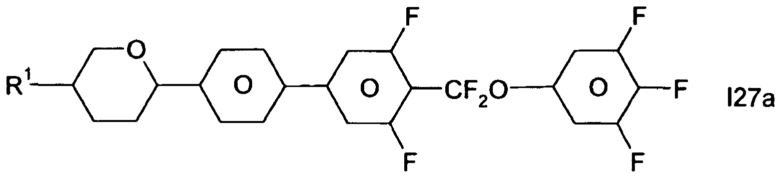 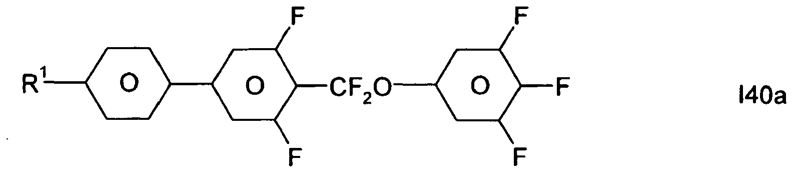 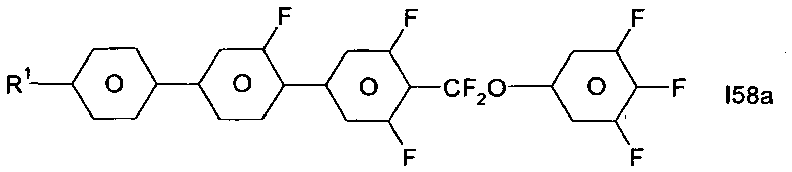 and at least one compound of the formula selected from the group of the formulae E-1a, E-4a, E-5a and E-7a 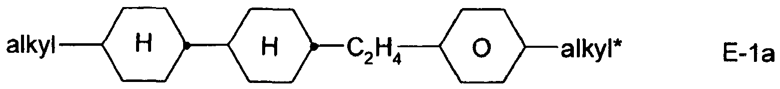 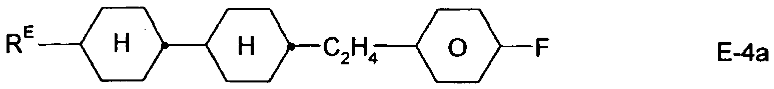 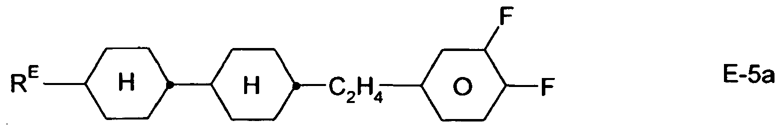 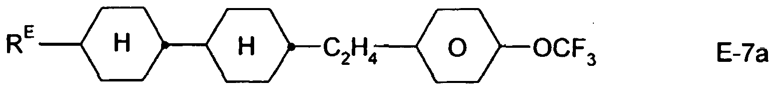 wherein R^{E} has the meaning as given in Claim 1 and alkyl and alkyl* each independently denote a straight-chain alkyl group with 1 to 5 carbon atoms.

7. Liquid crystalline medium according to one or more of claims 1 to 6 **characterized in that** it contains at least one compound of the formula

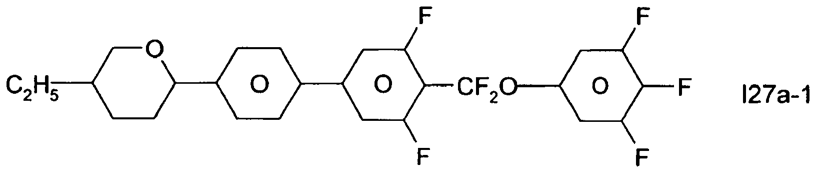

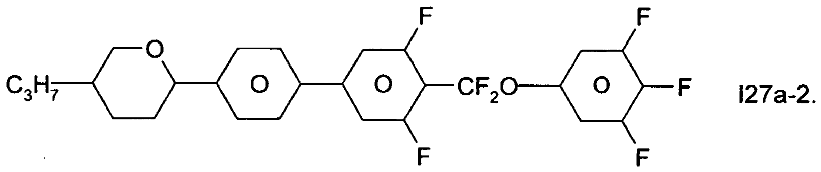

8. Liquid crystalline medium according to one or more of claims 1 to 7 **characterized in that** it contains one or more compounds of the formulae RIa-RIVa 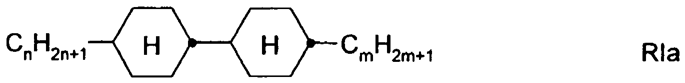 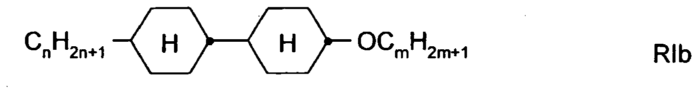 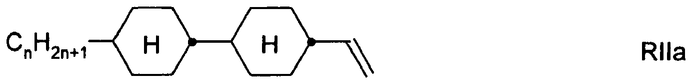 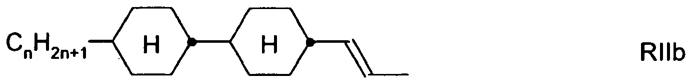 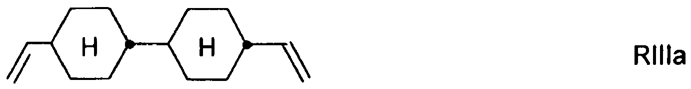 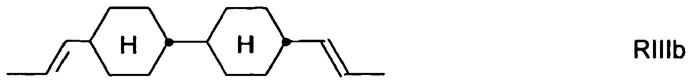 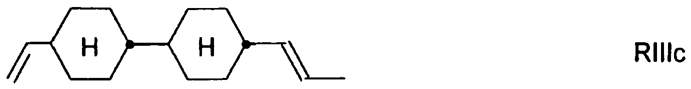 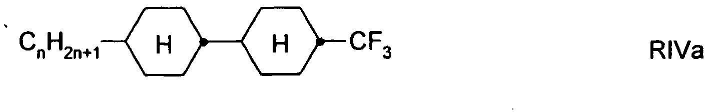 in which
n and m are each an integer from 1 to 9.

9. Liquid crystalline medium according to one or more of claims 1 to 8 **characterized in that** it contains at least one reactive mesogen.

10. Process for the production of a liquid-crystalline medium according to one or more of Claims 1 to 9, **characterized in that** at least one compound of the formula I and at least one compound of the formula E are mixed with one or more mesogenic compounds and optionally with further additives and optionally with one or more reactive mesogens.

11. Use of the liquid-crystalline medium according to one or more of Claims 1 or 8 for electro-optical purposes.

12. Use of the liquid-crystalline medium according to Claim 11 for TN-TFT-, IPS-, FFS-, positive VA-, PS-IPS-, PS-FFS-, PS-TN-TFT- or positive PS-VA-applications.

13. Electro-optical liquid-crystal display containing a liquid-crystalline medium according to one or more of Claims 1 or 9.

## Patentansprüche

1. Flüssigkristallines Medium, **dadurch gekennzeichnet, dass** es mindestens eine Verbindung der Formel I 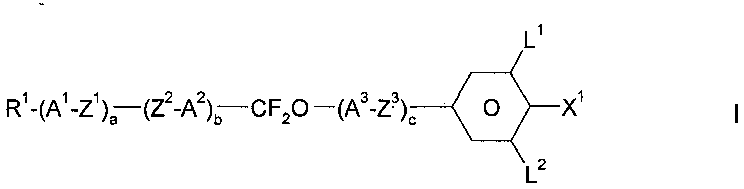 und mindestens eine Verbindung der Formel E 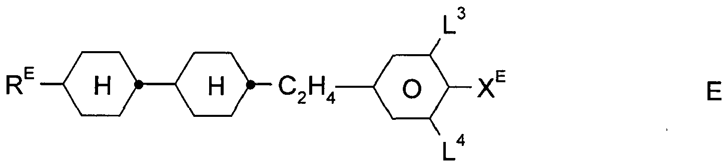 enthält, in denen
R¹ und R^{E} jeweils unabhängig voneinander H, einen halogenierten oder unsubstituierten Alkyl- oder Alkoxyrest mit 1 bis 15 Kohlenstoffatomen bedeuten, wo zusätzlich eine oder mehrere CH₂-Gruppen in diesen Resten jeweils unabhängig voneinander so durch -C≡C-, -CH=CH-, -O-, -CO-O- oder -O-CO- ersetzt sein können, dass O-Atome nicht direkt miteinander verknüpft sind,
A¹, A² und A³ jeweils unabhängig voneinander 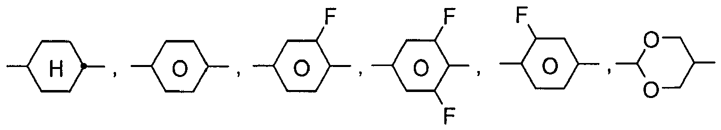 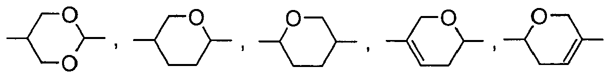 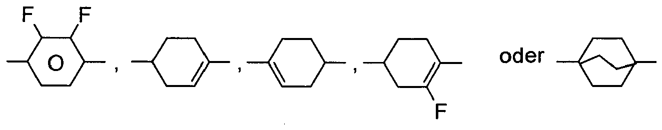 bedeuten,
X¹ F, Cl, CN, NCS, OCN, SF₅, fluoriertes Alkyl mit 1 bis 5 Kohlenstoffatomen, fluoriertes Alkoxy mit 1 bis 5 Kohlenstoffatomen, fluoriertes Alkenyl mit 2 bis 5 Kohlenstoffatomen, fluoriertes Alkenyloxy mit 1 bis 5 Kohlenstoffatomen bedeutet,
X^{E} F, Cl, OCF₃, OCHF₂, OCH=CF₂, OCF=CF₂, OCHFCF₃, OCF₂CFHCF₃, CH₃, C₂H₅, n-C₃H₇ bedeutet,
L¹ L², L³ und L⁴ jeweils unabhängig voneinander H oder F bedeuten,
Z¹, Z² und Z³ jeweils unabhängig voneinander -CO-O-, -O-CO-, -CF₂O-, -OCF₂-, -CH₂O-, -OCH₂-, -CH₂CH₂-, -(CH₂)₄-, -C₂F₄-, -CH₂CF₂-, -CF₂CH₂-, -CF=CF-, -CH=CH-, -C≡C- oder eine Einfachbindung bedeuten und
a, b und c jeweils unabhängig voneinander für 0, 1, 2 oder 3 stehen, wobei a + b + c 1, 2, 3 oder 4 ist.

2. Flüssigkristallines Medium nach Anspruch 1, **dadurch gekennzeichnet, dass** es mindestens eine Verbindung ausgewählt aus der Gruppe der Formeln I1 bis I79 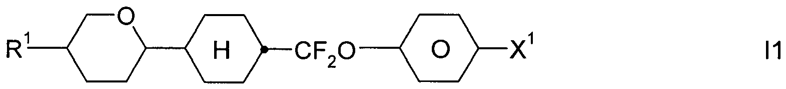 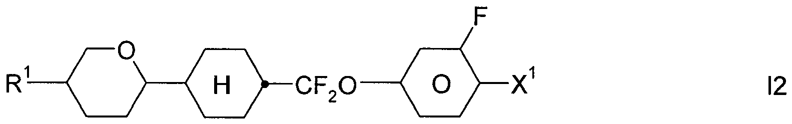 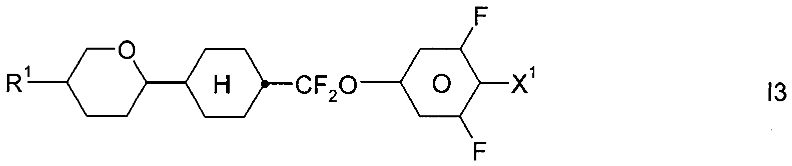 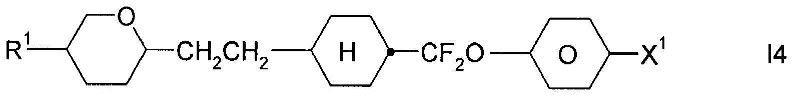 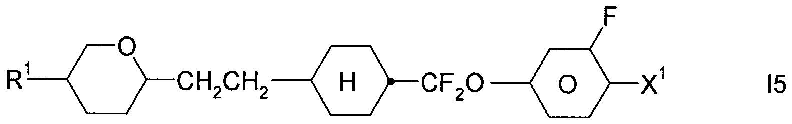 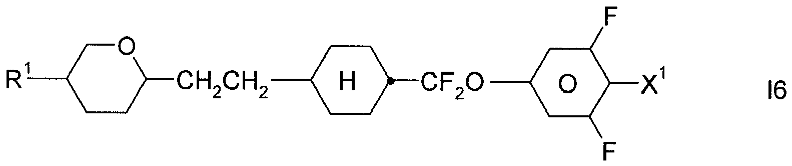 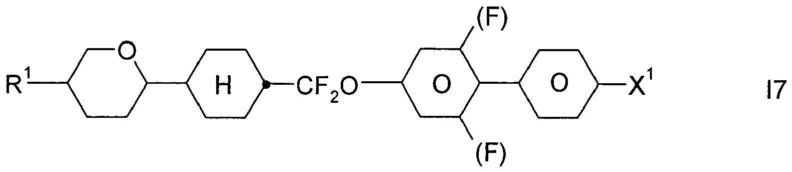 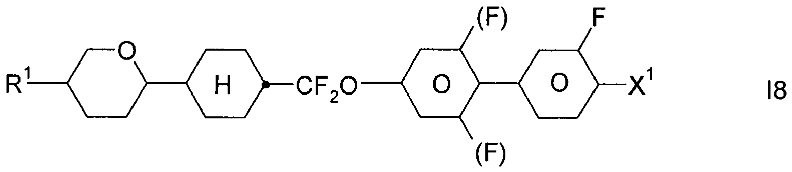 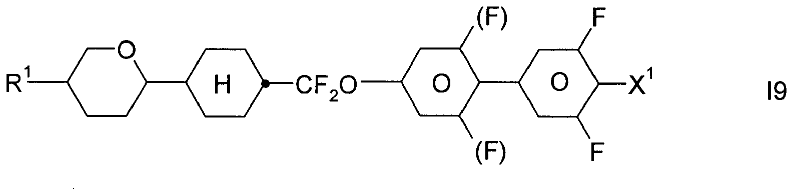 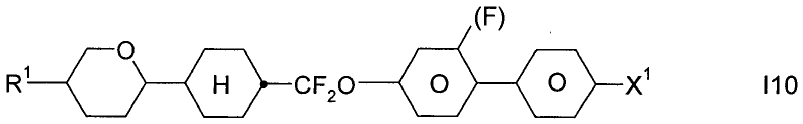 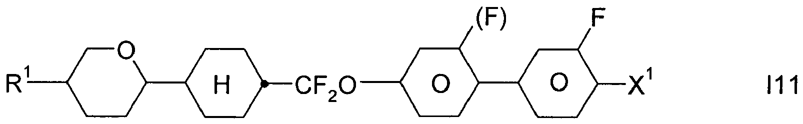 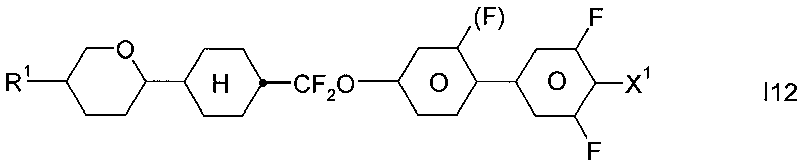 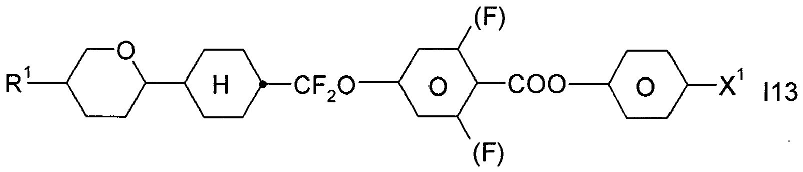 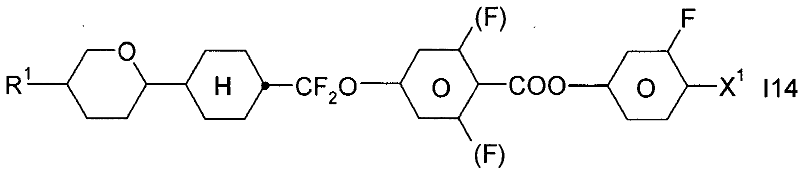 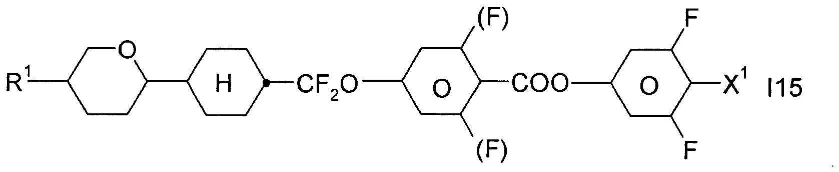 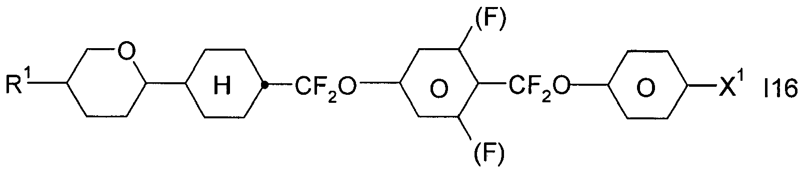 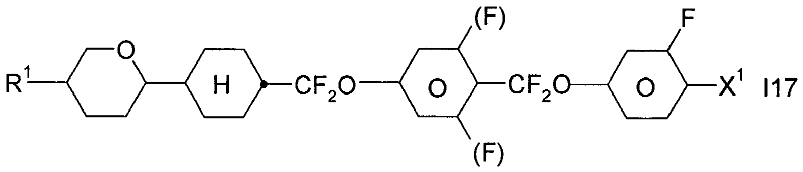 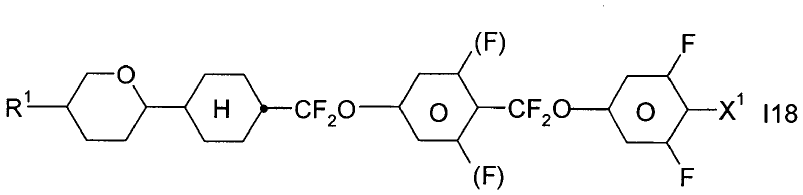 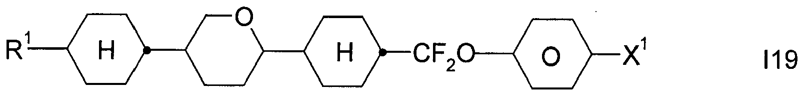 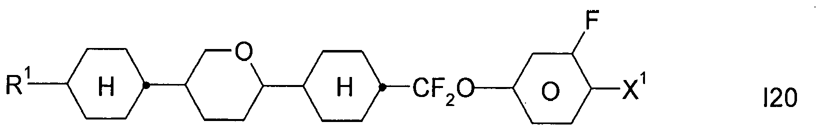 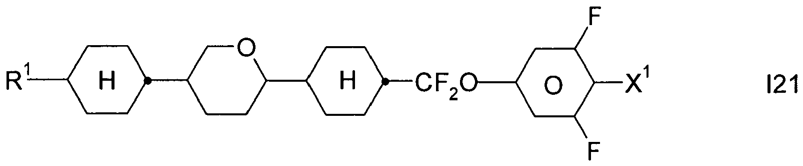 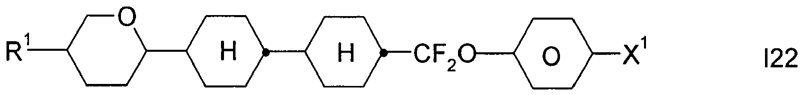 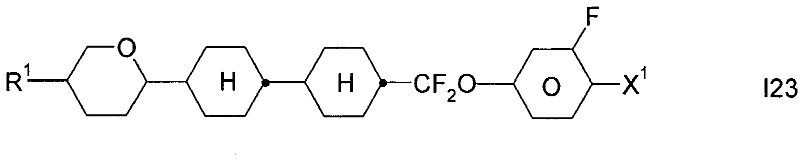 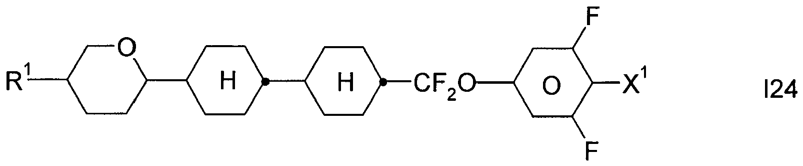 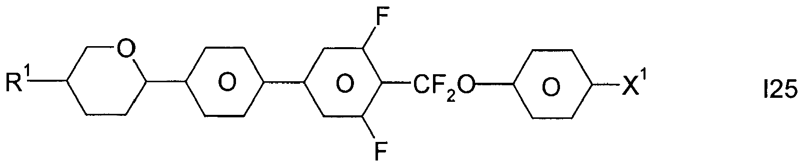 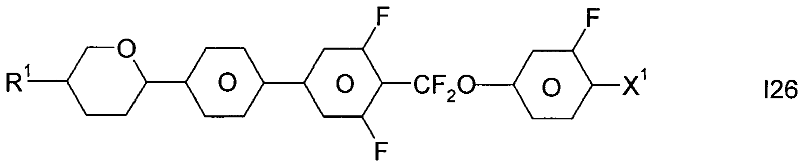 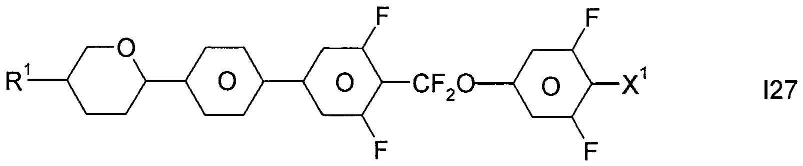 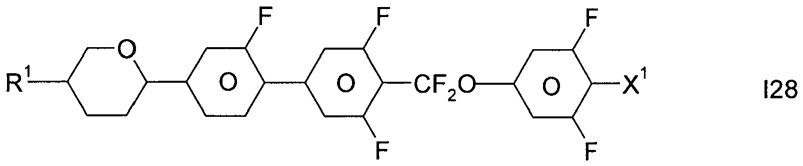 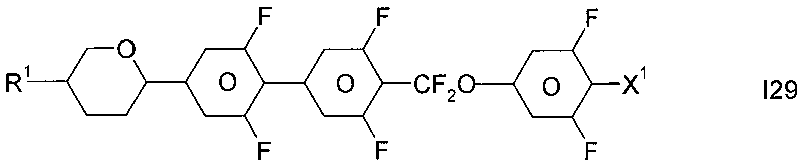 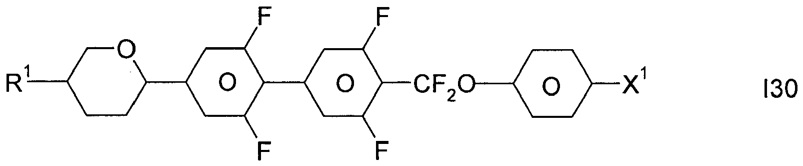 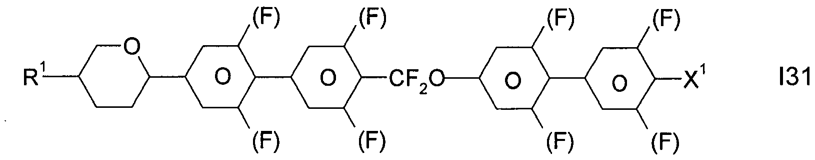 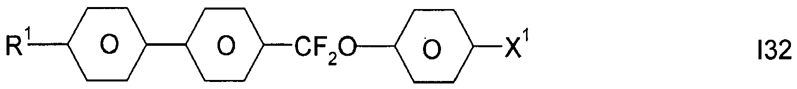 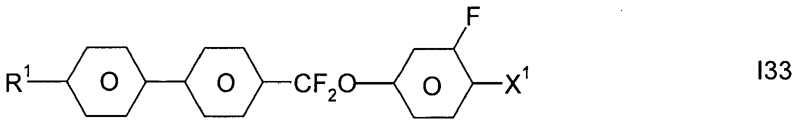 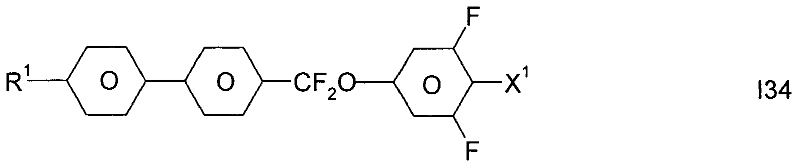 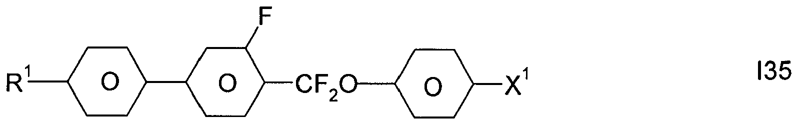 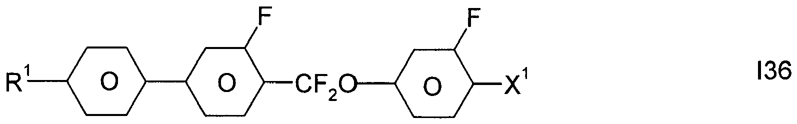 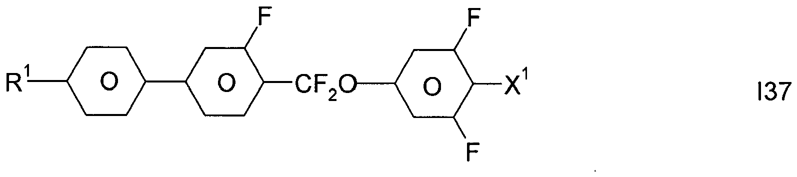 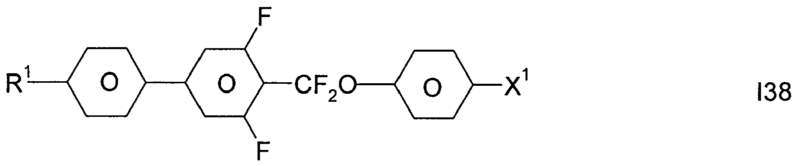 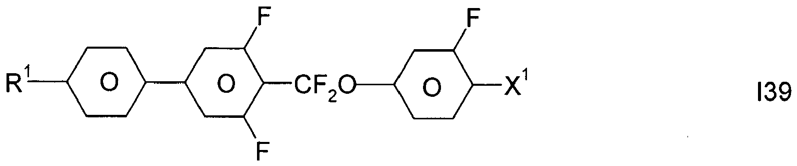 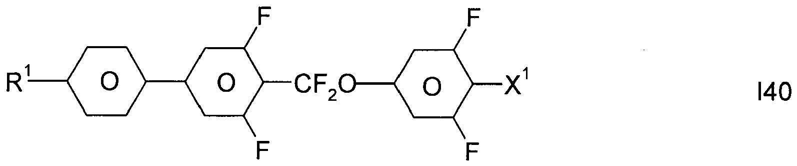 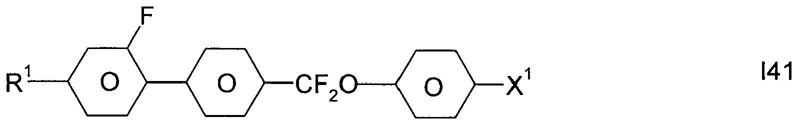 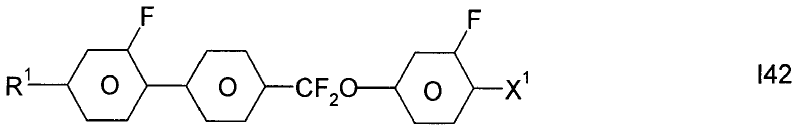 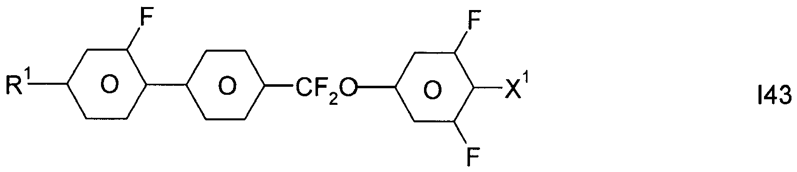 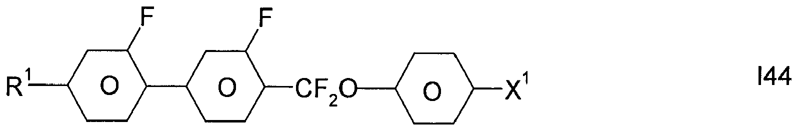 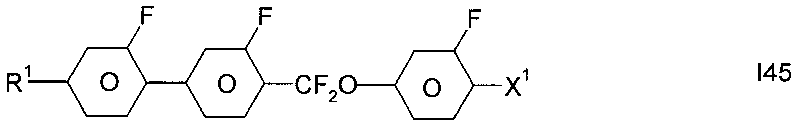 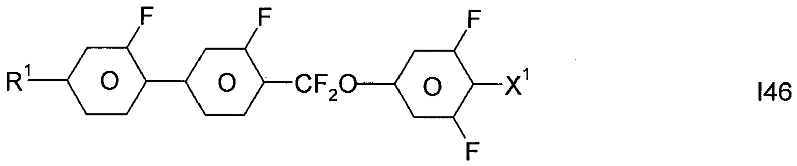 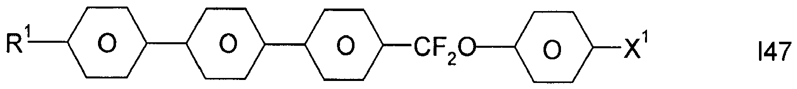 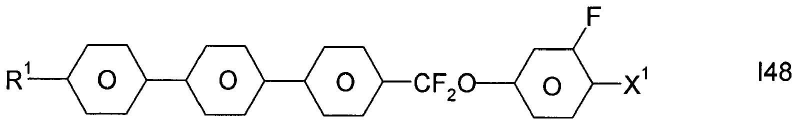 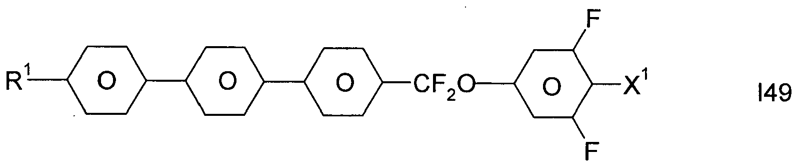 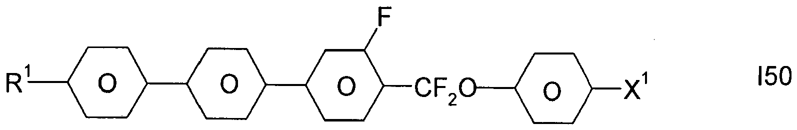 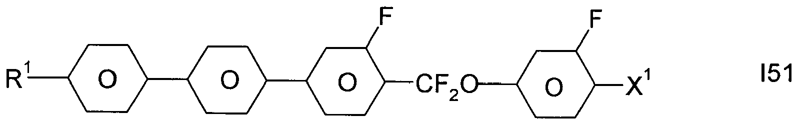 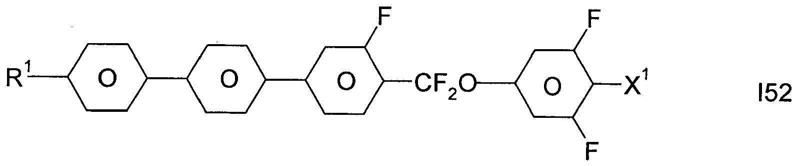 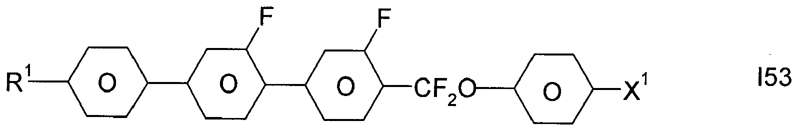 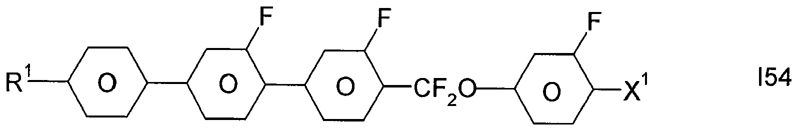 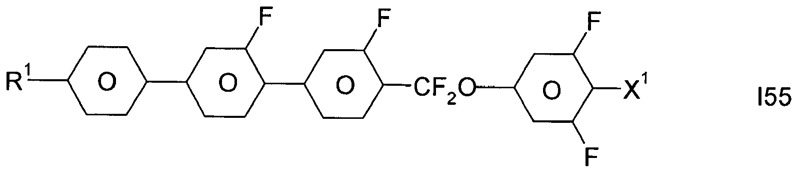 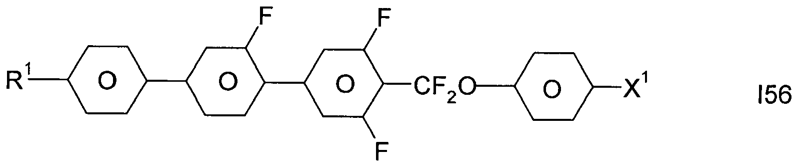 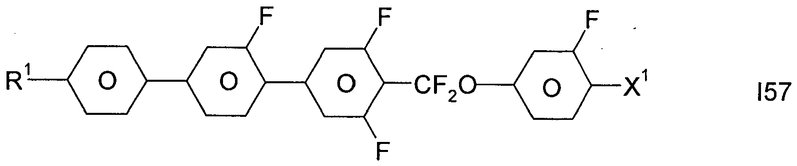 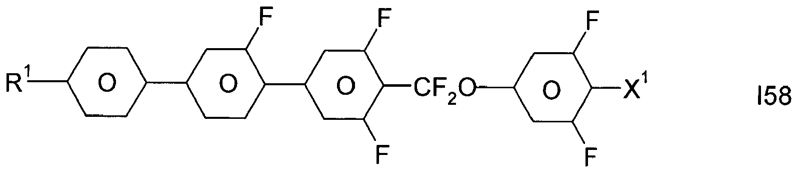 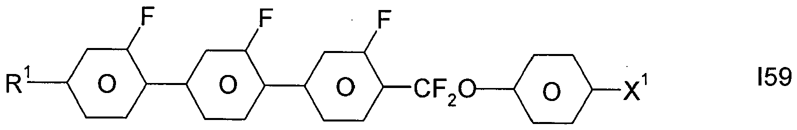 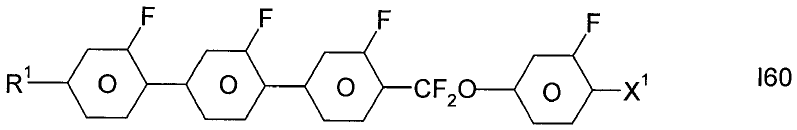 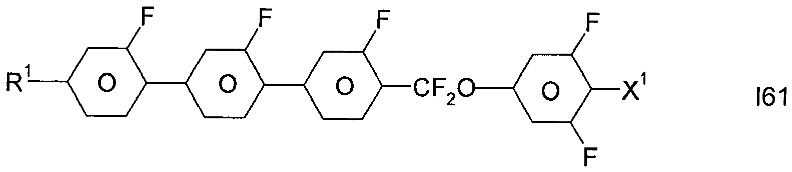 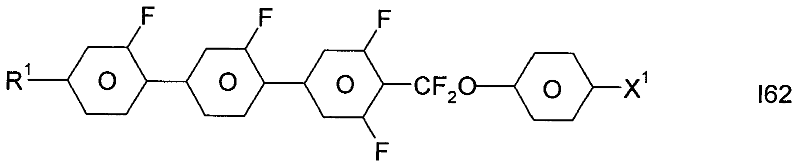 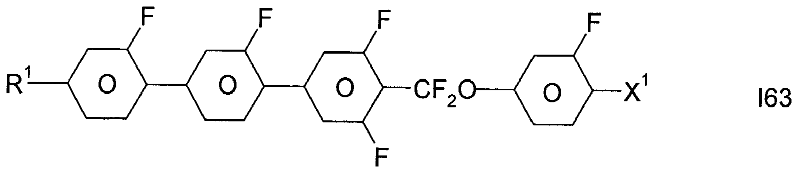 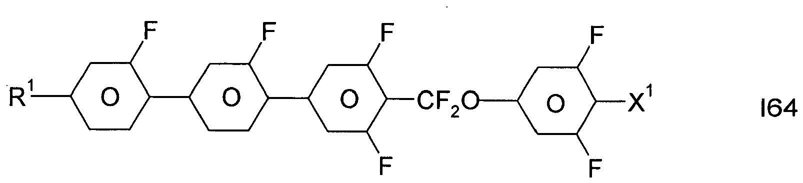 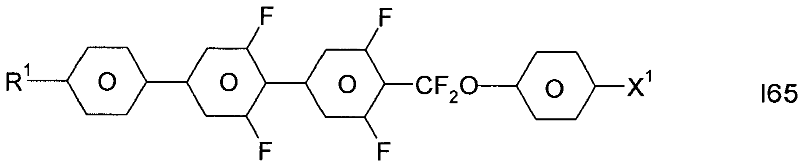 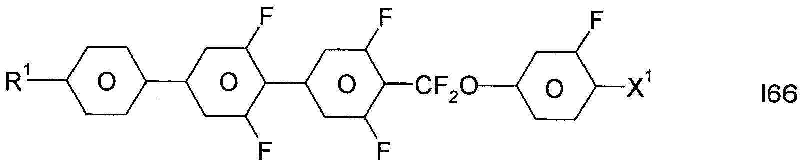 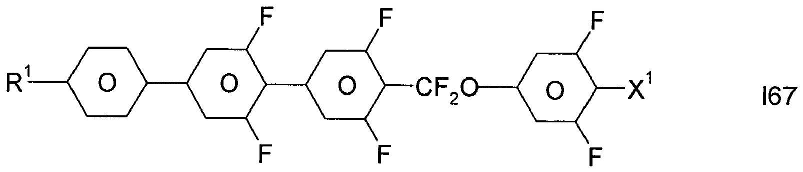 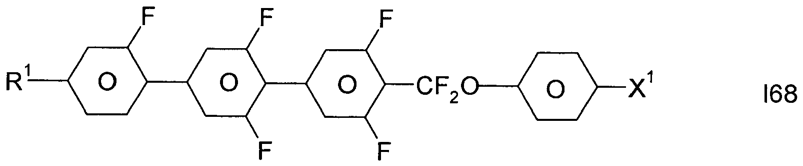 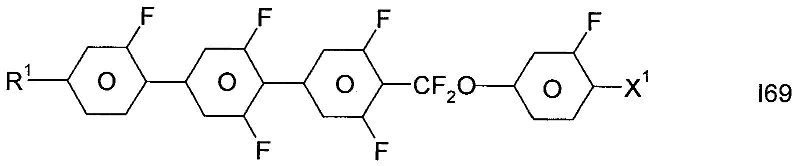 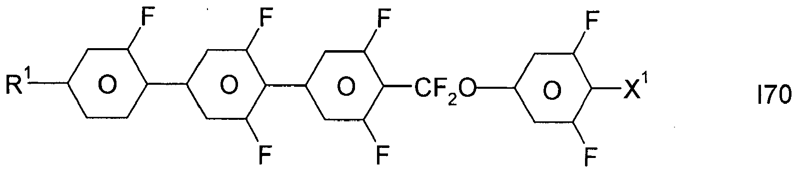 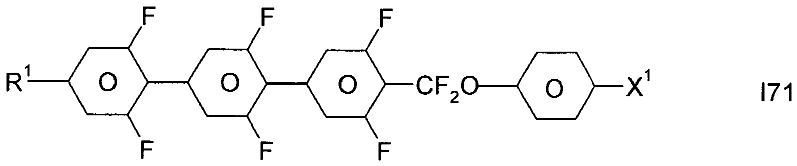 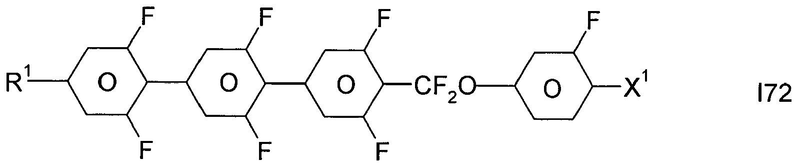 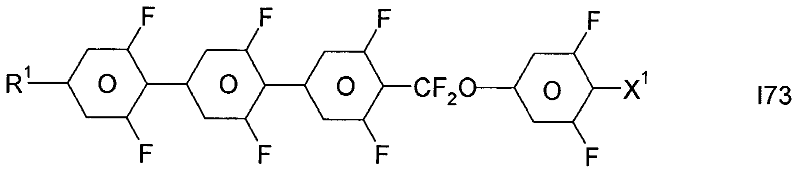 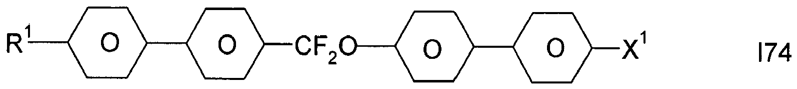 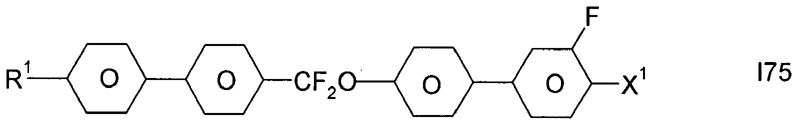 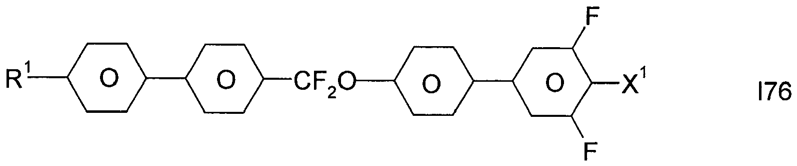 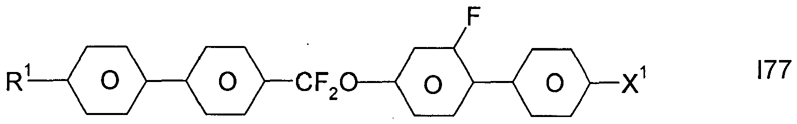 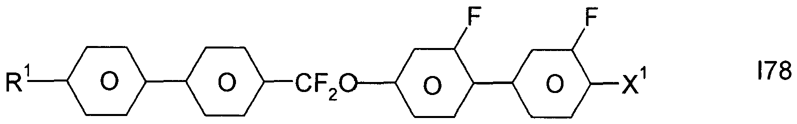 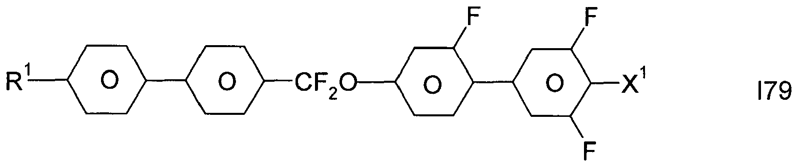 enthält, in denen R¹ und X¹ die Bedeutung wie in Anspruch 1 definiert besitzen und (F) H oder F bedeutet.

3. Flüssigkristallines Medium nach Anspruch 1 oder 2, **dadurch gekennzeichnet, dass** es mindestens eine Verbindung ausgewählt aus der Gruppe der Formeln E-1 bis E-15 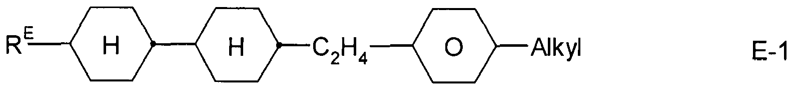 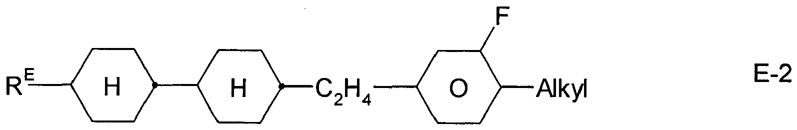 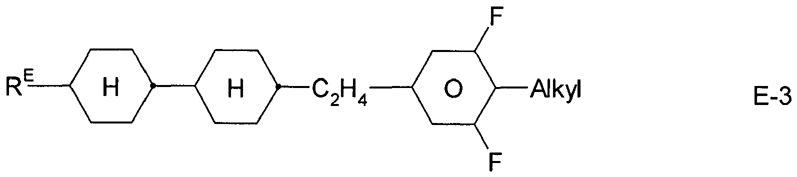 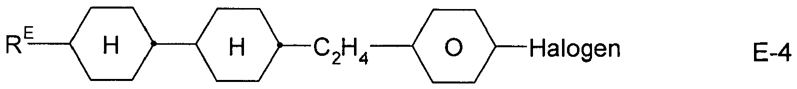 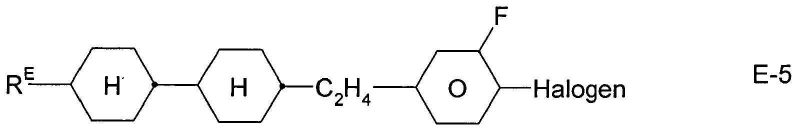 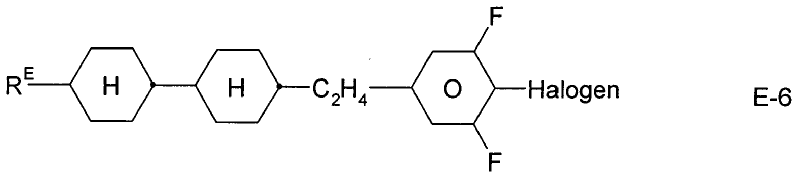 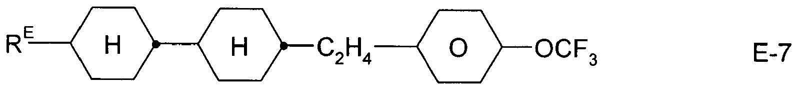 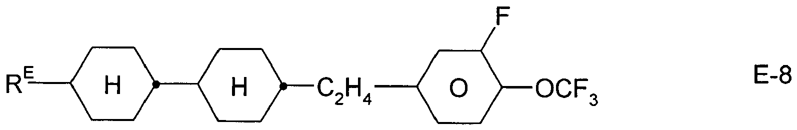 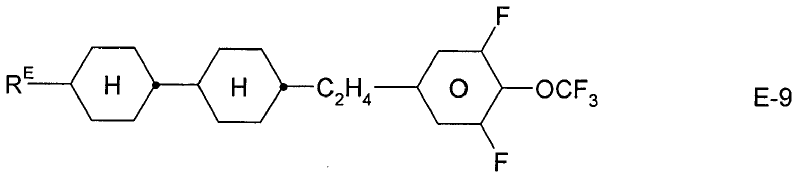 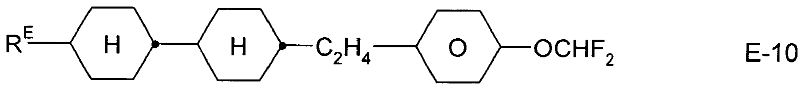 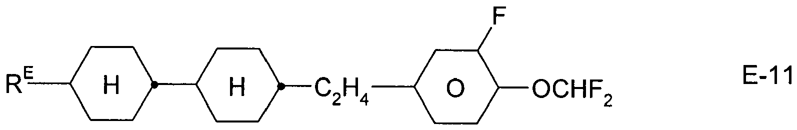 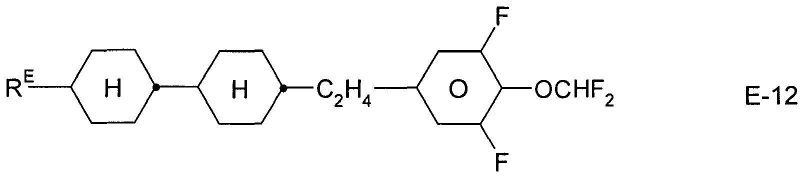 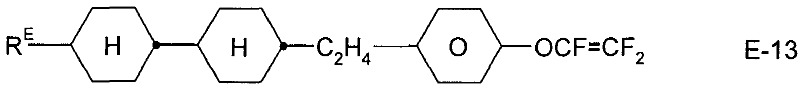 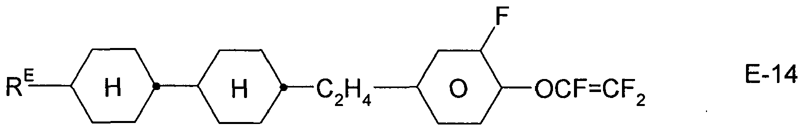 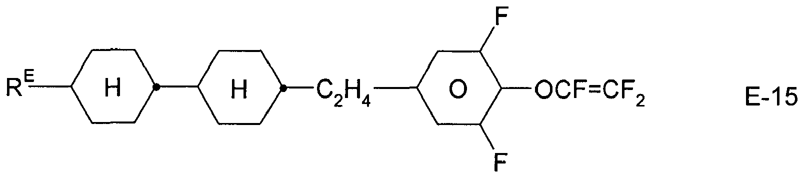 enthält, in denen
R^{E} die Bedeutung wie in Anspruch 1 definiert besitzt,
Halogen F oder Cl bedeutet,
Alkyl oder Alkyl* jeweils unabhängig voneinander einen geradkettigen oder verzweigten Alkylrest mit 1-9 Kohlenstoffatomen, vorzugsweise einen geradkettigen Alkylrest bedeuten,
Alkenyl oder Alkenyl* jeweils unabhängig voneinander einen geradkettigen oder verzweigten Alkenylrest mit bis zu 9 Kohlenstoffatomen, vorzugsweise einen geradkettigen Alkenylrest bedeuten.

4. Flüssigkristallines Medium nach einem oder mehreren der Ansprüche 1 bis 3, **dadurch gekennzeichnet, dass** es mindestens zwei Verbindungen der Formel I enthält.

5. Flüssigkristallines Medium nach einem oder mehreren der Ansprüche 1 bis 4, **dadurch gekennzeichnet, dass** es eine oder mehrere Verbindungen ausgewählt aus der Gruppe der allgemeinen Formeln II bis IX 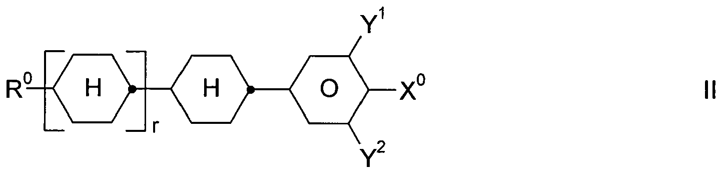 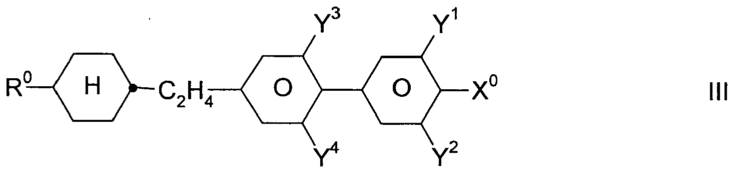 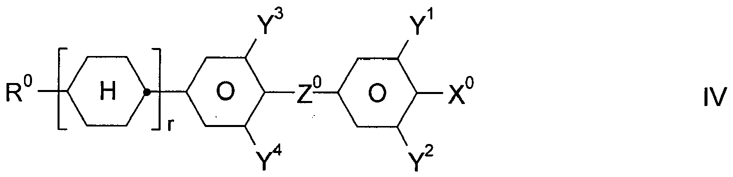 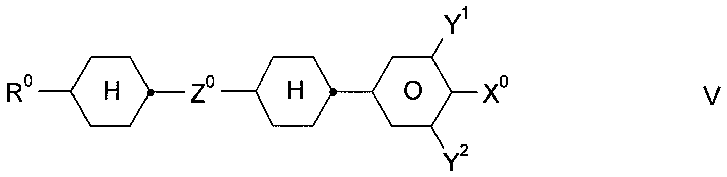 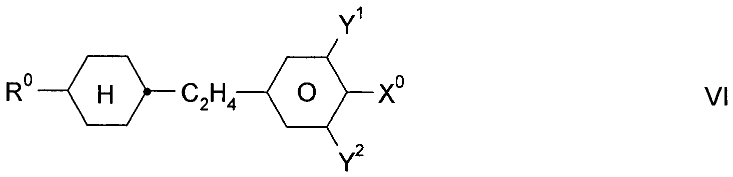 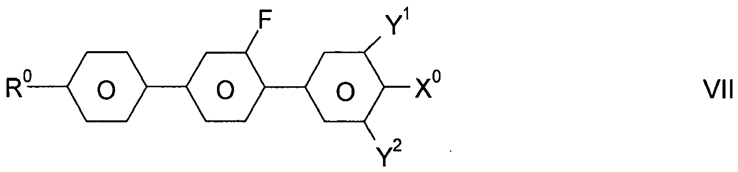 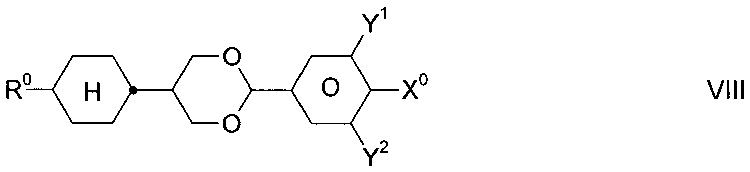 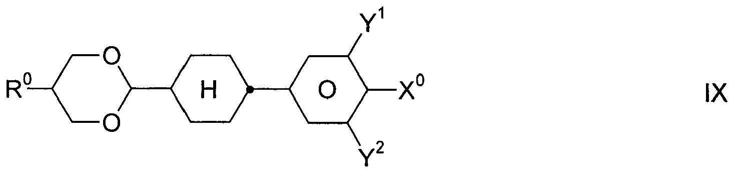 enthält, in denen
R⁰ n-Alkyl, Alkoxy, Fluoralkyl, Alkenyloxy oder Alkenyl, jeweils mit bis zu 9 Kohlenstoffatomen, bedeutet,
X⁰ F, Cl, halogeniertes Alkyl mit bis zu 7 Kohlenstoffatomen, halogeniertes Alkenyl mit bis zu 7 Kohlenstoffatomen, halogeniertes Alkenyloxy mit bis zu 7 Kohlenstoffatomen oder halogeniertes Alkoxy mit bis zu 7 Kohlenstoffatomen bedeutet,
Z⁰ -CH=CH-, -C₂H₄-, -(CH₂)₄-, -C₂F₄-, -CH₂O-, -OCH₂-, -CF=CF-, -CF₂O-, -OCF₂-, -COO- oder -O- bedeutet,
Y¹, Y², Y³ und Y⁴ jeweils unabhängig voneinander H oder F bedeuten und
r für 0 oder 1 steht.

6. Flüssigkristallines Medium nach einem oder mehreren der Ansprüchen 1 bis 5, **dadurch gekennzeichnet, dass** es mindestens eine Verbindung ausgewählt aus der Gruppe der Formeln 127a, 140a und I58a 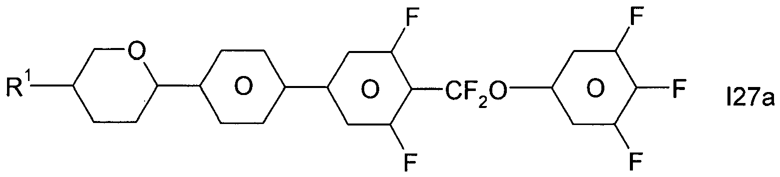 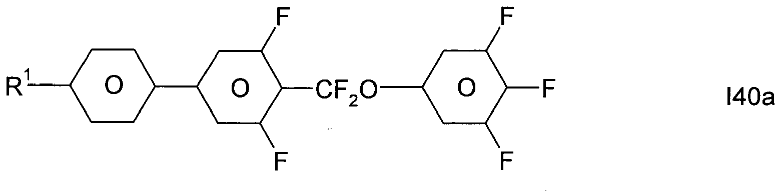 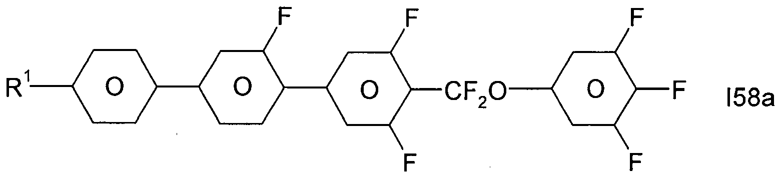 und mindestens eine Verbindung ausgewählt aus der Gruppe der Formeln E-1a, E-4a, E-5a und E-7a 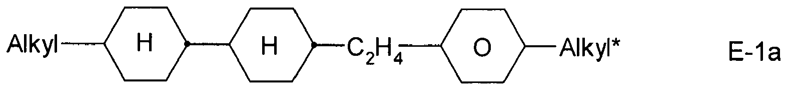 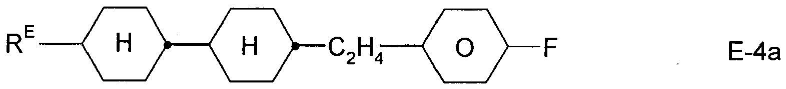 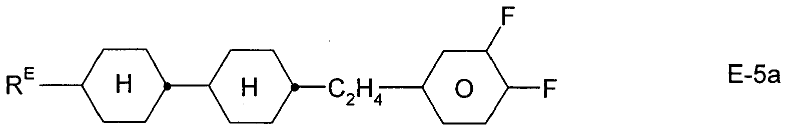 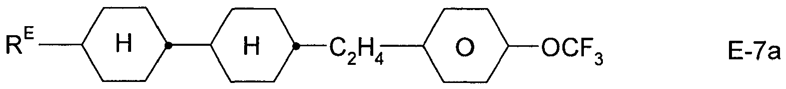 enthält, in denen R^{E} die wie in Anspruch 1 angegebene Bedeutung besitzt und alkyl und alkyl* jeweils unabhängig eine geradkettige Alkylgruppe mit 1 bis 5 Kohlenstoffatomen bedeuten.

7. Flüssigkristallines Medium nach einem oder mehreren der Ansprüche 1 bis 6, **dadurch gekennzeichnet, dass** es mindestens eine Verbindung der Formel 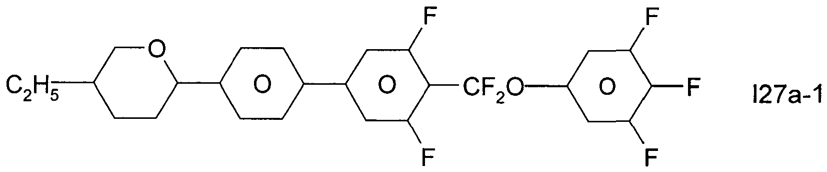 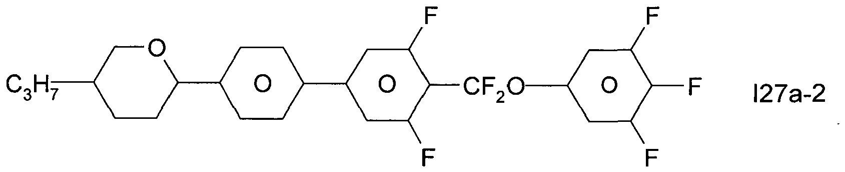 enthält.

8. Flüssigkristallines Medium nach einem oder mehreren der Ansprüche 1 bis 7, **dadurch gekennzeichnet, dass** es eine oder mehrere Verbindungen der Formeln RIa-RIVa 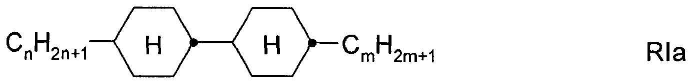 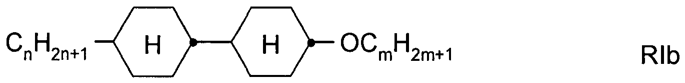 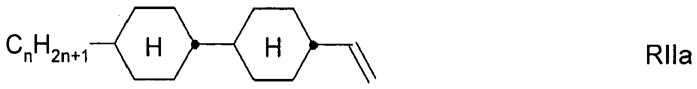 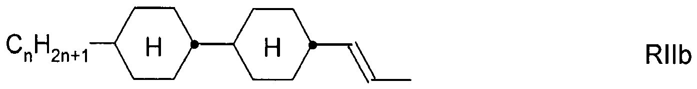 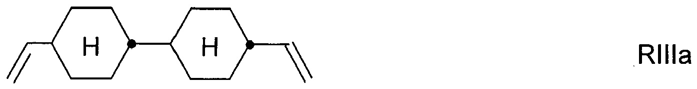 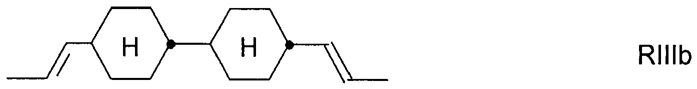 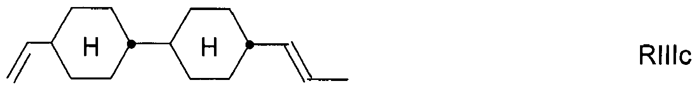 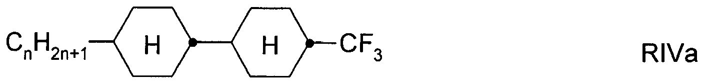 enthält, in denen
n und m jeweils für eine ganze Zahl von 1 bis 9 stehen.

9. Flüssigkristallines Medium nach einem oder mehreren der Ansprüche 1 bis 8, **dadurch gekennzeichnet, dass** es mindestens ein reaktives Mesogen enthält.

10. Verfahren zur Herstellung eines flüssigkristallinen Mediums nach einem oder mehreren der Ansprüche 1 bis 9, **dadurch gekennzeichnet, dass** man mindestens eine Verbindung der Formel I und mindestens eine Verbindung der Formel E mit einer oder mehreren mesogenen Verbindungen und gegebenenfalls mit weiteren Zusätzen und gegebenenfalls mit einem oder mehreren reaktiven Mesogenen mischt.

11. Verwendung des flüssigkristallinen Mediums nach einem oder mehreren der Ansprüche 1 oder 8 für elektrooptische Zwecke.

12. Verwendung des flüssigkristallinen Mediums nach Anspruch 11 für TN-TFT-, IPS-, FFS-, positive VA-, PS-IPS-, PS-FFS-, PS-TN-TFT- oder positive PS-VA-Anwendungen.

13. Elektrooptische Flüssigkristallanzeige enthaltend ein flüssigkristallines Medium nach einem oder mehreren der Ansprüche 1 oder 9.

## Revendications

1. Milieu cristallin liquide **caractérisé en ce qu'**il contient au moins un composé de la formule I 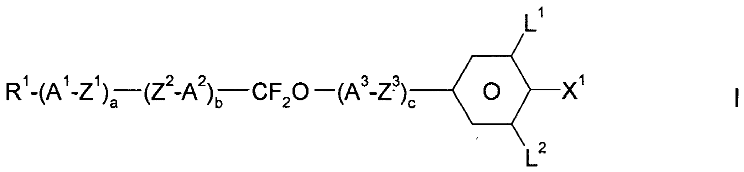 et au moins un composé de la formule E 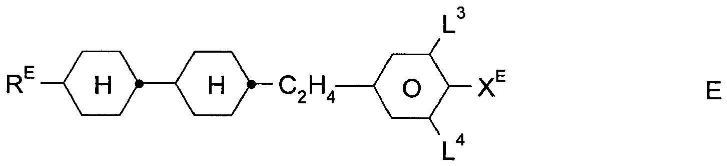 dans lesquelles
R¹ et R^{E} sont chacun, indépendamment l'un de l'autre, H, un radical alkyle ou alcoxy halogéné ou non substitué comportant de 1 à 15 atomes de carbone, où, en outre, un ou plusieurs groupes CH₂ dans ces radicaux peuvent chacun, indépendamment les uns des autres, être remplacés par -C≡C-, -CH=CH-, -O-, -CO-O- ou -O-CO- de telle sorte que des atomes de O ne soient pas liés directement les uns aux autres,
A¹, A² et A³ sont chacun, indépendamment les uns des autres, 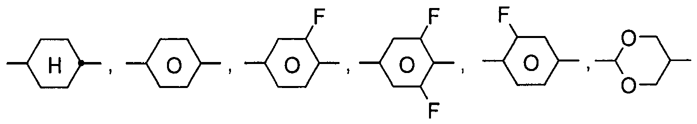 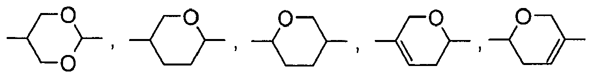 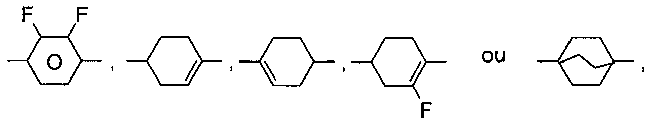
X¹ est F, Cl, CN, NCS, OCN, SF₅, alkyle fluoré avec de 1 à 5 atomes de carbone, alcoxy fluoré avec de 1 à 5 atomes de carbone, alkényle fluoré avec de 2 à 5 atomes de carbone, alkényloxy fluoré avec de 1 à 5 atomes de carbone,
X^{E} est F, Cl, OCF₃, OCHF₂, OCH=CF₂, OCF=CF₂, OCHFCF₃, OCF₂CFHCF₃, CH₃, C₂H₅, n-C₃H₇,
L¹ L², L³ et L⁴ sont chacun, indépendamment les uns des autres, H ou F,
Z¹, Z² et Z³ sont chacun, indépendamment les uns des autres, -CO-O-, -O-CO-, -CF₂O-, -OCF₂-, -CH₂O-, -OCH₂-, -CH₂CH₂-, -(CH₂)₄-, -C₂F₄-, -CH₂CF₂-, -CF₂CH₂-, -CF=CF-, -CH=CH-, -C≡C- ou une liaison simple, et
a, b et c sont chacun, indépendamment les uns des autres, 0, 1, 2 ou 3, où a + b + c est 1, 2, 3 ou 4.

2. Milieu cristallin liquide selon la revendication 1, **caractérisé en ce qu'**il contient au moins un composé choisi parmi le groupe des formules I1 à I79, 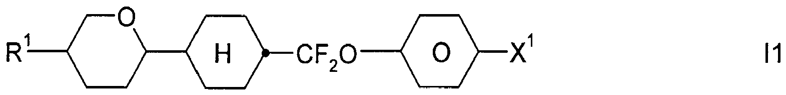 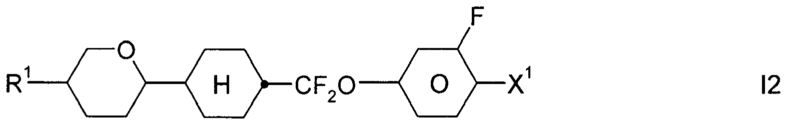 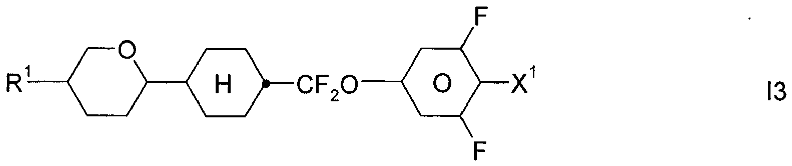 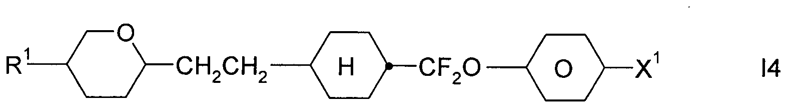 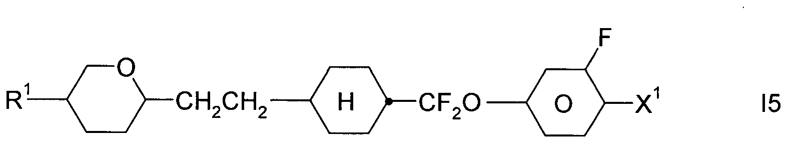 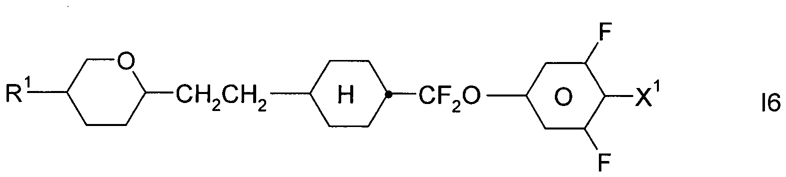 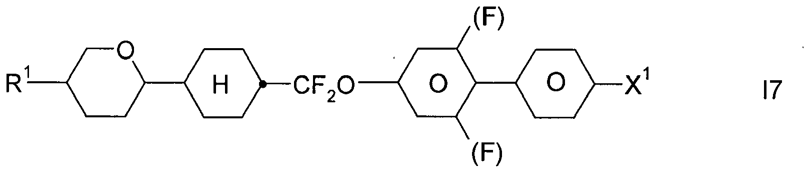 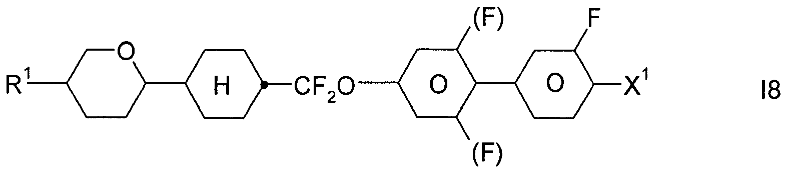 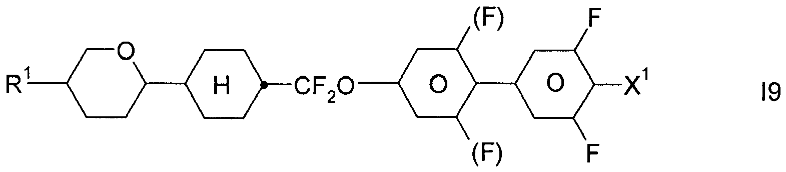 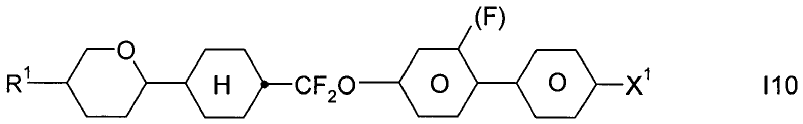 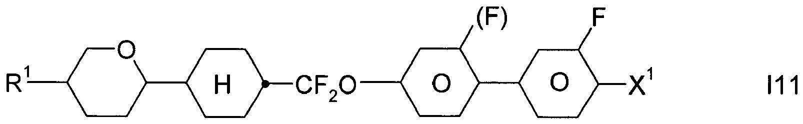 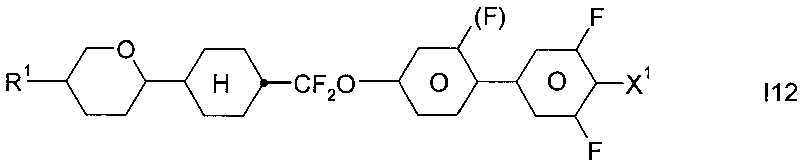 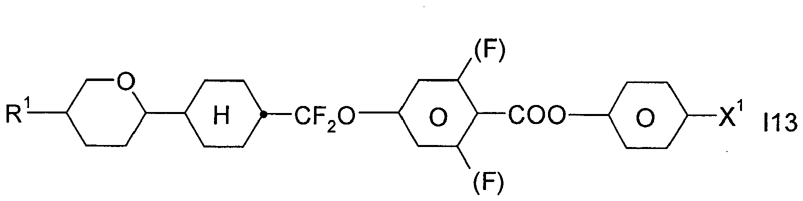 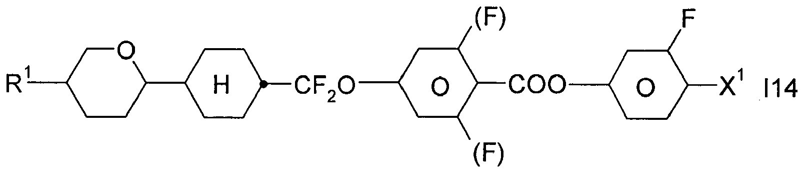 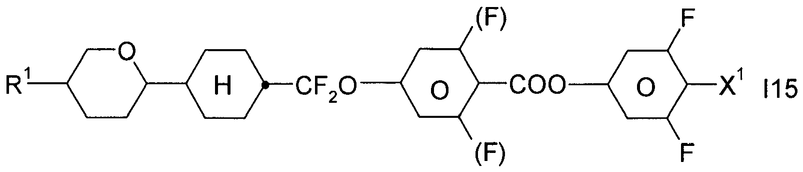 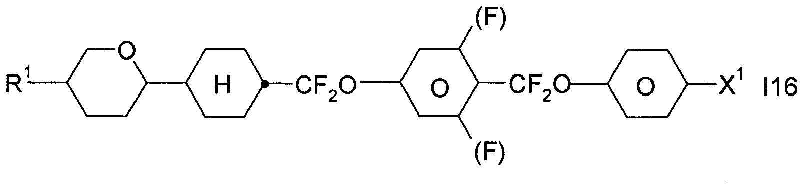 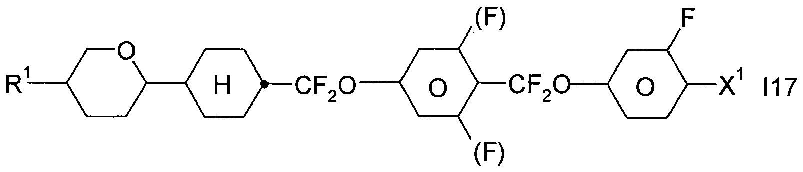 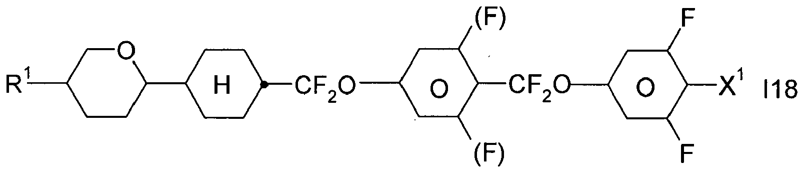 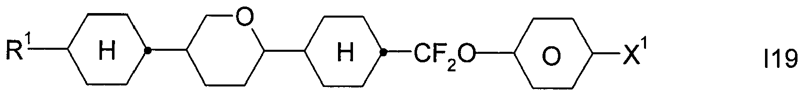 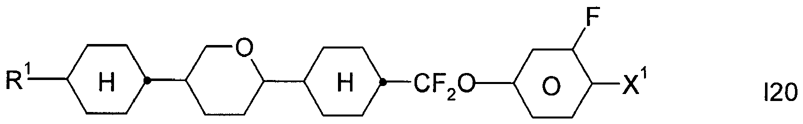 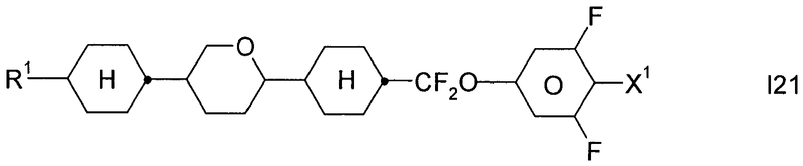 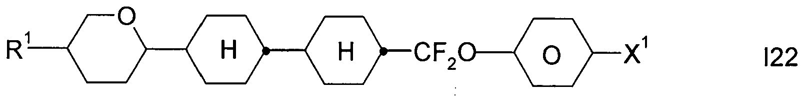 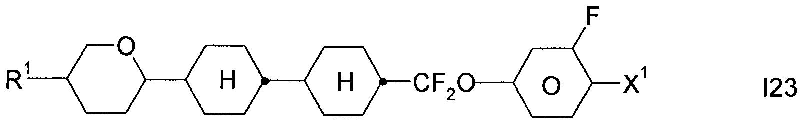 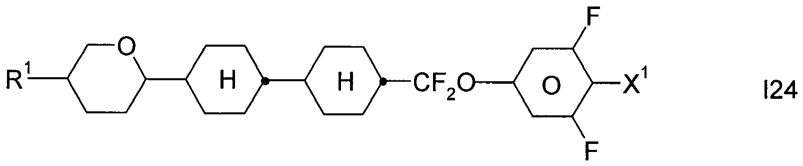 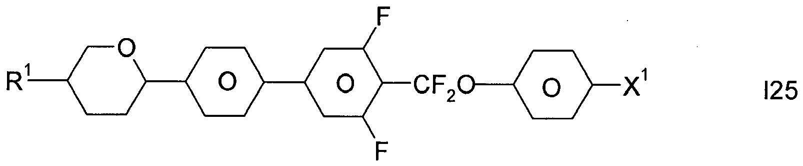 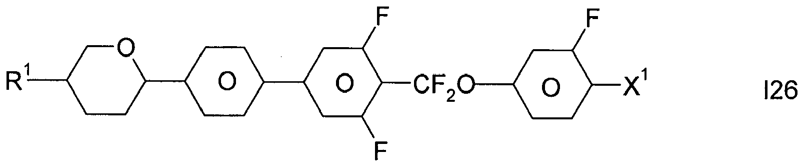 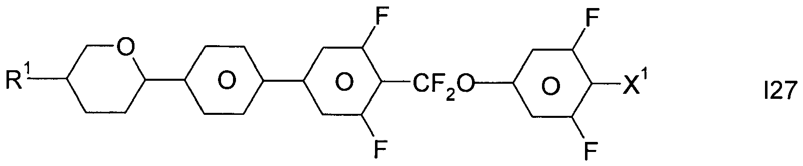 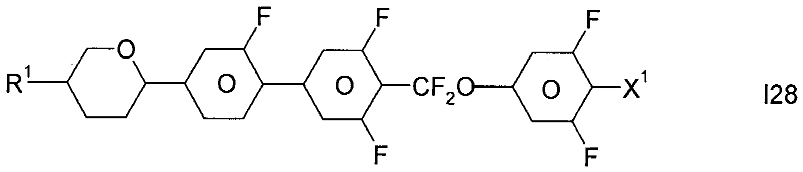 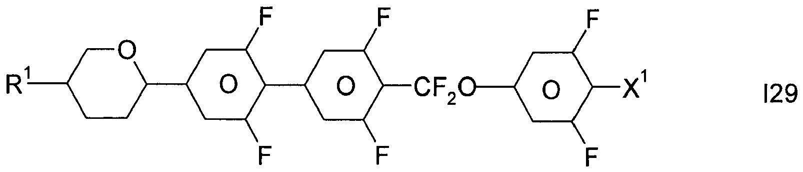 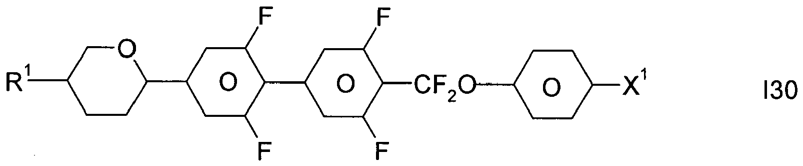 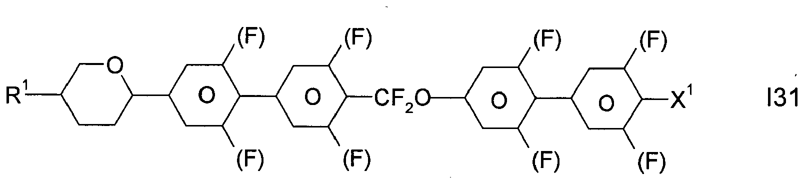 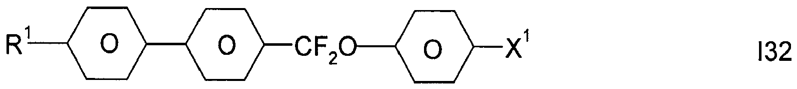 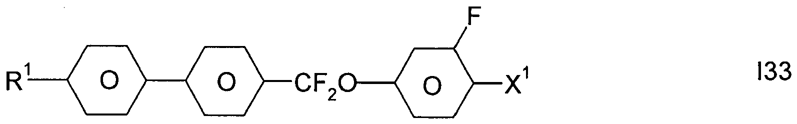 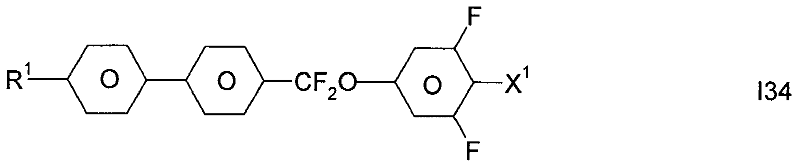 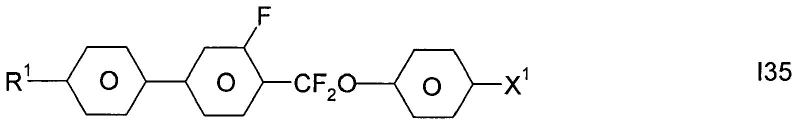 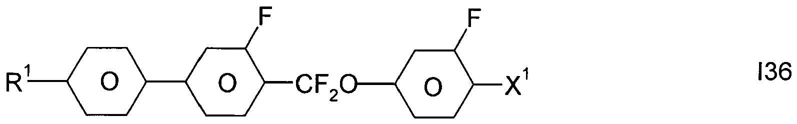 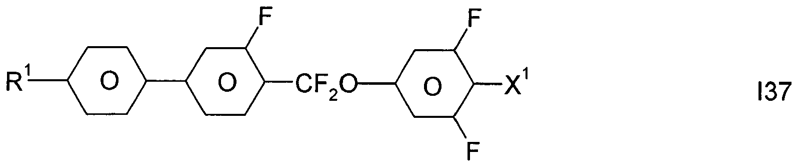 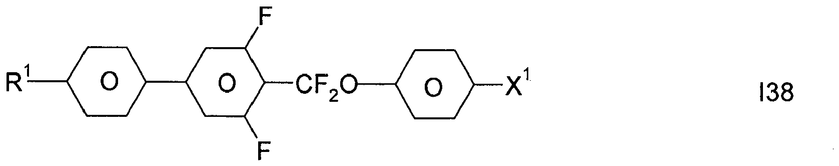 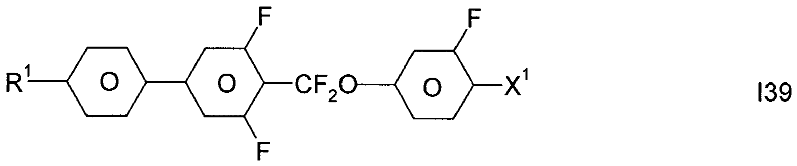 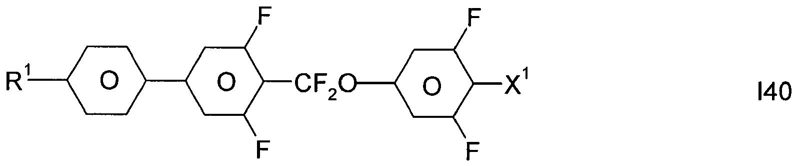 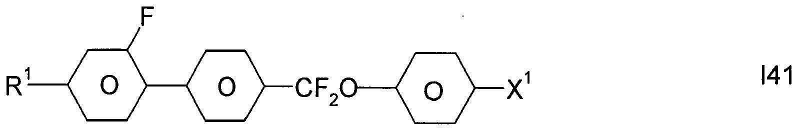 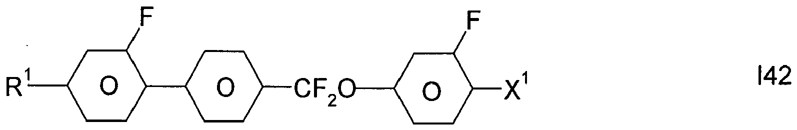 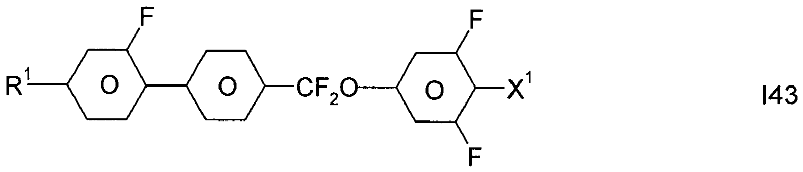 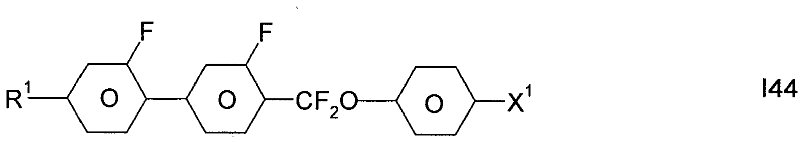 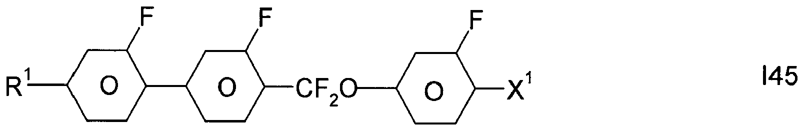 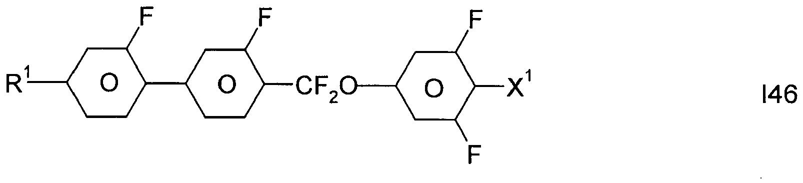 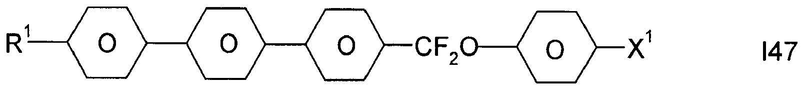 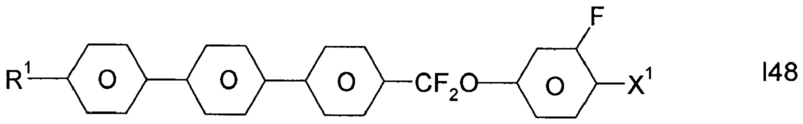 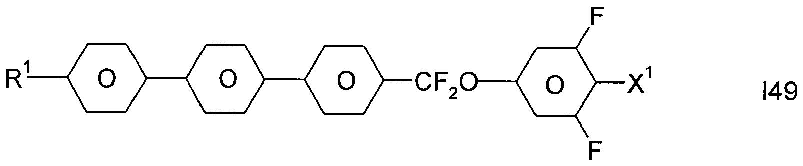 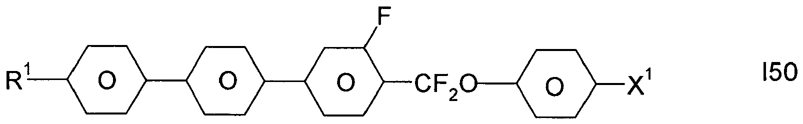 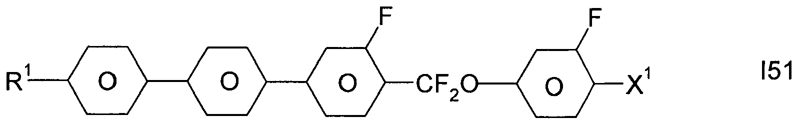 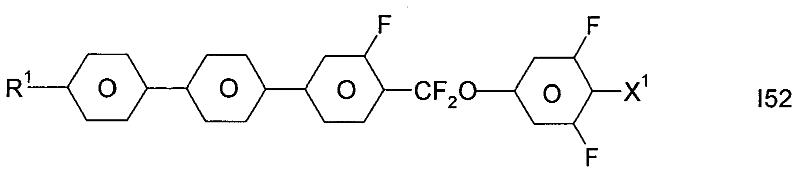 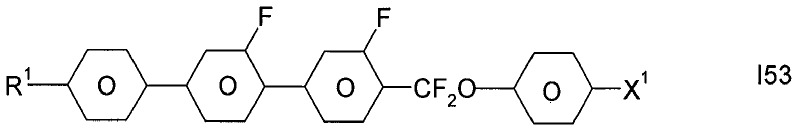 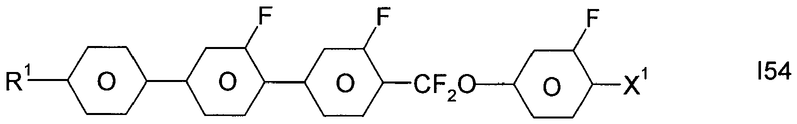 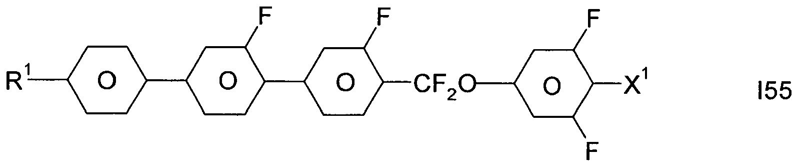 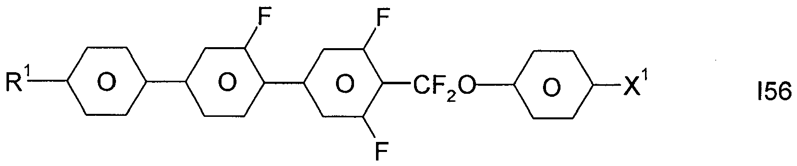 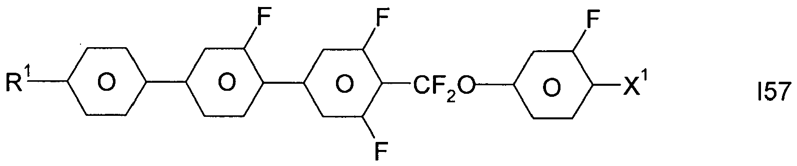 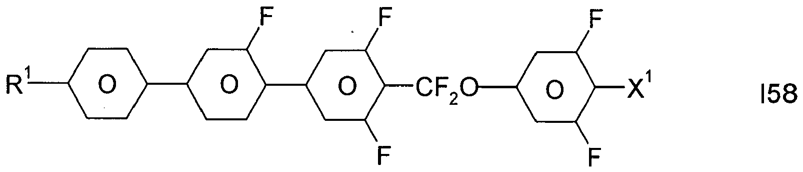 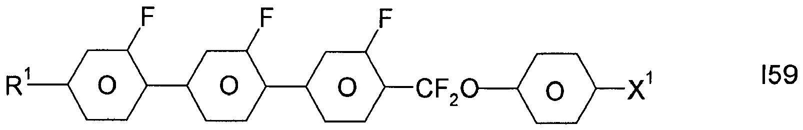 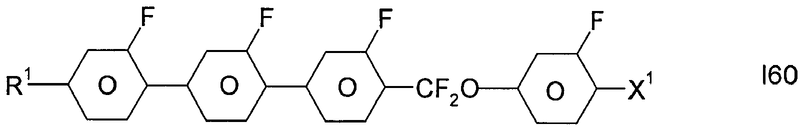 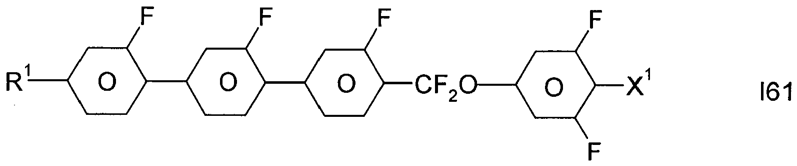 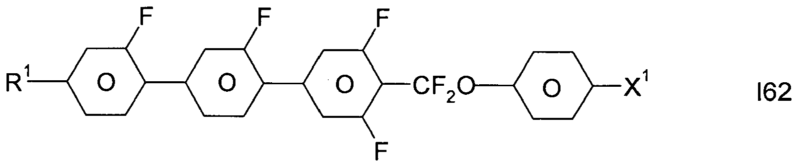 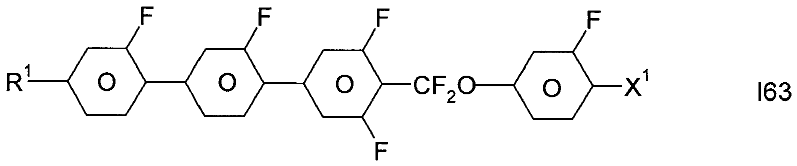 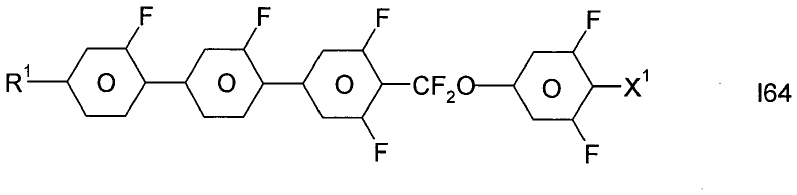 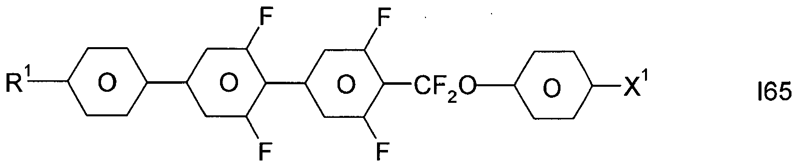 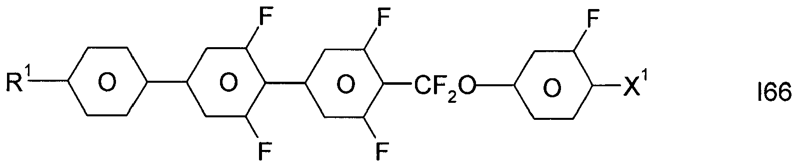 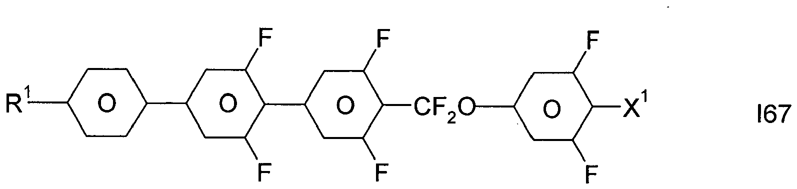 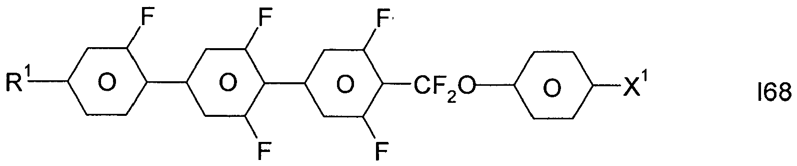 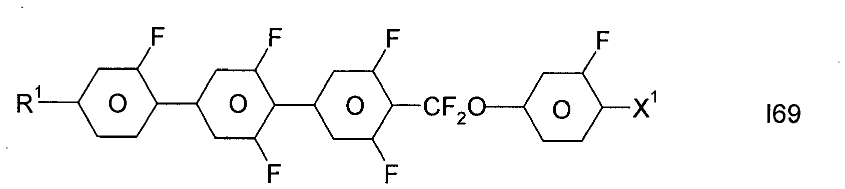 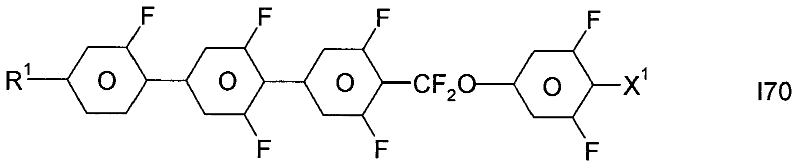 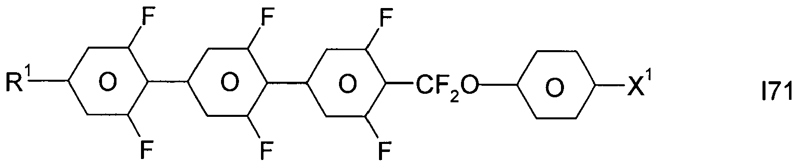 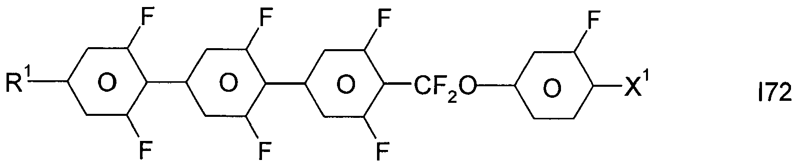 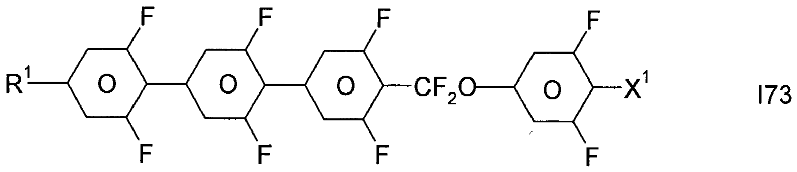 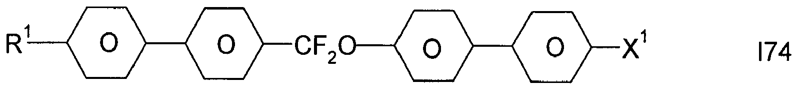 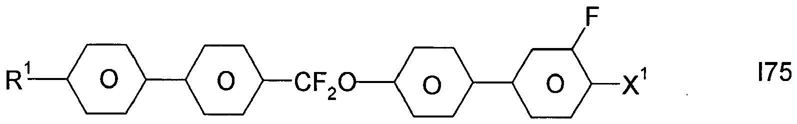 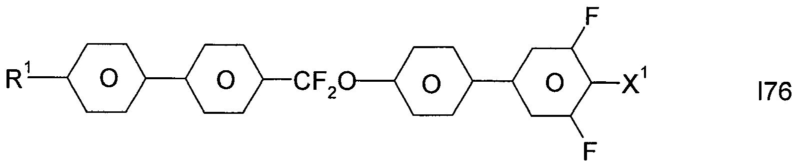 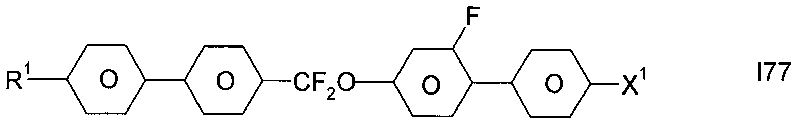 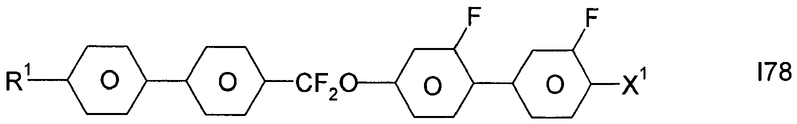 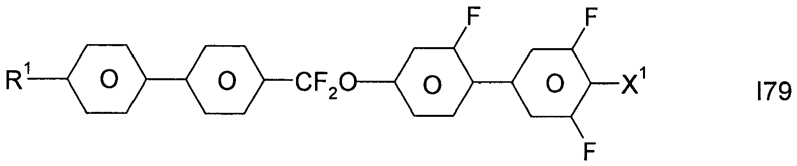 dans lesquelles R¹ et X¹ présentent la signification définie selon la revendication 1 et (F) représente H ou F.

3. Milieu cristallin liquide selon la revendication 1 ou 2, **caractérisé en ce qu'**il contient au moins un composé choisi parmi le groupe des formules E-1 à E-15, 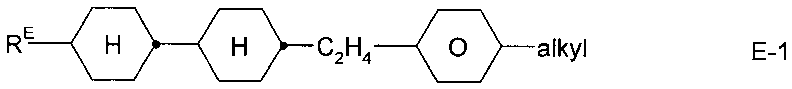 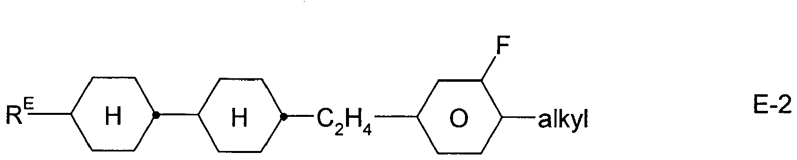 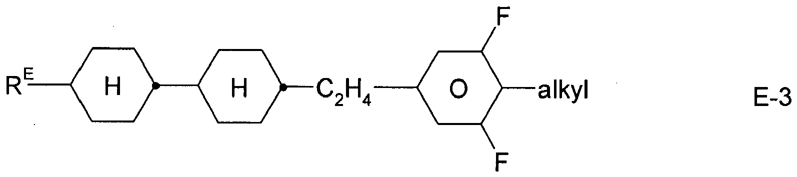 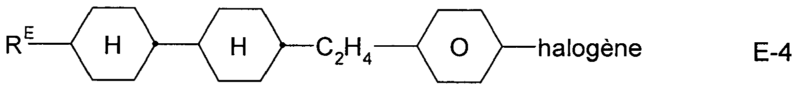 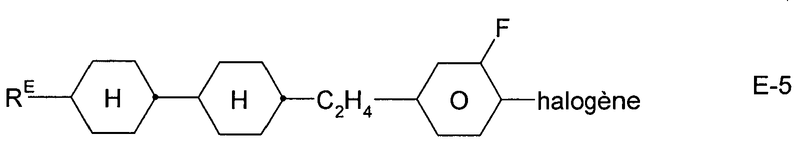 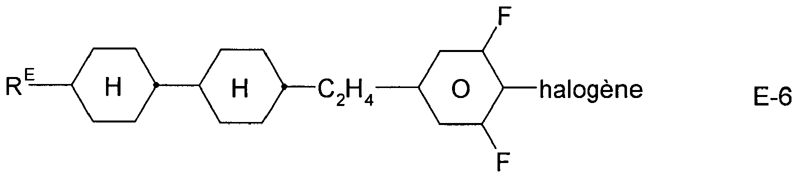 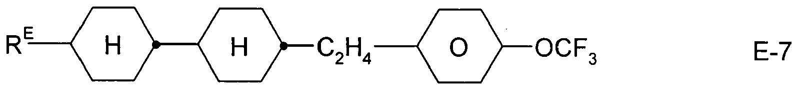 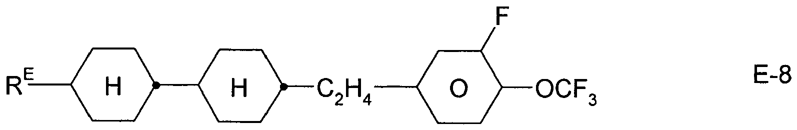 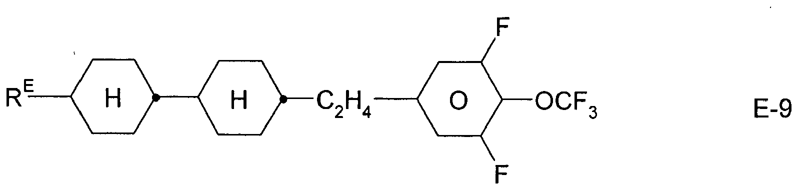 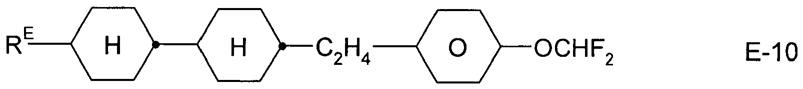 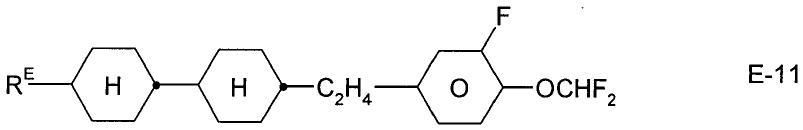 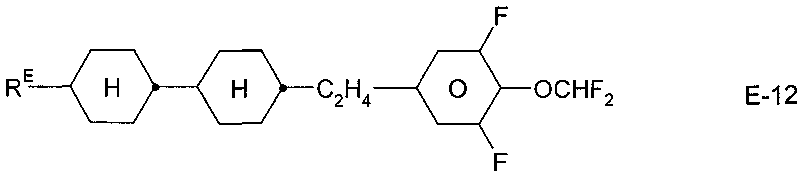 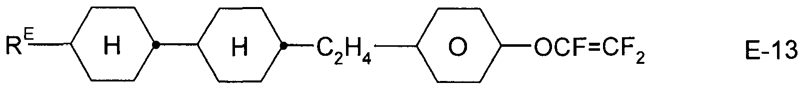 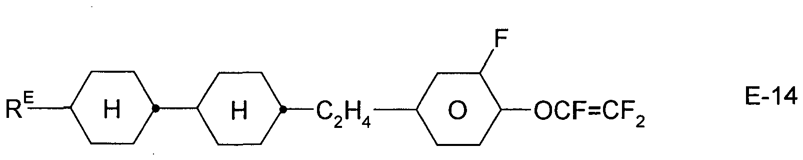 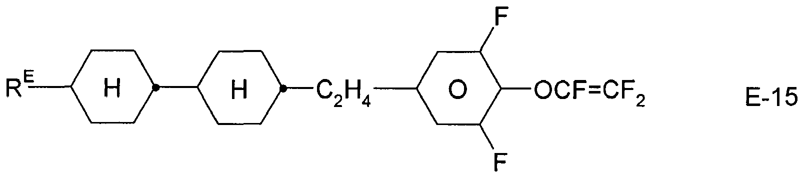 dans lesquelles
R^{E} présente la signification comme défini selon la revendication 1,
halogène est F ou Cl,
alkyl ou alkyl* sont chacun, indépendamment de l'autre, un radical alkyle en chaîne droite ou ramifié comportant 1-9 atomes de carbone, de façon préférable un radical alkyle en chaîne droite,
alkenyl ou alkenyl* sont chacun, indépendamment de l'autre, un radical alkényle en chaîne droite ou ramifié comportant jusqu'à 9 atomes de carbone, de façon préférable un radical alkényle en chaîne droite.

4. Milieu cristallin liquide selon une ou plusieurs des revendications 1 à 3, **caractérisé en ce qu'**il contient au moins deux composés de la formule I.

5. Milieu cristallin liquide selon une ou plusieurs des revendications 1 à 4, **caractérisé en ce qu'**il contient un ou plusieurs composés choisis parmi le groupe des formules générales II à IX, 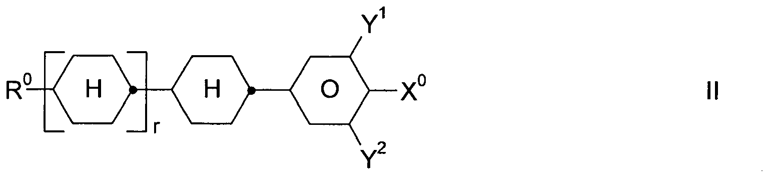 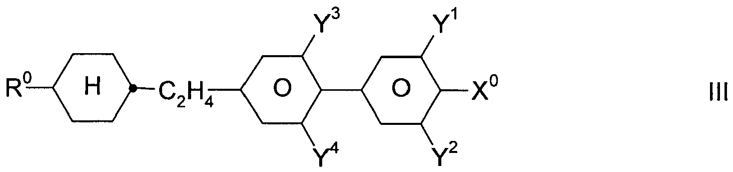 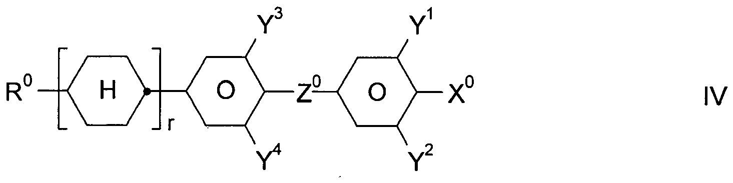 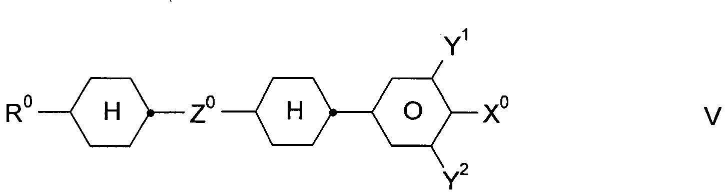 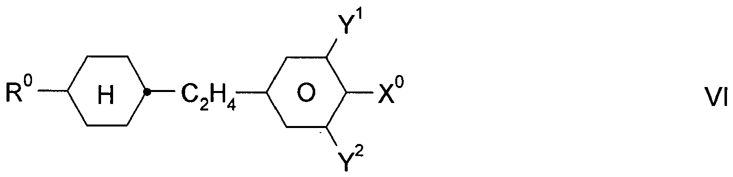 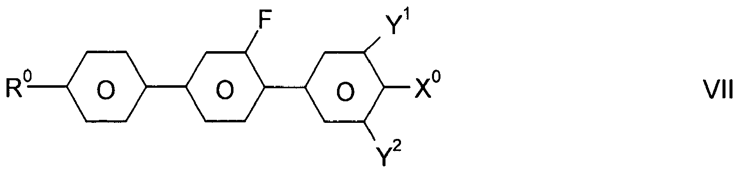 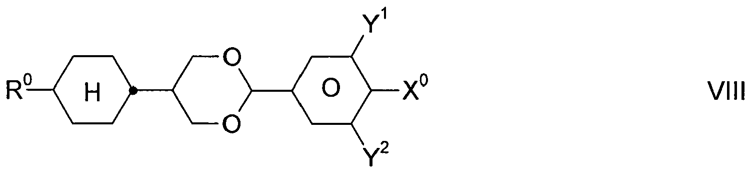 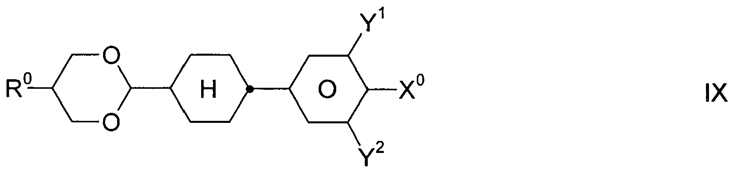 dans lesquelles
R⁰ est n-alkyle, alcoxy, fluoroalkyle, alkényloxy ou alkényle, dont chacun comporte jusqu'à 9 atomes de carbone,
X⁰ est F, Cl, alkyle halogéné comportant jusqu'à 7 atomes de carbone, alkényle halogéné comportant jusqu'à 7 atomes de carbone, alkényloxy halogéné comportant jusqu'à 7 atomes de carbone ou alcoxy halogéné comportant jusqu'à 7 atomes de carbone,
Z⁰ est -CH=CH-, -C₂H₄-, -(CH₂)₄-, -C₂F₄-, -CH₂O-, -OCH₂-, -CF=CF-, -CF₂O-, -OCF₂-, -COO- ou -O-,
Y¹,Y², Y³ et Y⁴ sont chacun, indépendamment les uns des autres, H ou F, et
r est 0 ou 1.

6. Milieu cristallin liquide selon une ou plusieurs des revendications 1 à 5, **caractérisé en ce qu'**il contient au moins un composé choisi parmi le groupe des formules I27a, I40a et I58a 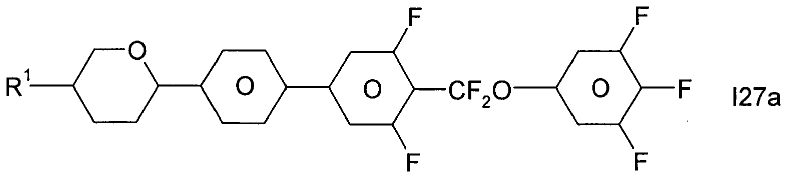 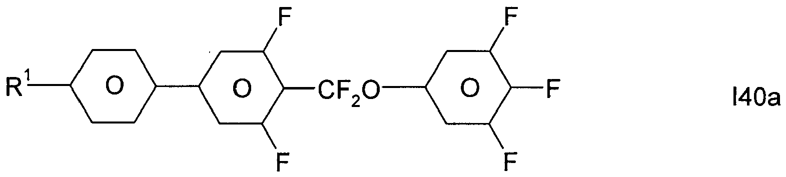 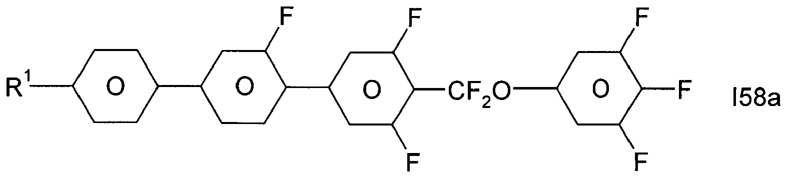 et au moins un composé choisi parmi le groupe des formules E-1a, E-4a, E-5a et E-7a 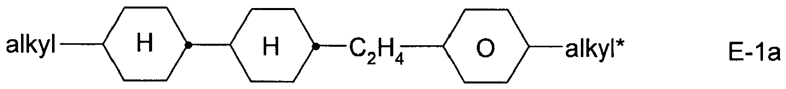 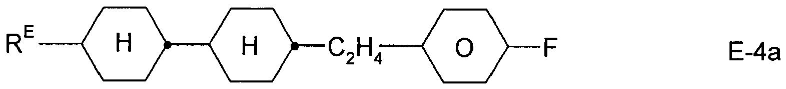 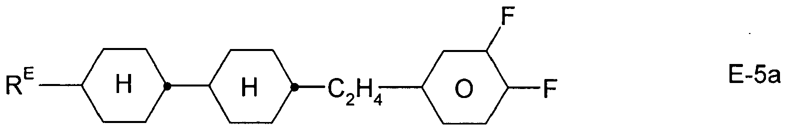 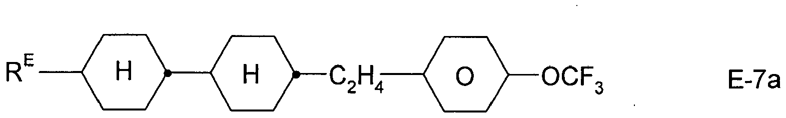 dans lesquelles R^{E} présente la signification donnée selon la revendication 1 et alkyl et alkyl* représentent chacun indépendamment l'un de l'autre un groupe alkyle en chaîne droite avec de 1 à 5 atomes de carbone.

7. Milieu cristallin liquide selon une ou plusieurs des revendications 1 à 6, **caractérisé en ce qu'**il contient au moins un composé de la formule

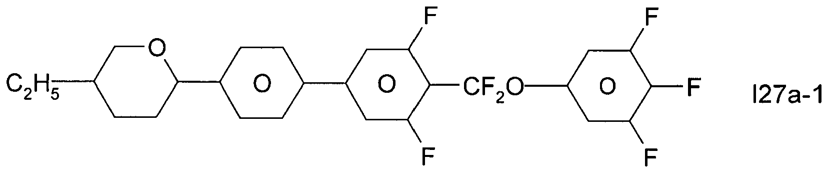

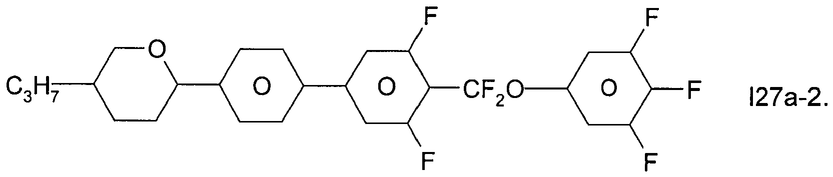

8. Milieu cristallin liquide selon une ou plusieurs des revendications 1 à 7, **caractérisé en ce qu'**il contient un ou plusieurs composés des formules RIa-RIVa 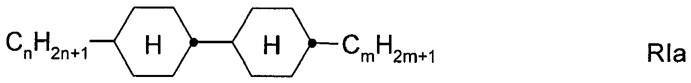 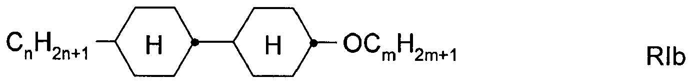 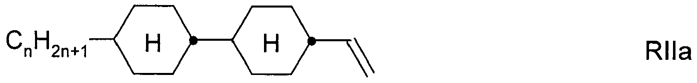 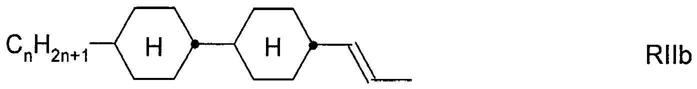 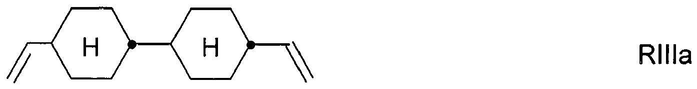 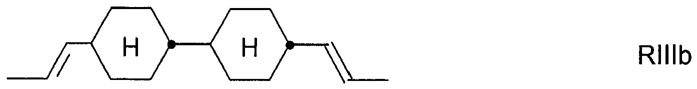 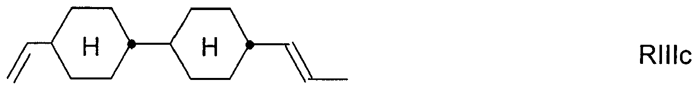 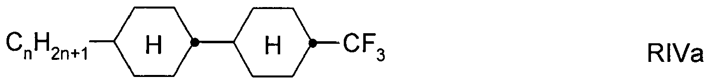 des lesquelles
n et m sont chacun un entier de 1 à 9.

9. Milieu cristallin liquide selon une ou plusieurs des revendications 1 à 8, **caractérisé en ce qu'**il contient au moins un mésogène réactif.

10. Procédé de production d'un milieu cristallin liquide selon une ou plusieurs des revendications 1 à 9, **caractérisé en ce qu'**au moins un composé de la formule I et au moins un composé de la formule E sont mélangés avec un ou plusieurs composés mésogènes et en option avec d'autres additifs et en option avec un ou plusieurs mésogènes réactifs.

11. Utilisation du milieu cristallin liquide selon une ou plusieurs des revendications 1 ou 8 à des fins électro-optiques.

12. Utilisation du milieu cristallin liquide selon la revendication 11 pour des applications TN-TFT-, IPS-, FFS-, VA-positive, PS-IPS-, PS-FFS-, PS-TN-TFT- ou PS-VA-positive.

13. Affichage à cristaux liquides électro-optique contenant un milieu cristallin liquide selon une ou plusieurs des revendications 1 ou 9.
